(19) Europäisches Patentamt
European Patent Office
Office européen des brevets

(11) **EP 4 648 421 A1**

(12) **EUROPEAN PATENT APPLICATION**
published in accordance with Art. 153(4) EPC

(43) Date of publication:
**12.11.2025 Bulletin 2025/46**

(21) Application number: **23914069.2**

(22) Date of filing: **06.01.2023**

(51) International Patent Classification (IPC):
**H04N 19/597** (2014.01)

(52) Cooperative Patent Classification (CPC):
**H04N 19/597**

(86) International application number:
**PCT/CN2023/070940**

(87) International publication number:
**WO 2024/145911 (11.07.2024 Gazette 2024/28)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **GUANGDONG OPPO MOBILE TELECOMMUNICATIONS CORP., LTD.**
**Dongguan, Guangdong 523860 (CN)**

(72) Inventor: **SUN, Zexing**
**Dongguan, Guangdong 523860 (CN)**

(74) Representative: **Mewburn Ellis LLP**
**Aurora Building**
**Counterslip**
**Bristol BS1 6BX (GB)**

(54) **POINT CLOUD ENCODING/DECODING METHOD AND APPARATUS, DEVICE AND STORAGE MEDIUM**

(57) The present application provides a point cloud encoding/decoding method and apparatus, a device and a storage medium. The method comprises: when encoding/decoding plane structure information of a current node, determining N domain nodes of the current node; and encoding/decoding the plane structure information of the current node on the basis of placeholder information of the N domain nodes. That is to say, when predictive encoding/decoding is performed on the plane structure information of the current node, the correlation between the plane stricture information between adjacent nodes is considered, so that the geometric information encoding/decoding efficiency of a point cloud can be effectively improved, the predictive encoding/decoding performance of the plane structure information is further improved, and the encoding/decoding efficiency and performance of the point cloud are improved.

```
┌─────────────────────────────────────────┐
│  Determine N neighboring nodes of a current │ ～ S101
│                 node                      │
└─────────────────────────────────────────┘
                    │
                    ▼
┌─────────────────────────────────────────┐
│  Perform predictive decoding on planar structure │ ～ S102
│  information of the current node based on │
│  occupancy information of the N neighboring │
│                 nodes                     │
└─────────────────────────────────────────┘
```

FIG. 8

**Description**

TECHNICAL FIELD

The present application relates to the field of point cloud technology, and in particular, to point cloud encoding and decoding methods, apparatuses, a device, and a storage medium.

BACKGROUND

The surface of an object is captured by an acquisition device to form point cloud data, which includes hundreds of thousands or even more points. During a video production process, the point cloud data is transferred between a point cloud encoding device and a point cloud decoding device in the form of a point cloud media file. However, such a large number of points poses a challenge for transmission, so the point cloud encoding device needs to compress the point cloud data before transmission.

Point cloud compression is also called point cloud encoding. In a point cloud encoding process, for some relatively flat nodes or nodes with planar characteristics, the encoding efficiency of point cloud geometric information may be further improved by using planar encoding. However, predictive encoding is currently performed on planar structure information of a current node only through some prior reference information, causing the poor performance of the predictive encoding of the planar structure information.

SUMMARY

Embodiments of the present application provide point cloud encoding and decoding methods, apparatuses, a device, and a storage medium, which perform predictive encoding and decoding on planar structure information of a current node based on planar structure information of a neighboring node, improving the performance of the predictive encoding and decoding of the planar structure information of the current node.

In a first aspect, the embodiments of the present application provide a point cloud decoding method, which includes:

determining N neighboring nodes of a current node, where N is a positive integer; and
performing predictive decoding on planar structure information of the current node based on occupancy information of the N neighboring nodes.

In a second aspect, the present application provides a point cloud encoding method, which includes:

determining N neighboring nodes of a current node, where N is a positive integer; and
performing predictive encoding on planar structure information of the current node based on occupancy information of the N neighboring nodes.

In a third aspect, the present application provides a point cloud decoding apparatus, which is used to perform the method in the first aspect or in various implementations thereof. Specifically, the apparatus includes functional units used to perform the method in the first aspect or in various implementations thereof.

In a fourth aspect, the present application provides a point cloud encoding apparatus, which is used to perform the method in the second aspect or in various implementations thereof. Specifically, the apparatus includes functional units used to perform the method in the second aspect or in various implementations thereof.

In a fifth aspect, a point cloud decoder is provided, which includes a processor and a memory. The memory is used to store a computer program, and the processor is used to call the computer program stored in the memory and run the computer program, to perform the method in the first aspect or in various implementations thereof.

In a sixth aspect, a point cloud encoder is provided, which includes a processor and a memory. The memory is used to store a computer program, and the processor is used to call the computer program stored in the memory and run the computer program, to perform the method in the second aspect or in various implementations thereof.

In a seventh aspect, a point cloud encoding and decoding system is provided, which includes a point cloud encoder and a point cloud decoder. The point cloud decoder is used to perform the method in the first aspect or in various implementations thereof, and the point cloud encoder is used to perform the method in the second aspect or in various implementations thereof.

In an eighth aspect, a chip is provided, which is used to implement the method in any one of the first aspect to the second aspect or in various implementations thereof. Specifically, the chip includes: a processor, which is used to call a computer program from a memory and run the computer program, to enable a device equipped with the chip to perform the method in any one of the first aspect to the second aspect or in various implementations thereof.

In a ninth aspect, a computer-readable storage medium is provided, which is used to store a computer program enabling a computer to perform the method in any one of the first aspect to the second aspect or in various implementations thereof.

In a tenth aspect, a computer program product is provided, which includes computer program instructions enabling a computer to perform the method in any one of the first aspect to the second aspect or in various implementations thereof.

In an eleventh aspect, a computer program is provided, and the computer program, when run on a computer, enables the computer to perform the method in any one of the first aspect to the second aspect or in various implementations thereof.

In a twelfth aspect, a bitstream is provided, which is generated based on the method of the second aspect. Optionally, the bitstream includes at least one of a first parameter or a second parameter.

Based on the above technical solution, in encoding and decoding the planar structure information of the current node, the N neighboring nodes of the current node are determined, and the planar structure information of the current node is encoded and decoded based on the occupancy information of the N neighboring nodes. That is, in performing the predictive encoding and decoding on the planar structure information of the current node in the embodiments of the present application, the correlation between the planar structure information of neighboring nodes is taken into account, which may effectively improve the efficiency of the encoding and decoding of the geometric information of the point cloud, thereby improving the performance of the predictive encoding and decoding of the planar structure information, and improve the efficiency and performance of the encoding and decoding of the point cloud.

BRIEF DESCRIPTION OF THE DRAWINGS

FIG. 1A is a schematic diagram of a point cloud;
FIG. 1B is a partially enlarged diagram of the point cloud;
FIG. 2 is a schematic diagram of a point cloud picture at six viewing angles;
FIG. 3 is a schematic block diagram of a point cloud encoding and decoding system involved in embodiments of the present application;
FIG. 4A is a schematic block diagram of a point cloud encoder provided in embodiments of the present application;
FIG. 4B is a schematic block diagram of a point cloud decoder provided in embodiments of the present application;
FIG. 5A is a schematic diagram of a plane;
FIG. 5B is a schematic diagram of a node encoding sequence;
FIG. 5C is a schematic diagram of a planar identification;
FIG. 5D is a schematic diagram of sibling nodes;
FIG. 5E is a schematic diagram of intersection of a laser radar and a node;
FIG. 5F is a schematic diagram of a neighboring node at the same partition depth and the same coordinate;
FIG. 5G is a schematic diagram of neighboring nodes in a case where a node is located at a low planar position of a parent node;
FIG. 5H is a schematic diagram of neighboring nodes in a case where a node is located at a high planar position of a parent node;
FIG. 5I is a schematic diagram of predictive encoding of planar position information of a laser radar point cloud;
FIG. 6 is a schematic diagram of IDCM encoding;
FIGS. 7A to 7C are schematic diagrams of geometric information encoding based on triangle soup;
FIG. 8 is a schematic flowchart of a point cloud decoding method provided in an embodiment of the present application;
FIG. 9 is a schematic diagram of octree partitioning;
FIG. 10 is a schematic diagram of a neighboring node;
FIG. 11 is another schematic diagram of a neighboring node;
FIG. 12 is a schematic diagram of primary information and minor information;
FIG. 13 is a schematic diagram of a minor information partitioning tree;
FIG. 14 is a schematic diagram of partitioning of a minor information partitioning tree;
FIG. 15 is a schematic diagram of partitioning of another minor information partitioning tree;
FIG. 16 is a schematic diagram of partitioning of yet another minor information partitioning tree;
FIG. 17 is a schematic flowchart of a point cloud encoding method provided in an embodiment of the present application;
FIG. 18 is a schematic block diagram of a point cloud decoding apparatus provided in embodiments of the present application;

FIG. 19 is a schematic block diagram of a point cloud encoding apparatus provided in embodiments of the present application;

FIG. 20 is a schematic block diagram of an electronic device provided in embodiments of the present application; and

FIG. 21 is a schematic block diagram of a point cloud encoding and decoding system provided in embodiments of the present application.

DETAILED DESCRIPTION

The present application may be applied to the field of point cloud up-sampling technology, for example, may be applied to the field of point cloud compression technology.

To facilitate understanding of the embodiments of the present application, related concepts involved in the embodiments of the present application are briefly introduced as follows.

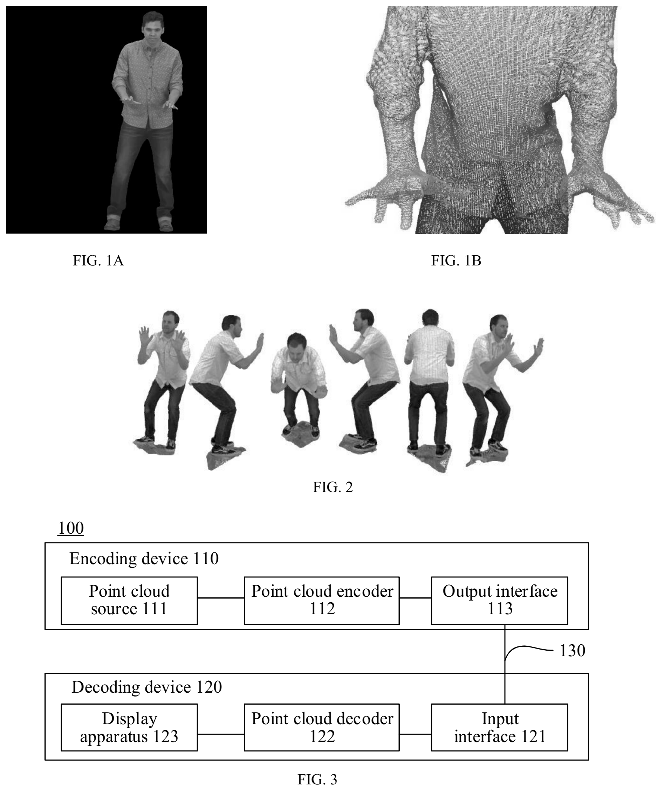

A point cloud refers to a set of discrete points in space that are irregularly distributed and expresses spatial structures and surface attributes of three-dimensional objects or three-dimensional scenes. FIG. 1A is a schematic diagram of a three-dimensional point cloud picture, and FIG. 1B is a partially enlarged diagram of FIG. 1A. It may be seen from FIG. 1A and FIG. 1B that a point cloud surface is composed of densely distributed points.

A two-dimensional picture has information expression at each pixel point with a regular distribution, so there is no need to record position information of the two-dimensional picture additionally; however, distribution of points in a point cloud in three-dimensional space is random and irregular, so it is necessary to record a position of each point in space in order to fully express the entire point cloud. Similar to two-dimensional pictures, each position in a collection process has corresponding attribute information.

Point cloud data is a specific record form of a point cloud. A point in the point cloud may include position information and attribute information of the point. For example, the position information of the point may be three-dimensional coordinate information of the point. The position information of the point may also be called geometric information of the point. For example, the attribute information of the point may include color information, reflectance information, normal vector information, or the like. The color information reflects color of an object, and reflectance information reflects a surface material of an object. The color information may be information in any color space. For example, the color information may be RGB. As another example, the color information may be luma and chroma (YCbCr, YUV) information. For example, Y represents luma, Cb (U) represents blue color difference, Cr (V) represents red, and U and V represent chroma for describing color difference information. For example, for a point cloud obtained according to a laser measurement principle, a point in the point cloud may include three-dimensional coordinate information of the point and laser reflectance intensity of the point. As another example, for a point cloud obtained according to a photogrammetry principle, a point in the point may include three-dimensional coordinate information of the point and color information of the point. As yet another example, for a point cloud obtained by combining the laser measurement principle and the photogrammetry principle, a point in the point cloud may include three-dimensional coordinate information of the point, laser reflectance intensity of the point, and color information of the point. FIG. 2 shows a point cloud picture, where FIG. 2 shows the point cloud picture at six viewing angles. Table 1 shows a point cloud data storage format consisting of a file header information part and a data part.

Table 1

| | | | | | | |
|---|---|---|---|---|---|---|
| 1 | ply | | | | | |
| 2 | format ascii 1.0 | | | | | |
| 3 | element vertex 207242 | | | | | |
| 4 | property float x | | | | | |
| 5 | property float y | | | | | |
| 6 | property float z | | | | | |
| 7 | property uchar red | | | | | |
| 8 | property uchar green | | | | | |
| 9 | property uchar blue | | | | | |
| 10 | end_header | | | | | |
| 11 | 75 | 318 | 0 | 0 | 142 | 0 |
| 12 | 75 | 319 | 0 | 0 | 143 | 0 |
| 13 | 75 | 319 | 1 | 1 | 9 | 9 |
| 14 | 77 | 315 | 0 | 1 | 9 | 9 |

In Table 1, the header information includes data format, data representation type, the total number of points in the point cloud, and content represented by the point cloud. For example, the point cloud in this example has the format of ".ply", and represented by ASCII code, with the total number of 207,242 points. Each point has three-dimensional position information XYZ and three-dimensional color information RGB.

The point cloud may flexibly and conveniently express spatial structures and surface attributes of three-dimensional objects or scenes. Moreover, since the point cloud is obtained by directly sampling real objects, the point cloud can provide a strong sense of reality under the premise of ensuring accuracy, and thus has a wide range of applications, which include virtual reality games, computer-aided design, geographic information systems, automatic navigation systems, digital cultural heritage, free-viewpoint broadcasting, three-dimensional immersive remote presentation, and three-dimensional reconstruction of biological tissues and organs.

Ways to obtain point cloud data may include, but are not limited to, at least one of the following: (1) generated by a computer device, where the computer device may generate the point cloud data based on virtual three-dimensional objects and virtual three-dimensional scenes; (2) obtained by 3-Dimension (3D) laser scanning, where 3D laser scanning may obtain point cloud data of three-dimensional objects or three-dimensional scenes of static real world, and millions of point cloud data may be obtained per second; (3) obtained by 3D photogrammetry, where visual scenes of real world are collected by 3D photography device (i.e., a group of cameras or a camera device with multiple lenses and multiple sensors), to obtain point cloud data of the visual scenes in real world, and point cloud data of three-dimensional objects or three-dimensional scenes of dynamic real world may be obtained by 3D photography; and (4) point cloud data of biological tissues and organs obtained by medical devices, where in the medical field, the point cloud data of biological tissues and organs may be obtained by the medical devices such as magnetic resonance imaging (MRI), computed tomography (CT), and electromagnetic positioning systems.

Point clouds may be classified into dense point clouds and sparse point clouds according to a way they are obtained.

The point clouds are classified into the following types according to a time series of the data:

a first type of static point clouds: that is, an object being stationary, and a device that obtains the point cloud being also stationary;
a second type of dynamic point clouds: an object being moving, but a device that obtains the point cloud being stationary; and
a third type of dynamically obtained point clouds: a device that obtains the point cloud being moving.

The point clouds may be classified into two types according to uses of a point cloud:

type 1: point clouds perceived by machine, which may be used in scenes such as autonomous navigation systems, real time inspection systems, geographic information systems, visual sorting robots, and rescue and disaster relief robots; and

type 2: point clouds perceived by human eyes, which may be used in point cloud application scenes such as the digital cultural heritage, free-viewpoint broadcasting, three-dimensional immersive communication, and three-dimensional immersive interaction.

With the above point cloud obtaining technology, the cost and time period of obtaining the point cloud data are reduced and the accuracy of the data is improved. Change in the way of obtaining the point cloud data makes it possible to obtain huge amounts of point cloud data. However, with growth of application requirements, processing of massive 3D point cloud data encounters bottlenecks caused by storage space and transmission bandwidth limitations.

Taking a point cloud video with a frame rate of 30 fps (frames per second) as an example, the number of points in each frame of the point cloud is 700,000, and each point has coordinate information xyz (float) and color information RGB (uchar), so data volume of a point cloud video for 10s is approximately $0.7 \text{ million} \times (4 \text{ Byte} \times 3 + 1 \text{ Byte} \times 3) \times 30 \text{ fps} \times 10s = 3.15 \text{ GB}$, while for a $1,280 \times 720$ two-dimensional video with a YUV sampling format of 4:2:0 and the frame rate of 24 fps, data volume for 10s is approximately $1,280 \times 720 \times 12 \text{ bit} \times 24 \text{ frames} \times 10s \approx 0.33 \text{ GB}$, and data volume for a 10s two-viewing angle 3D video is approximately $0.33 \times 2 = 0.66 \text{ GB}$. It may be seen that the data volume of the point cloud video far exceeds that of 2D video and 3D video of the same length. Therefore, in order to better fulfill data management, save server storage space, and reduce transmission traffic and transmission time between a server and a client, point cloud compression has become a key issue in promoting the development of point cloud industry.

Related knowledge of point cloud encoding and decoding will be introduced below.

FIG. 3 is a schematic block diagram of a point cloud encoding and decoding system involved in the embodiments of the present application. It will be noted that FIG. 3 is only an example, and the point cloud encoding and decoding system in the embodiments of the present application includes but is not limited to that shown in FIG. 3. As shown in FIG. 3, the point cloud encoding and decoding system 100 includes an encoding device 110 and a decoding device 120. The encoding device is used to encode (which may be understood as compressing) on point cloud data to generate a bitstream, and transmit the bitstream to the decoding device. The decoding device decodes the bitstream generated by the encoding device, to obtain decoded point cloud data.

In the embodiments of the present application, the encoding device 110 may be understood as a device with a point cloud encoding function, and the decoding device 120 may be understood as a device with a point cloud decoding function. That is, the embodiments of the present application include a wider range of apparatuses for the encoding device 110 and the decoding device 120, such as a smartphone, a desktop computer, a mobile computing device, a notebook (e.g., a laptop) computer, a pad computer, a set-top box, a television, a camera, a display apparatus, a digital media player, a point cloud game console, and a vehicle-mounted computer.

In some embodiments, the encoding device 110 may transmit the encoded point cloud data (e.g., the bitstream) to the decoding device 120 via a channel 130. The channel 130 may include one or more media and/or apparatuses capable of transmitting the encoded point cloud data from the encoding device 110 to the decoding device 120.

In an instance, the channel 130 includes one or more communication media that enable the encoding device 110 to transmit encoded point cloud data directly to the decoding device 120 in real time. In this instance, the encoding device 110 may modulate the encoded point cloud data according to a communication standard and transmit the modulated point cloud data to the decoding device 120. The communication media include wireless communication media, such as a radio frequency spectrum. Optionally, the communication media may further include wired communication media, such as one or more physical transmission lines.

In another instance, the channel 130 includes a storage medium, and the storage medium may store the point cloud data encoded by the encoding device 110. The storage media include a variety of locally accessible data storage media, such as optical disks, DVDs, and flash memories. In this instance, the decoding device 120 may obtain the encoded point cloud data from the storage medium.

In yet another instance, the channel 130 may include a storage server, and the storage server may store the point cloud data encoded by the encoding device 110. In this instance, the decoding device 120 may download the stored encoded point cloud data from the storage server. Optionally, the storage server may store the encoded point cloud data and may transmit the encoded point cloud data to the decoding device 120, such as a web server (e.g., for a website), a file transfer protocol (FTP) server, or the like.

In some embodiments, the encoding device 110 includes a point cloud encoder 112 and an output interface 113. The output interface 113 may include a modulator/demodulator (modem) and/or a transmitter.

In some embodiments, in addition to the point cloud encoder 112 and the input interface 113, the encoding device 110 may further include a point cloud source 111.

The point cloud source 111 may include at least one of a point cloud collection apparatus (e.g., a scanner), a point cloud archive, a point cloud input interface, or a computer graphics system, where the point cloud input interface is used to receive point cloud data from a point cloud content provider, and the computer graphics system is used to generate point cloud data.

The point cloud encoder 112 encodes the point cloud data from the point cloud source 111 to generate a bitstream. The point cloud encoder 112 transmits the encoded point cloud data directly to the decoding device 120 via the output interface 113. The encoded point cloud data may further be stored in the storage medium or the storage server for subsequent reading by the decoding device 120.

In some embodiments, the decoding device 120 includes an input interface 121 and a point cloud decoder 122.

In some embodiments, in addition to the input interface 121 and the point cloud decoder 122, the decoding device 120 may further include a display apparatus 123.

The input interface 121 includes a receiver and/or a modem. The input interface 121 may receive encoded point cloud data via the channel 130.

The point cloud decoder 122 is used to decode the encoded point cloud data to obtain decoded point cloud data, and transmit the decoded point cloud data to the display apparatus 123.

The display apparatus 123 displays the decoded point cloud data. The display apparatus 123 may be integrated with the decoding device 120 or external to the decoding device 120. Various display apparatuses may serve as the display apparatus 123, such as a liquid crystal display (LCD), a plasma display, an organic light-emitting diode (OLED) display, and other types of display apparatuses.

In addition, FIG. 3 is only an instance, and the technical solution of the embodiments of the present application is not limited to FIG. 3. For example, the technology of the present application may further be applied to unilateral point cloud encoding or unilateral point cloud decoding.

The current point cloud encoder may adopt two point cloud compression encoding technology routes proposed by the Moving Picture Experts Group (MPEG) of international standards organization, namely video-based point cloud compression (VPCC) and geometry-based point cloud compression (GPCC). The VPCC projects three-dimensional point clouds into two-dimensional and encodes the projected two-dimensional picture by using an existing two-dimensional coding tool. GPCC partitions the point cloud into multiple units step by step by using a hierarchical structure, and encodes the entire point cloud by encoding and recording the partition process.

The point cloud encoder and the point cloud decoder applicable to the embodiments of the present application will be described below by taking a GPCC encoding and decoding architecture as an example.

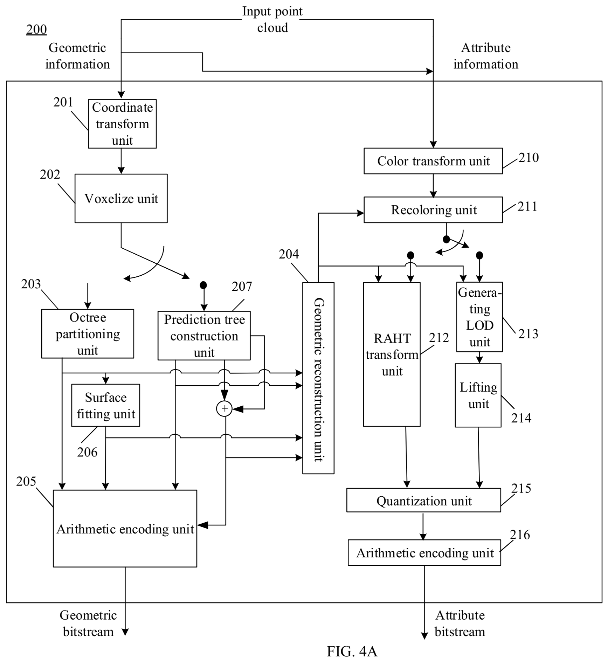

FIG. 4A is a schematic block diagram of a point cloud encoder provided in the embodiments of the present application.

As can be seen from the above, a point in the point cloud may include position information of the point and attribute information of the point. Therefore, encoding of the point in the point cloud mainly includes position encoding and attribute encoding. In some examples, the position information of the point in the point cloud is also called geometric information, and the corresponding position encoding of the point in the point cloud may also be called geometric encoding.

In a GPCC encoding architecture, the geometric information of the point cloud and the corresponding attribute information are encoded separately.

As shown in FIG. 4A, current geometric encoding and decoding of GPCC may be classified into octree-based geometric encoding and decoding and prediction tree-based geometric encoding and decoding.

A process of the position encoding includes: preprocessing the points in the point cloud, such as coordinate transformation, quantization, and removal of duplicate points; and then performing geometric encoding on the preprocessed point cloud, such as constructing an octree or a prediction tree, and performing geometric encoding on the constructed octree or the prediction tree to form a geometric bitstream. At the same time, based on position information output by the constructed octree or the prediction tree, position information of each point in the point cloud data is reconstructed to obtain a reconstructed value of the position information of each point.

A process of the attribute encoding includes: selecting, by giving reconstruction information of the position information and an original value of the attribute information of the input point cloud, one of three prediction modes to perform point cloud prediction; and then quantizing the predicted result, and performing arithmetic encoding to form an attribute bitstream.

As shown in FIG. 4A, the position encoding may be implemented by the following units:

a coordinate transform (transform coordinates) unit 201, a voxelize unit 202, an octree partitioning (analyze octree) unit 203, a geometry reconstruction (reconstruct geometry) unit 204, an arithmetic encoding (arithmetic encode) unit 205, a surface fitting (analyze surface approximation) unit 206, and a prediction tree construction unit 207.

The coordinate transform unit 201 may be used to transform world coordinates of a point in the point cloud into relative coordinates. For example, minimum values of x, y and z coordinate axes are subtracted from geometric coordinates of the point respectively, which is equivalent to a de-direct current operation, to implement transformation of the coordinates of the point in the point cloud from the world coordinates to the relative coordinates.

The voxelize unit 202 is also called a quantize and remove duplicate points (quantize and remove points) unit, the number of coordinates may be reduced through quantization; after quantization, originally different points may be assigned the same coordinates, based on which, duplicate points may be deleted through a deduplication operation; for example, multiple point clouds with the same quantized position and different pieces of attribute information may be merged into one point cloud by attribute transformation. In some embodiments of the present application, the voxelize unit 202 is an optional unit module.

The octree partitioning unit 203 may encode position information of a quantized point by using an octree encoding manner. For example, the point cloud is partitioned in the form of an octree, whereby positions of the points may correspond one-to-one with positions of the octree. Geometric encoding is performed by counting the positions of nodes in the octree and marking a flag of the positions as 1.

In some embodiments, in a process of geometric information encoding based on triangle soup (trisoup), the point cloud is also partitioned into an octree through the octree partitioning unit 203. However, different from the octree-based geometric information encoding, the trisoup does not need to partition the point cloud into unit cubes with side lengths of 1 $\times$ 1 $\times$ 1 step by step, but stops partitioning once there exist blocks (sub-blocks) with a side length of W. Based on a surface formed in each block by distribution of the point cloud, at most twelve vertices (intersections) generated by this surface and twelve sides of the block are obtained, surface fitting is performed on the vertices by the surface fitting unit 206, and geometric encoding is performed on the fitted vertices.

The prediction tree construction unit 207 may encode position information of a quantized point by using a prediction tree encoding manner. For example, the point cloud is partitioned in the form of a prediction tree, whereby positions of the points may correspond one-to-one with positions of nodes in the prediction tree. By counting the positions of the nodes in the prediction tree, geometric position information of the node is predicted by selecting different prediction modes to obtain a prediction residual, and the geometric prediction residual is quantized by using a quantization parameter. Finally, the prediction residual of the position information of the node of the prediction tree, a structure of the prediction tree, and the quantization parameter are encoded through continuous iteration, to generate a binary bitstream.

The geometric reconstruction unit 204 may perform position reconstruction based on the position information output by the octree partitioning unit 203 or the vertices fitted by the surface fitting unit 206, to obtain a reconstructed value of the position information of each point in the point cloud data. Alternatively, position reconstruction is performed based on the position information output by the prediction tree construction unit 207, to obtain a reconstructed value of the position information of each point in the point cloud data.

The arithmetic encoding unit 205 may perform, by using entropy coding, arithmetic encoding on the position information output by the octree partitioning unit 203 or the vertices fitted by the surface fitting unit 206 or the geometric prediction residual value output by the prediction tree construction unit 207, to generate a geometric bitstream, where the geometric bitstream may also be referred to as a geometry bitstream.

The attribute encoding may be implemented by the following units:

a color transform (transform colors) unit 210, a recoloring (transfer attributes) unit 211, a region adaptive hierarchical transform (RAHT) unit 212, a generating LOD (generate LOD) unit 213, a lifting (lifting transform) unit 214, a quantization coefficient (quantize coefficients) unit 215, and an arithmetic encoding unit 216.

It will be noted that a point cloud encoder 200 may include more, fewer, or different functional components than those shown in FIG. 4A.

The color transform unit 210 may be used to transform an RGB color space of the points in the point cloud into a YCbCr format or other formats.

The recoloring unit 211 performs recoloring process on color information by using reconstructed geometric information to enable uncoded attribute information to correspond to the reconstructed geometric information.

After an original value of the attribute information of the point is obtained by the transformation of the recoloring unit 211, any transformation unit may be selected to transform the point in the point cloud. The transform unit may include: the RAHT transform unit 212 and the lifting (lifting transform) unit 214, where improvement variation depends on generated level of detail (LOD).

Any one of the RAHT transformation and lifting transformation may be understood as being used to predict attribute information of a point in the point cloud to obtain a predicted value of the attribute information of the point, so as to obtain a residual value of the attribute information of the point based on the predicted value of the attribute information of the point. For example, the residual value of the attribute information of the point may be obtained by subtracting the predicted value of the attribute information of the point from the original value of the attribute information of the point.

In an embodiment of the present application, a process of generating LOD by the LOD generating unit includes: obtaining Euclidean distances between points according to position information of the points in the point cloud; and partitioning the points into different detail expression layers according to the Euclidean distances. In an embodiment, after the Euclidean distances are sorted, Euclidean distances in different ranges may be partitioned into different detail expression layers. For example, one point may be randomly selected as a first detail expression layer. Next, Euclidean distances between the remaining points and this point are calculated, and points whose Euclidean distances meet a first threshold requirement are classified as a second detail expression layer. A centroid of the points in the second detail expression layer is obtained, Euclidean distances between the points other than the first and second detail expression layers and the centroid are calculated, and points whose Euclidean distances meet the second threshold are classified as a third detail expression layer. And so forth, all points are classified into the detail expression layers. By adjusting a threshold of Euclidean distance, it is possible to make the number of points in each LOD layer incremental. It should be understood that an LOD partitioning manner may be done in other ways, which is not limited in the present application.

It will be noted that the point cloud may be directly partitioned into one or more detail expression layers, or the point cloud may be first partitioned into multiple point cloud slices, and then each point cloud slice may be partitioned into one or more LOD layers.

For example, the point cloud may be partitioned into multiple point cloud slices, and the number of points in each point cloud slice may be between 550 thousand and 1.1 million. Each point cloud slice may be considered as a separate point cloud. Each point cloud slice may be partitioned into multiple detail expression layers, with each detail expression layer including multiple points. In an embodiment, the detail expression layers may be partitioned according to the Euclidean distances between the points.

The quantization unit 215 may be used to quantize the residual value of the attribute information of the point. For example, in a case where the quantization unit 215 is connected to the RAHT transform unit 212, the quantization unit 215 may be used to quantize the residual value of the attribute information of the point output by the RAHT transform unit 212.

The arithmetic encoding unit 216 may perform, by using zero run length coding, entropy coding on the residual value of the attribute information of the point to obtain an attribute bitstream, where the attribute bitstream may be bitstream information.

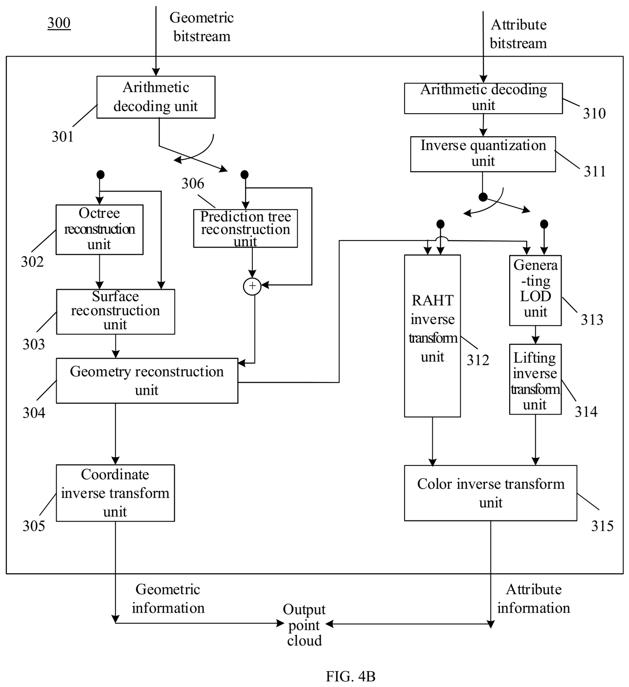

FIG. 4B is a schematic block diagram of a point cloud decoder provided in the embodiments of the present application.

As shown in FIG. 4B, a decoder 300 may obtain a point cloud bitstream from an encoding device, and obtain position information and attribute information of a point in the point cloud by parsing the bitstream. Decoding of the point cloud includes position decoding and attribute decoding.

A process of the position decoding includes: performing arithmetic decoding on a geometric bitstream; performing merge after constructing an octree, and reconstructing the position information of the point to obtain reconstructed information of the position information of the point; and performing coordinate transformation on the reconstructed information of the position information of the point to obtain the position information of the point. Position information of a point may also be called geometric information of the point.

A process of the attribute decoding includes: obtaining a residual value of the attribute information of the point in the point cloud by parsing an attribute bitstream; obtaining a residual value of attribute information of the point after dequantization by dequantizing the residual value of the attribute information of the point; selecting, based on the reconstruction information of the position information of the point obtained in the process of the position decoding, one of the RAHT inverse transform and the lifting inverse transform to perform point cloud prediction to obtain a predicted value, and adding the predicted value to the residual value to obtain a reconstructed value of the attribute information of the point; and performing color space inverse transformation on the reconstructed value of the attribute information of the point to obtain a decoded point cloud.

As shown in FIG. 4B, the position decoding may be implemented through the following units: an arithmetic decoding unit 301, an octree reconstruction (synthesize octree) unit 302, a surface reconstruction (synthesize surface approximation) unit 303, a geometry reconstruction (reconstruct geometry) unit 304, a coordinate inverse transform (inverse transform coordinates) unit 305, and a prediction tree reconstruction unit 306.

The attribute encoding may be implemented through the following units: an arithmetic decoding unit 310, an inverse quantization (inverse quantize) unit 311, an RAHT inverse transform unit 312, a generating LOD (generate LOD) unit 313, a lifting inverse transform(inverse lifting) unit 314, and a color inverse transform (inverse transform colors) unit 315.

It will be noted that decompression is an inverse process of compression. Similarly, functions of various units in the decoder 300 may be referred to the functions of the corresponding units in the encoder 200. In addition, the point cloud decoder 300 may include more, fewer, or different functional components than those shown in FIG. 4B.

For example, the decoder 300 may partition the point cloud into multiple LODs according to Euclidean distances between points in the point cloud; then attribute information of the points in the LODs may be decoded in turn; for example, the number of zeros (zero_cnt) in the zero-run encoding technique may be calculated to decode a residual based on zero_cnt; then the decoding architecture 200 may perform inverse quantization based on the decoded residual value, and obtain a reconstructed value of the point cloud based on the addition of a dequantized residual value and a predicted value of a current point, until all point clouds are decoded. The current point will serve as the nearest-neighboring point to points in a subsequent LOD, and attribute information of the subsequent points will be predicted by using the reconstructed value of the current point.

The above is a basic process of the point cloud encoder and decoder based on the GPCC encoding and decoding architecture. With the development of technology, some modules or steps of the architecture or process may be omitted. The present application is applicable to the basic process of the point cloud encoder and decoder based on the GPCC encoding and decoding architecture, but is not limited to the architecture and process.

The octree-based geometric encoding and the prediction tree-based geometric encoding will be introduced.

The octree-based geometric encoding includes the following steps. First, coordinate transformation is performed on geometric information, to enable the entire point cloud to be included in a bounding box. Next, quantization is performed, where this step of quantization mainly plays a role in scaling. Due to quantization rounding, geometric information of some points is the same. Whether to remove duplicate points is determined based on a parameter. A process of quantization and removal of duplicate points is also called voxelization. Next, tree partition (octree/quadtree/binary tree) is continuously performed on the bounding box in an order of breadth-first traversal, and a placeholder code of each node is encoded. In an implicit geometric partitioning manner, the bounding box $(2^{d_x}, 2^{d_y}, 2^{d_z})$ of the point cloud is first calculated. It is assumed that the bounding box with $d_x > d_y > d_z$ corresponds to a cuboid. During geometric partitioning, binary tree partitioning is first performed based on the X coordinate axis all the time to obtain two child nodes; until a condition of $d_x = d_y > d_z$ is met, quadtree partitioning is performed based on the X and Y coordinate axes all the time to obtain four child nodes; and then in a case where a condition of $d_x = d_y = d_z$ is finally met, octree partitioning is performed all the time until leaf nodes obtained by partitioning are each a unit cube of $1 \times 1 \times 1$, the partitioning will be stopped, and points in the leaf nodes are encoded to generate a binary bitstream. In the process of performing partitioning based on binary tree/quadtree/octree, two parameters are introduced: K and M, in which the parameter K indicates the maximum number that the binary tree/quadtree partitioning is performed before octree partitioning; and the parameter M is used for indicating that a side length of the minimum block corresponding to the binary tree/quadtree partitioning is $2^M$. At the same time, K and M must meet the following conditions: it is assumed that $d_{max} = \max(d_x, d_y, d_z), d_{min} = \min(d_x, d_y, d_z)$, the parameter K meets $K >= d_{max} - d_{min}$; and the parameter M meets $M >= d_{min}$. The reason why the parameters K and M meet the above conditions is that in a current process of geometric implicit partitioning of GPCC, the priority of the partitioning manner is binary tree, quadtree and octree. Only in a case where the size of the node block does not meet the conditions of binary tree/quadtree, octree partitioning is performed on the nodes all the time until the nodes are partitioned into leaf nodes with the minimum unit of $1 \times 1 \times 1$.

The octree-based geometric information encoding mode may effectively encode the geometric information of the point cloud by using correlation between neighboring points in space. Whereas for some relatively flat nodes or nodes with planar characteristics, the encoding efficiency of the geometric information of the point cloud may be further improved by using planar encoding.

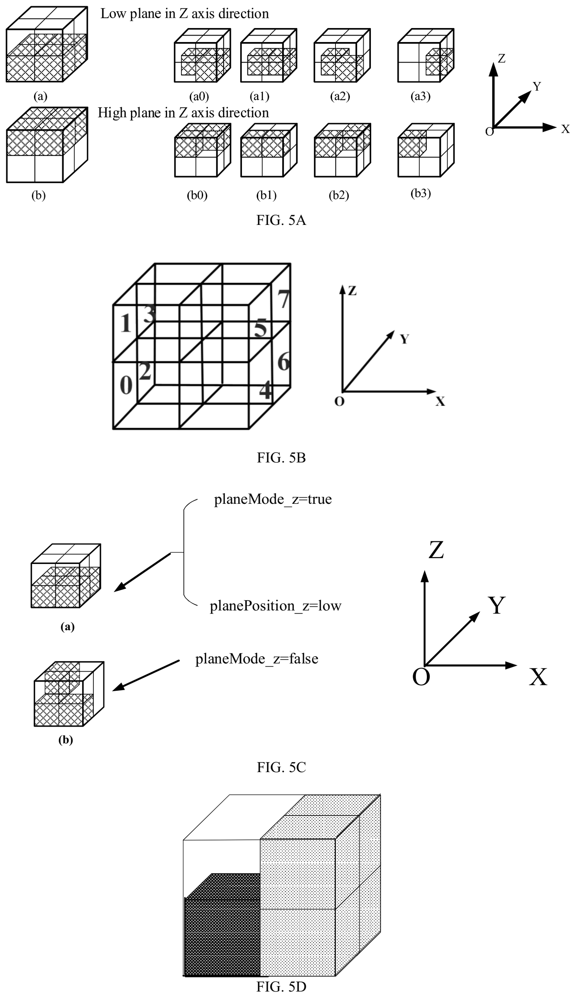

For example, as shown in FIG. 5A, (a) series belongs to a low planar position in a Z coordinate axis direction, and (b) series belongs to a high planar position in the Z coordinate axis direction. Taking (a) as an example, it can be seen that four occupied child nodes in a current node are all positioned in a low planar position of the current node in the Z coordinate axis direction. Therefore, it may be considered that the current node belongs to a Z plane and is a low plane in the Z coordinate axis direction. Similarly, (b) indicates that occupied child nodes in the current node are positioned at a high planar position of the current node in the Z coordinate axis direction.

Taking (a) as an example, the octree encoding and the planar encoding are compared in terms of efficiency. As shown in FIG. 5B, if an octree encoding manner is used for (a) in FIG. 1, occupancy information of the current node is represented as: 11001100. Whereas if a planar encoding manner is used, first, an identifier needs to be encoded to represent that the current node is a plane in the Z coordinate axis direction; second, if the current node is a plane in the Z coordinate axis direction, the planar position of the current node needs to be represented; and then only occupancy information of low planar nodes in the Z coordinate axis direction needs to be encoded (e.g., occupancy information of four child nodes 0246). Therefore, based on the planar encoding manner, only 6 bits are needed to encode the current node, which may reduce 2 bits of representation compared to the original octree encoding. Based on this analysis, the planar encoding has more significant encoding efficiency than the octree encoding. Therefore, for an occupied node, if the planar coding is used for encoding in a certain dimension, as shown in FIG. 5C, first, planar identification (planarMode) information and planar position (PlanePos) information of the current node in this dimension need to be represented, and then occupancy information of the current node is encoded based on planar information of the current node. It will be noted that: for $\text{PlaneMode}_i$ (i is equal to 0, 1 or 2): 0 represents that the current node is not a plane in an i-axis direction. In a case where the node is a plane in the i-axis direction, for $\text{PlanePosition}_i$: 0 represents that the current node is a plane in the i-axis direction with the planar position being a low plane, 1 represents that the current node is a high plane in the i-axis direction. For example, i = 0 represents the X coordinate axis, i = 1 represents the Y coordinate axis, and i = 2 represents the Z coordinate axis.

In the current GPCC standard, determining whether a node meets conditions of the planar encoding and predictive encoding of planar identification and planar position information of the node in a case where the current node meets the conditions of the planar encoding, will be introduced in detail below.

There are three types of determination conditions in the current GPCC for determining whether a node meets the planar encoding, which will described below one by one.

The first type: determining is performed based on the plane probability of the node in each dimension.

First, a local area density (local_node_density) of a current node and the probability Prob(i) of the current node in each dimension are determined.

In a case where the local area density of the node is less than a threshold Th (Th is equal to 3), the plane probabilities Prob(i) of the current node in three dimensions are compared with thresholds Th0, Th1 and Th2, where Th1 is less than Th2 and greater than Th0 (Th0 < Th1 < Th2) (Th0 is equal to 0.6, Th1 is equal to 0.77, and Th2 is equal to 0.88). $\text{Eligible}_i$ (i is equal to 0, 1 or 2) is used below to represent whether the planar encoding is enabled in each dimension, where a determination process of $\text{Eligible}_i$ is shown in formula (1). For example, if $\text{Eligible}_i$ is greater than or equal to the threshold ($\text{Eligible}_i$ >= threshold), it represents that the planar encoding is enabled in an i-th dimension:

$$\text{Eligible}_i = \text{Prob}(i) >= \text{threshold} \qquad (1)$$

It will be noted that the threshold is changed adaptively. For example, in a case where Prob(1) is greater than Prob(0) and less than Prob(2) (Prob(0) > Prob(1) > Prob(2)), a value of the threshold is as shown in formula (2):

$$\text{Eligible}_0 = \text{Prob}(0) >= \text{Th0}$$
$$\text{Eligible}_1 = \text{Prob}(1) >= \text{Th1}$$
$$\text{Eligible}_2 = \text{Prob}(2) >= \text{Th2} \qquad (2)$$

An update process of local_node_density and the updating of Prob(i) will be described below.

In an example, Prob(i) is updated by the following formula (3):

$$\text{Prob}(i)_{new} = (\text{Lx Prob}(i) + \delta(\text{coded node})) / L + 1 \qquad (3)$$

Here, L is equal to 255 (L = 255); and in a case where the coded node is a plane, L is 1, otherwise L is 0.

In an example, local_node_density is updated by the following formula (4):

$$\text{local\_node\_density}_{\text{new}} = \text{local\_node\_density} + 4*\text{numSiblings} \qquad (4)$$

Here local_node_density is initialized to 4, numSiblings is the number of siblings of the node; as shown in FIG. 5D, in a case where the current node is a left node and the right nodes are siblings of the current node, the number of the siblings of the current node is 5 (including the current node itself).

The second type: whether a node of a current layer meets the planar encoding is determined according to the point cloud density of the current layer.

Whether the planar encoding is performed on the node of the current layer is determined by using the density of points in the current layer. It is assumed that the number of points in a current point cloud to be encoded is pointCount, and the number of points reconstructed after IDCM encoding is numPointCountRecon, and because for the octree, the encoding is performed based on an order of breadth-first traversal, the number of nodes to be encoded in the current layer may be obtained, assuming as nodeCount. As a result, it is assumed that planarEligibleKOctreeDepth is used for representing whether the planar encoding is enabled in the current layer, where the determination process of planarEligibleKOctreeDepth is shown in formula (5):

$$\text{planarEligibleKOctreeDepth} = (\text{pointCount-numPointCountRecon}) < \text{nodeCount}*1.3 \qquad (5)$$

In a case where planarEligibleKOctreeDepth is true, the planar encoding is performed on all nodes in the current layer; otherwise, no planar encoding is performed and only the octree encoding is used.

The third type: whether the current node meets the planar encoding is determined according to a collection parameter of a laser radar point cloud.

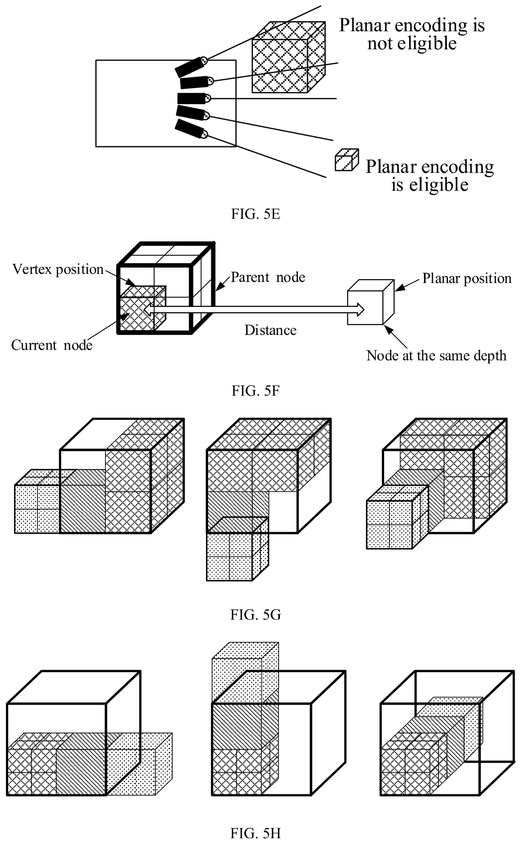

As shown in FIG. 5E, it may be seen that a node of large cube at top is passed through by two lasers simultaneously, so the current node is not a plane in a direction perpendicular to the Z coordinate axis, and a node of small cube at bottom is small enough that it cannot be passed through by two nodes simultaneously, so the current node is likely to be a plane. Therefore, whether the current node meets the planar encoding is determined by the number of lasers corresponding to the current node.

For nodes meeting the conditions of the planar encoding, the current predictive encoding of the planar identification information and the planar position information will be introduced below.

First, the predictive encoding of the planer identification information.

Currently, three contexts are used to encode the planar identification information, that is, the context is designed separately for planar representations in each dimension.

Encoding of planar position information of non-laser radar point clouds and encoding of planar position information of laser radar point clouds will be introduced separately below.

1) Encoding of the planar position information of the non-laser radar point clouds

1. Predictive encoding of the planar position information

The predictive encoding is performed on the planar position information based on the following information:

(1) the planar position information of the current node being obtained as three elements through predicting by using the occupancy information of the neighboring node: predicted to be a low plane, predicted to be a high plane, or unpredictable;
(2) a spatial distance between a node at the same partition depth and the same coordinate as the current node and the current node being "close" or "far";
(3) a planar position of a node at the same partition depth and the same coordinate as the current node; or
(4) a coordinate dimension i being equal to 0, 1 or 2.

As shown in FIG. 5F, the current node to be encoded is a left node, a neighboring node is searched for as a right node at the same octree partition depth level and the same vertical coordinate, a distance between those two nodes is determined as "close" or "far", with reference to the planar position of the node.

In an example, as shown in FIG. 5G, a black node is the current node; and if the current node is located at a low plane of a parent node, the planar position of the current node is determined in manners as follows.

a) If any one of child nodes 4 to 7 of a node shown with oblique lines is occupied, and none of nodes shown in dots is occupied, it is very likely that there is a plane in the current node, with a relatively low planar position.
b) If none of child nodes 4 to 7 of a node shown with oblique lines is occupied, and any node shown with dots is occupied, it is very likely that there is a plane in the current node, with a relatively high planar position.
c) If all of child nodes 4 to 7 of a node shown with oblique lines are empty nodes, and all of nodes shown with dots are empty nodes, the planar position cannot be inferred and is therefore marked as unknown.
d) If any one of child nodes 4 to 7 of a node shown with oblique lines is occupied, and any one of nodes shown with dots is occupied, the planar position cannot be inferred and is therefore marked as unknown.

In another example, as shown in FIG. 5H, a black node is the current node; and if the current node is located at a high planar position of a parent node, the planar position of the current node is determined in manners as follows.

a) If any one of child nodes 4 to 7 of a node shown with dots is occupied, and a node shown with oblique lines is not occupied, it is very likely that there is a plane in the current node, with a relatively low planar position.
b) If none of child nodes 4 to 7 of a node shown with dots is occupied, and a node shown with oblique lines is occupied, it is very likely that there is a plane in the current node, with a relatively high planar position.
c) If none of child nodes 4 to 7 of a node shown with dots is occupied, and a node shown with oblique lines is not occupied, the planar position cannot be inferred and is therefore marked as unknown.
d) If one of child nodes 4 to 7 of a node shown with dots is occupied, and a node shown with oblique lines is occupied, the planar position cannot be inferred and is therefore marked as unknown.

2) Encoding of the planar position information of laser radar point clouds

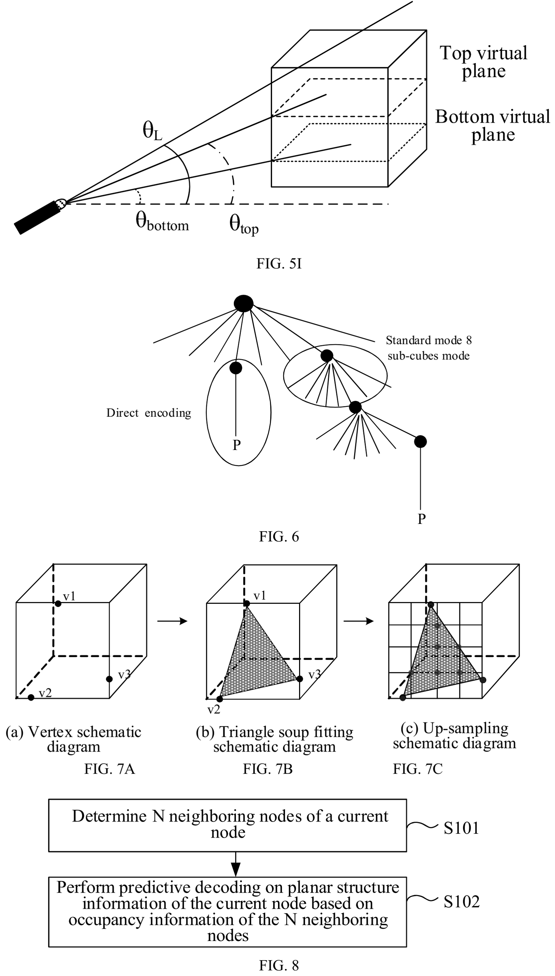

FIG. 5I shows the predictive encoding of the planar position information of the laser radar point cloud. The planar position of the current node is predicted by using parameters collected by a laser radar, and the position is quantized into four intervals by using positions of intersection of the current node and laser rays, which finally serve as the context of the planar position of the current node. A specific calculation process is the following: assuming that coordinates of the laser radar are $(x_{Lidar}, y_{Lidar}, z_{Lidar})$ and geometric coordinates of the current point are $(x, y, z)$, a vertical tangent value $\tan\theta$ of the current point relative to the laser radar is first calculated, with the calculation process shown in formula (6):

$$\tan\theta = \frac{z - z_{Lidar}}{\sqrt{(x - x_{Lidar})^2 + (y - y_{Lidar})^2}} \qquad (6)$$

In addition, since each laser has a certain offset angle relative to the laser radar, a relative tangent value of the current node relative to the laser is calculated, with the specific calculation process shown in formula (7):

$$\tan\theta_{corr,L} = \frac{z - z_{Lidar} - z_L}{\sqrt{(x - x_{Lidar})^2 + (y - y_{Lidar})^2}} = \tan\theta - \frac{z_L}{r} \qquad (7)$$

Finally, the planar position of the current node is predicted by using a corrected tangent value of the current node. Specifically, assuming that a tangent value of a lower boundary of the current node is $\tan(\theta\ bottom)$, and a tangent value of an upper boundary is $\tan(\theta\ top)$, the planar position is quantized into 4 quantization intervals according to $\tan\theta_{corr,L}$, that is, the context of the planar position.
However, the octree-based geometric information encoding mode only has an efficient compression rate for points that are correlated in space. For points that are isolated in the geometric space, use of the direct coding model (DCM) may greatly reduce complexity. For all nodes in the octree, use of DCM is not represented by flag information, but is inferred from the parent node and neighboring information of the current node. There are three manners to determine whether the current node is eligible for the DCM encoding, as shown in FIG. 6.

(1) The current node has no sibling child nodes, that is, the parent node of the current node has only one child node, and a parent node of the parent node of the current node has only two occupied child nodes, that is, the current node has at most one neighboring node.
(2) The parent node of the current node has only one occupied child node, i.e., the current node, and six neighboring nodes sharing a face with the current node are also empty nodes.
(3) The number of sibling nodes of the current node is greater than 1.

If the current node is not eligible for the DCM encoding, octree partitioning will be performed on the current node. If the current node is eligible for the DCM encoding, the number of points included in the node will be further determined. In a case where the number of points is less than a threshold of 2, the DCM encoding is performed on the node, otherwise the octree partitioning will be performed continuously. In a case where the DCM encoding mode is applied, it is first necessary to encode whether the current node is a real isolated point, that is, IDCM_flag. In a case where IDCM_flag is true, the DCM encoding is performed on the current node, otherwise the octree encoding is still performed. In a case where the current node meets the DCM encoding, a DCM encoding mode of the current node needs to be encoded. There exist two current DCM modes which are 1 that: only one point exists (or multiple points, but they are duplicate points); and 2 that: two points are contained. Finally, it is necessary to encode geometric information of each point. Assuming that a side length of the node is $2^d$, it takes d bits to encode each component of the geometric coordinates of the node, and the bit information is directly encoded into a bitstream. It will be noted here that in a case of encoding the laser radar point cloud, predictive encoding is performed on the three-dimensional coordinate information by using the parameters collected by a laser radar, which may further improve the encoding efficiency of the geometric information.

It will be noted that as the node partitioning proceeds to leaf nodes, the number of duplicate points in the leaf nodes needs to be encoded in a case of geometric lossless encoding. Finally, occupancy information of all nodes is encoded to generate a binary bitstream. In addition, a planar encoding mode is currently introduced in GPCC. In a process of geometric partitioning, whether child nodes of the current node are in the same plane will be determined; and if the child nodes of the current node meet the condition of being in the same plane, the child nodes of the current node will be represented by the plane.

For the octree-based geometric decoding, before decoding the occupancy information of each node, a decoding side will first determine, in the order of breadth-first traversal, whether to perform the planar decoding or the IDCM decoding on the current node by using the reconstructed geometric information. If the current node meets a condition for the planar decoding, the decoding side will first decode the planar identification and planar position information of the current node, and then decode the occupancy information of the current node based on the planar information. If the current node meets a condition for the IDCM decoding, the decoding side will first decode whether the current node is a true IDCM node; and if the current node is a true IDCM decoding, the decoding side will continue to parse the DCM decoding mode of the current node, and then the decoding side may obtain the number of points in the current DCM node and finally decode the geometric information of each point. For a node that does not meet either the planar decoding or the DCM decoding, the occupancy information of the current node will be decoded. By continuously parsing in this manner, an occupancy code of each node is obtained, and the partitioning is continued for the nodes in turn until unit cubes of $1 \times 1 \times 1$ are obtained. The number of points included in each leaf node is parsed, and geometric reconstruction point cloud information is restored finally.

For the octree-based geometric decoding, before decoding the occupancy information of each node, a decoding side will first determine, in the order of breadth-first traversal, whether to perform the planar decoding or the IDCM decoding on the current node by using the reconstructed geometric information. If the current node meets a condition for the planar decoding, the decoding side will first decode the planar identification and planar position information of the current node, and then decode the occupancy information of the current node based on the planar information. If the current node meets a condition for the IDCM decoding, the decoding side will first decode whether the current node is a true IDCM node; and if the current node is a true IDCM decoding, the decoding side will continue to parse the DCM decoding mode of the current node, and then the decoding side may obtain the number of points in the current DCM node and finally decode the geometric information of each point. For a node that does not meet either the planar decoding or the DCM decoding, the occupancy information of the current node will be decoded. By continuously parsing in this manner, an occupancy code of each node is obtained, and the partitioning is continued for the nodes in turn until unit cubes of $1 \times 1 \times 1$ are obtained. The number of points included in each leaf node is parsed, and geometric reconstruction point cloud information is restored finally.

In a geometric information encoding architecture based on trisoup (triangle soup), similarly, geometric partitioning is also performed first. However, unlike the binary tree/quadtree/octree-based geometric information encoding, this method does not need to partition the point cloud into unit cubes with side lengths of $1 \times 1 \times 1$ step by step, but stops partitioning once there exist blocks (sub-blocks) with a side length of W. Based on a surface formed in each block by the distribution of the point cloud, at most twelve vertices (intersections) generated by this surface and twelve sides of the block are obtained. Vertex coordinates of each block are encoded in turn to generate a binary bitstream.

For trisoup-based point cloud geometric information reconstruction, in a case where performing the point cloud geometric information reconstruction, the decoding side first decodes the vertex coordinates to complete triangle soup reconstruction, a process of which is shown in FIG. 7A to FIG. 7C. There are three vertices (v1, v2, v3) in a block shown in FIG. 7A, and the triangle soup, i.e., trisoup, formed by these three vertices in a certain order is shown in FIG. 7B. Afterwards, sampling is performed on the triangle soup to obtain sampling points, which will serve as a reconstructed point cloud within the block, as shown in FIG. 7C.

The prediction tree-based geometric encoding includes steps as follows. First, an input point cloud is sorted, and the sorting methods currently used include unordered, Morton order, azimuth order, and radial distance order. An encoding side establishes a prediction tree structure by using two different manners including a high-latency slow mode (KD-Tree), and a low-latency fast mode in which each point is assigned to a different laser by using laser radar calibration information, and a prediction tree structure is established according to different lasers. Next, each node in the prediction tree is traversed based on the prediction tree structure, and geometric position information of the node is predicted by selecting different prediction modes to obtain a prediction residual, and the geometric prediction residual is quantized by using a quantization parameter. Finally, the prediction residual of the position information of the nodes in the prediction tree, the prediction tree structure, and the quantization parameter are encoded through continuous iteration to generate a binary bitstream.

For the prediction tree-based on the geometric decoding, the decoding side reconstructs the prediction tree structure by continuously parsing the bitstream, and then obtains the prediction residual information of the geometric position and a quantization parameter of each prediction node through parsing, and dequantizes the prediction residual for recovering, so as to obtain the reconstructed geometric position information of each node, and finally completes the geometric reconstruction on the decoding side.

The geometric information is reconstructed after the geometric encoding is completed. Currently, attribute encoding is mainly performed on color information. First, the color information is transformed from an RGB color space to a YUV color space. The point cloud is then recolored by using the reconstructed geometric information, to enable unencoded attribute information to correspond to the reconstructed geometric information. In color information encoding, there are two main transformation manners: one is distance-based lifting transformation that relies on LOD (level of detail) partitioning, and the other is that RAHT (Region Adaptive Hierarchal Transform) transformation is performed directly. Both manners can transform the color information from a spatial domain to a frequency domain, a high-frequency coefficient and a low-frequency coefficient are obtained through the transformation, and finally the coefficients are quantized and encoded to generate a binary bitstream.

In a case where the attribute information is predicted by using the geometric information, Morton code may be used for performing nearest neighbor search, where the Morton code corresponding to each point in the point cloud may be obtained from geometric coordinates of this point. A specific method for calculating the Morton code is described below. For a three-dimensional coordinate with each component represented by a d-bit binary value, its three components may be represented as formula (8):

$$x = \sum_{\ell=1}^{d} 2^{d-\ell} x_\ell, \ y = \sum_{\ell=1}^{d} 2^{d-\ell} y_\ell, \ z = \sum_{\ell=1}^{d} 2^{d-\ell} z_\ell \qquad (8)$$

Here, $x_\ell, y_\ell, z_\ell \in \{0,1\}$ are binary values corresponding to bits, from the highest ($\ell = 1$) to the lowest ($\ell = d$), of x, y, z, respectively. For x, y, z, starting from the highest bit, $x_\ell, y_\ell, z_\ell$ are crosswise arranged in sequence by using the Morton code M up to the lowest bit. Calculation formula of M is shown in formula (9):

$$M = \sum_{\ell=1}^{d} 2^{3(d-\ell)} (4x_\ell + 2y_\ell + z_\ell) = \sum_{\ell'=1}^{3d} 2^{3d-\ell'} m_{\ell'} \qquad (9)$$

Here, $m_{\ell'} \in \{0,1\}$ are values of M from the highest bit ($\ell' = 1$) to the lowest bit ($\ell' = 3d$), respectively. After the Morton code M of each point in the point cloud is obtained, the points in the point cloud are arranged in order of Morton code from small to large, and a weighting factor w of each point is set to 1.

There are 4 general test conditions for GPCC:

condition 1: the geometric position being limitedly lossy, and the attributes being lossy;
condition 2: the geometric position being lossless, and the attributes being lossy;
condition 3: the geometric position being lossless, and the attributes being limitedly lossy; and
condition 4: the geometric position being lossless, and the attributes being lossless.

General test sequences include four types: Cat1A, Cat1B, Cat3-fused, and Cat3-frame, where Cat2-frame point cloud includes only reflectance attribute information, Cat1A point cloud and Cat1B point cloud include only color attribute information, and Cat3-fused point cloud includes both the color attribute information and the reflectance attribute information.

There are two technical routes for GPCC, differentiated by an algorithm used for geometric compression, which are classified into an octree encoding branch and a prediction tree encoding branch.

In the octree coding branch, at the encoding side, a bounding box is continuously partitioned into sub-cubes; and partitioning is continued for non-empty sub-cubes (including points in the point cloud) until leaf nodes obtained by partitioning are unit cubes of $1 \times 1 \times 1$. In a case of geometric lossless encoding, the number of points included in the leaf node needs to be encoded to finally complete the encoding of the geometric octree and generate the binary bitstream. At the decoding side, the decoding side obtains, in the order of breadth-first traversal, an occupancy code of each node by continuous parsing, and the partitioning is continued for the nodes in turn until unit cubes of $1 \times 1 \times 1$ are obtained. In the case of the geometric lossless decoding, the number of points included in each leaf node needs to be parsed, and the geometric reconstruction point cloud information is restored finally.

In the prediction tree encoding branch, at the encoding side, a prediction tree structure is established by using two different manners including a high-latency slow mode (KD-Tree), and a low-latency fast mode in which each point is assigned into a different laser by using laser radar calibration information, and a prediction tree structure is established according to different lasers. Next, each node in the prediction tree is traversed based on the prediction tree structure, and geometric position information of the node is predicted by selecting different prediction modes to obtain a prediction residual, and the geometric prediction residual is quantized by using a quantization parameter. Finally, the prediction residual of the position information of the nodes in the prediction tree, the prediction tree structure, and the quantization parameter are encoded through continuous iteration to generate a binary bitstream. At the decoding side, the decoding side reconstructs the prediction tree structure by continuously parsing the bitstream, and then obtains the prediction residual information of the geometric position and a quantization parameter of each prediction node through parsing, and dequantizes the prediction residual for recovering, so as to obtain the reconstructed geometric position information of each node, and finally completes the geometric reconstruction on the decoding side.

In a point cloud encoding process, for some relatively flat nodes or nodes with planar characteristics, the encoding efficiency of point cloud geometric information may be further improved by using planar encoding. However, predictive encoding is currently performed on planar structure information of a current node only through some prior reference information, causing the poor predictive encoding performance of the planar structure information.

In order to solve the above technical problem, in a case where a node is encoded and decoded, N neighboring nodes of the current node are determined in the embodiments of the present application, and predictive decoding is performed on the planar structure of the current node based on occupancy information of the N neighboring nodes, so as to improve the performance of the predictive encoding and decoding of the planar structure information to improve the efficiency and performance of the encoding and decoding of the point cloud.

The point cloud encoding and decoding methods involved in the embodiments of the present application will be introduced below in conjunction with specific embodiments.

First, taking the decoding side as an example, the point cloud decoding method provided in the embodiments of the present application will be introduced.

FIG. 8 is a schematic flowchart of the point cloud decoding method provided in the embodiments of the present application. The point cloud decoding method of the embodiments of the present application may be completed by the point cloud decoding device or the point cloud decoder shown in FIG. 3 or FIG. 4B above.

As shown in FIG. 8, the point cloud decoding method of the embodiments of the present application includes the following steps, where

in S101, N neighboring nodes of a current node are determined.

As can be seen from the above, a point cloud includes geometric information and attribute information, and decoding of the point cloud includes geometric decoding and attribute decoding. The embodiments of the present application relate to the geometric decoding of the point cloud.

In some embodiments, the geometric information of the point cloud is also referred to as position information of the point cloud. Therefore, the geometric decoding of the point cloud is also referred to as position decoding of the point cloud.

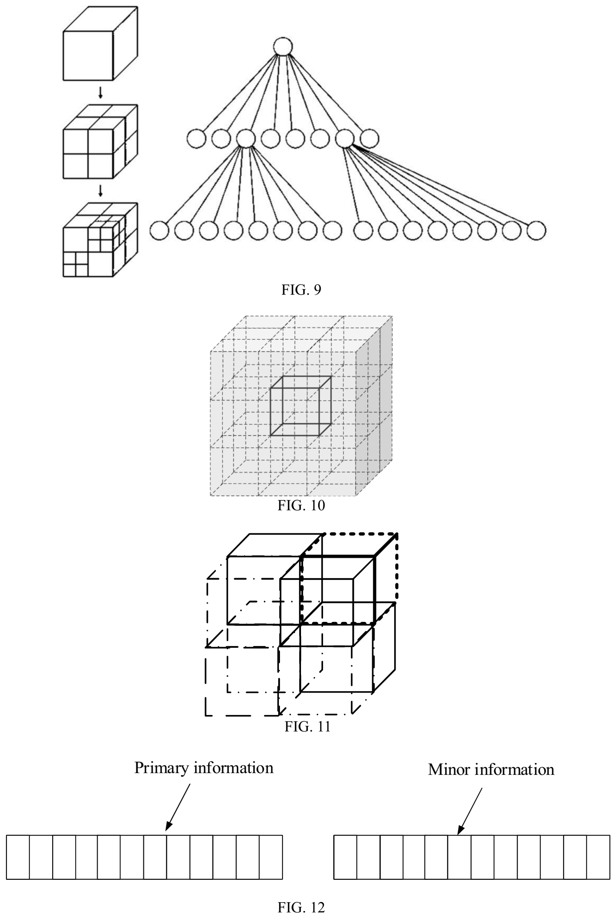

In an octree-based encoding manner, the encoding side constructs an octree structure of the point cloud based on the geometric information of the point cloud. As shown in FIG. 9, the point cloud is enclosed by a smallest rectangular block, i.e., a bounding box, and octree partitioning is performed on the bounding box first to obtain 8 nodes. The octree partitioning is continued for occupied nodes in these 8 nodes, i.e., the nodes including points, and so on, until the partitioning reaches a voxel level position, for example, until there exist cubes of $1 \times 1 \times 1$. An octree structure of the point cloud obtained by such partitioning manner includes multiple layers of nodes, such as N layers. Occupancy information of each layer is encoded layer by layer in encoding until leaf nodes at the voxel level in the last layer are encoded. That is to say, in the octree encoding, the points in the point cloud are finally partitioned into the leaf nodes at the voxel level in the octree through partitioning the point cloud by the octree, so the encoding of the point cloud may be implemented by encoding the entire octree.

Correspondingly, the decoding side first decodes a geometric bitstream of the point cloud to obtain occupancy information of a root node of the octree of the point cloud, and determines child nodes included in the root node based on the occupancy information of the root node, that is, nodes included in a second layer of the octree. Next, the decoding side decodes the geometric bitstream to obtain occupancy information of each node in the second layer, and determines nodes included in a third layer of the octree based on the occupancy information of each node, and so on.

For some relatively flat nodes or nodes with planar characteristics, the encoding efficiency of point cloud geometric information may be further improved by using planar encoding. For example, as shown in FIG. 5A, four occupied child nodes in the current node are all positioned at a low planar position of the current node in the Z coordinate axis direction. In this case, occupancy information of the current node is represented as: 11001100. In this way, in a case where the current node is encoded by using a planar encoding manner, first, an identifier needs to be encoded to represent that the current node is a plane in the Z coordinate axis direction; second, if the current node is a plane in the Z coordinate axis direction, the planar position of the current node needs to be represented; and then only occupancy information of the low planar nodes in the Z coordinate axis direction needs to be encoded (e.g., occupancy information of the four child nodes 0246). Therefore, based on the planar encoding manner, only 6 bits are needed to encode the current node, which may reduce 2 bits of representation compared to the original octree encoding, so as to improve the encoding performance of the point cloud.

As can be seen from the above, in a case where the current node is encoded by using the planar encoding manner, the encoding side needs to perform predictive encoding on planar structure information of the current node. Correspondingly, the decoding side performs predictive decoding on the planar structure information of the current node, and then obtains geometric information of the current node based on decoded planar structure information.

Currently, the predictive encoding is performed on the planar structure information of the current node based on some prior reference information, such as a spatial distance between a node at the same partition depth and the same coordinate as the current node, and/or a planar position of a node at the same partition depth and the same coordinate as the current node, causing the poor predictive encoding performance of the planar structure information.

In order to solve the above problems, in the embodiments of the present application, the decoding side performs the predictive decoding on a planar structure of the current node based on the occupancy information of the N neighboring nodes of the current node, so as to improve the performance of the predictive encoding and decoding of the planar structure information, and improve the efficiency and performance of the encoding and decoding of the point cloud.

A specific process in which the decoding side determines the N neighboring nodes of the current node will be introduced below.

It will be noted that in the embodiments of the present application, there is no limitation on the specific manner in which the decoding side determines the N neighboring nodes of the current node.

In an example, the N neighboring nodes of the current node include at least one neighboring node of neighboring nodes that are coplanar, coedge, and coVertex with the current node. As shown in FIG. 10, the current node has 6 coplanar nodes, 12 coedge nodes, and 8 coVertex nodes.

In another example, in addition to at least one neighboring node of neighboring nodes that are coplanar, coedge, and coVertex with the current node, the N neighboring nodes of the current node may include other nodes within a range of a preset reference neighborhood, which is not limited in the embodiments.

In a specific embodiment, as shown in FIG. 11, a node shown with thick dashed lines is a current node to be encoded, nodes shown with solid lines are three neighboring nodes coplanar with the current node, nodes shown with dotted lines are three neighboring nodes coedge with the current node, and a node shown with long dashed lines is a neighboring node coVertex with the current node. Since according to an order of point cloud decoding, in a case where the occupancy information of the current node is decoded, seven neighboring nodes (at a lower left front direction) that are coplanar, coedge, and coVertex with the current node may be obtained. Predictive decoding is performed on the planar structure information of the current node by using occupancy information of at least one of these seven neighboring nodes.

In another specific embodiment, the N neighboring nodes of the current node include the seven neighboring nodes in the FIG. 11, namely, the three neighboring nodes coplanar with the current node, the three neighboring nodes coedge with the current node, and the neighboring node coVertex with the current node.

In another specific embodiment, the N neighboring nodes of the current node include neighboring nodes coplanar and coVertex with the current node, for example, the N neighboring nodes of the current node include six neighboring nodes coplanar with the current node and one neighboring node coVertex with the current node.

In another specific embodiment, the N neighboring nodes of the current node include neighboring nodes coedge and coVertex with the current node, for example, the N neighboring nodes of the current node include six neighboring nodes coedge with the current node and one neighboring node coVertex with the current node.

In another specific embodiment, the N neighboring nodes of the current node include neighboring nodes coedge and coplanar with the current node, for example, the N neighboring nodes of the current node include six neighboring nodes coplanar with the current node and six neighboring nodes coedge with the current node.

In another specific embodiment, the N neighboring nodes of the current node include only neighboring nodes coplanar with the current node, or include only neighboring nodes coedge with the current node, or include only neighboring nodes coVertex with the current node.

The embodiments of the present application do not limit the specific manner in which the decoding side determines the N neighboring nodes of the current node.

In S102, predictive decoding is performed on planar structure information of the current node based on occupancy information of the N neighboring nodes.

In the embodiments of the present application, the planar structure information of the current node includes planar identification information of the current node and/or planar position information of the current node.

As can be seen from the above, the planar identification information of the current node is represented by $\text{PlaneMode}_i$ (i = 0, 1 or 2), where i = 0 represents the X coordinate axis, i = 1 represents the Y coordinate axis, and i = 2 represents the Z coordinate axis. PlaneMode$_i$ = 0 represents that the current node is not a plane in an i-th coordinate axis direction, and PlaneMode$_i$ = 1 represents that the current node is a plane in the i-th coordinate axis direction.

If the current node is a plane in the i-th coordinate axis direction, that is, PlaneMode$_i$= 1, the decoding side continues to decode planar position information of the current node on the i-th coordinate axis. For example, PlanePosition$_i$ is used to represent the planar position information of the current node in the i-th coordinate axis direction. For example, PlanePosition$_i$ = 0 represents that the current node is a plane in the i-th coordinate axis direction, with the planar position being a low plane. PlanePosition$_i$ = 1 represents that the current node is a high plane in the i-th coordinate axis direction.

In the embodiments of the present application, the predictive decoding is performed on the planar structure information of the current node based on the occupancy information of the N neighboring nodes, that is, the predictive decoding is performed on the planar identification information and/or the planar position information of the current node.

For example, predictive decoding is performed on the planar identification information of the current node on the i-th coordinate axis based on the occupancy information of the N neighboring nodes of the current node.

As another example, predictive decoding is performed on the planar position information of the current node on the i-th coordinate axis based on the occupancy information of the N neighboring nodes of the current node.

In the embodiments of the present application, the predictive decoding is performed on the planar structure information of the current node based on the occupancy information of the N neighboring nodes of the current node, which may be understood that the predictive decoding is performed on the planar structure information of the current node with the occupancy information of the N neighboring nodes of the current node serving as context information of the planar structure information of the current node. For example, a context model index is determined based on the N neighboring nodes of the current node, a context model is determined based on the context model index, and the predictive decoding is performed on the planar structure information of the current node based on the context model, for example, the predictive decoding is performed on the planar identification information of the current node based on the context model, or the predictive decoding is performed on the planar position information of the current node based on the context model.

In some embodiments, in a case where the planar structure information of the current node includes the planar position information of the current node, the decoding side performs the predictive decoding on the planar position information of the current node based on the occupancy information of the N neighboring nodes of the current node. In this case, the above S102 includes steps S102-A and S102-B, where

in S102-A, planar structure information of the N neighboring nodes is determined based on the occupancy information of the N neighboring nodes; and

in S102-B, the predictive decoding is performed on the planar position information of the current node based on the planar structure information of the N neighboring nodes.

In these embodiments, in performing the predictive decoding on the planar position information of the current node by using the occupancy information of the N neighboring nodes of the current node, the decoding side first determines the planar structure information of the N neighboring nodes, and then performs the predictive decoding on the planar position information of the current node based on the planar structure information of the N neighboring nodes. For example, a context model index is determined based on the planar structure information of the N neighboring nodes, a context model is determined based on the context model index, and the predictive decoding is performed on the planar position information of the current node based on the context model.

In the embodiments of the present application, for each neighboring node in the N neighboring nodes, a specific process of determining planar structure information of the neighboring node based on occupancy information of the neighboring node is uniform. For the sake of ease of description, any one neighboring node in the N neighboring nodes is taken as an example for explanation.

In some embodiments, the above S102-A includes the following step S102-A1, where

in S102-A1, for any one neighboring node in the N neighboring nodes, at least one of planar identification information or planar position information of the neighboring node is determined based on occupancy information of the neighboring node.

In the embodiments of the present application, the decoding side may determine the planar identification information and/or the planar position information of the neighboring node based on the occupancy information of the neighboring node.

The specific process of determining the planar identification information of the neighboring node based on the occupancy information of the neighboring node will be introduced below.

Specifically, the decoding side determines plane0 and plane1 corresponding to the i-th coordinate axis based on the occupancy information of the neighboring node, and then determines planar identification information corresponding to the neighboring node on the i-th coordinate axis based on plane0 and plane1.

For example, the decoding side determines plane0 corresponding to the neighboring node on each of the X, Y, and Z coordinate axes based on the following codes:

```
uint8_t plane0 = 0;
plane0 |= !!(occupancy & 0x0f) << 0;
plane0 |= !!(occupancy & 0x33) << 1; and
plane0 |= !!(occupancy & 0x55) << 2.
```

Here, occupancy represents the occupancy information of the neighboring node, plane0 |= !!(occupancy & 0x0f) << 0 represents plane0 corresponding to the neighboring node on the X coordinate axis, plane0 |= !!(occupancy & 0x33) << 1 represents plane0 corresponding to the neighboring node on the Y coordinate axis, and plane0 |= !!(occupancy & 0x55) << 2 represents plane0 corresponding to the neighboring node on the Z coordinate axis. 0x0f represents 00001111, and an AND operation is performed on the occupancy information (occupancy) of the neighboring node and 0x0f, to obtain a value of the neighboring node on a low plane of the X coordinate axis as 0. 0x33 represents 00110011, and the AND operation is performed on the occupancy information (occupancy) of the neighboring node and 0x33, to obtain a value of the neighboring node on a low plane of the Y coordinate axis as 0. 0x55 represents 01010101, and the AND operation is performed on the occupancy information (occupancy) of the neighboring node and 0x55, to obtain a value of the neighboring node on a low plane of the Z coordinate axis as 0.

For example, the decoding side determines plane1 corresponding to the neighboring node on each of the X, Y, and Z coordinate axes based on the following codes:

```
uint8_t plane1 = 0;
plane1 |= !!(occupancy & 0xf0) << 0;
plane1 |= !!(occupancy & 0xcc) << 1; and
plane1 |= !!(occupancy & 0xaa) << 2.
```

Here, occupancy represents the occupancy information of the neighboring node, & represents an AND operation, plane1 |= !!(occupancy & 0xf0) << 0 represents plane1 corresponding to the neighboring node on the X coordinate axis, plane1 |= !!(occupancy & 0xcc) << 1 represents plane1 corresponding to the neighboring node on the Y coordinate axis, and plane1 |= !!(occupancy & 0xaa) << 2 represents plane1 corresponding to the neighboring node on the Z coordinate axis. 0xf0 represents 11110000, and the AND operation is performed on the occupancy information (occupancy) of the neighboring node and 0xf0, to obtain a value of the neighboring node on a high plane of the X coordinate axis as 0. 0xcc represents 11001100, and the AND operation is performed on the occupancy information (occupancy) of the neighboring node and 0xcc, to obtain a value of the neighboring node on a high plane on the Y coordinate axis as 0. 0xaa represents 10101010, and the AND operation is performed on the occupancy information (occupancy) of the neighboring node and 0xaa, to obtain a value of the neighboring node on a high plane of the Z coordinate axis as 0.

Based on the above method, the decoding side may determine plane0 and plane1 corresponding to the neighboring node on the i-th coordinate axis, and then determine the planar identification information corresponding to the neighboring node on the i-th coordinate axis based on plane0 and plane1.

For example, for the i-th coordinate axis, an XOR operation may be performed on plane0 and plane1 of the i-th coordinate axis determined above, to determine the planar identification information of the neighboring node on the i-th axis, specifically, only planar if a single plane perpendicular to the axis is occupied.

For example, the decoding side determines the planar identification information of the neighboring node on the i-th axis based on the following formula (10):

$$planarMode = plane0 \wedge plane1 \qquad (10)$$

Here, planarMode represents the planar identification information of the neighboring node on the i-th axis, and "^" represents the XOR operation.

As shown in the above formula (10), the decoding side performs the XOR operation on plane0 and plane1 corresponding to the neighboring node on the X coordinate axis, to obtain the planar identification information of the neighboring node on the X coordinate axis. As another example, the decoding side performs the XOR operation on plane0 and plane1 corresponding to the neighboring node on the Y coordinate axis, to obtain the planar identification information of the neighboring node on the Y coordinate axis. As yet another example, the decoding side performs the XOR operation on plane0 and plane1 corresponding to the neighboring node on the Z coordinate axis, to obtain the planar identification information of the neighboring node on the Z coordinate axis.

The specific process of determining the planar position information of the neighboring node will be introduced below.

In the embodiments of the present application, the decoding side may determine the planar identification information (planarMode) of the neighboring node based on the above method, and then may determine the planar position information of the neighboring node based on the planar identification information (planarMode).

For example, the decoding side determines the planar position information of the neighboring node on the i-th axis based on the following formula (11):

$$PlanePos = planarMode \,\&\, plane1 \qquad (11)$$

Here, PlanePos represents the planar position information of the neighboring node on the i-th axis, and & represents an AND operation.

As shown in the above formula (11), the decoding side performs the AND operation on the planar identification information of the neighboring node on the X coordinate axis and the corresponding plane1 on the X coordinate axis, to obtain the planar position information of the neighboring node on the X coordinate axis. As another example, the decoding side performs the AND operation on the planar identification information on the Y coordinate axis and the corresponding plane1 on the Y coordinate axis, to obtain the planar position information of the neighboring node on the Y coordinate axis. As yet another example, the decoding side performs the AND operation on the planar identification information on the Z coordinate axis and the corresponding plane1 on the Z coordinate axis, to obtain the planar position information of the neighboring node on the Z coordinate axis.

The process in which the decoding side determines the planar identification information and the planar position information of the neighboring node on the X coordinate axis will be described with examples below. It is assumed that the occupancy information of the neighboring node is 10110000, the occupancy information of the neighboring node as 10110000 is plugged into plane0 |= !!(10110000 & 00001111) << 0, to obtain the plane0 corresponding to the neighboring node on the X coordinate axis as 00000000. The occupancy information of the neighboring node as 10110000 is plugged into plane1 |= !!(10110000 & 11110000) << 0, to obtain the plane1 corresponding to the neighboring node on the X coordinate axis as 10110000. Next, the XOR operation is performed on plane0 and plane1 to obtain the planar identification information of the neighboring node on the X coordinate axis: planarMode = 00000000 ^ 10110000 = 10110000. As can be seen from planarMode = 10110000, the neighboring node has no occupied nodes on the high plane of the X coordinate axis and has an occupied node on the low plane of the X coordinate axis, so it may be determined that the neighboring node is a plane in the X coordinate axis direction. Next, the decoding side performs the AND operation on the planar identification information (planarMode) and plane1 of the neighboring node on the X coordinate axis, to obtain the planar position information of the neighboring node on the X coordinate axis, that is, PlanePos = 10110000 & 10110000 = 10110000. As can be seen from PlanePos = 10110000, the neighboring node is a plane in the X coordinate axis direction, with the planar position being a low plane.

The specific process of determining the planar identification information and the planar position information of the neighboring node on the X coordinate axis is introduced above. The specific process of determining the planar identification information and the planar position information of the neighboring node on the Y coordinate axis and the Z coordinate axis may be referred to the above process of determining the planar identification information and the planar position information of the X coordinate axis, which will not be repeated here.

The decoding side determines planar identification information and/or planar position information of each neighboring node in the N neighboring nodes based on the above steps, and then the decoding side performs predictive decoding on the planar position information of the current node based on the planar identification information and/or the planar position information of each neighboring node in the N neighboring nodes.

The specific manner of performing the predictive decoding on the planar position information of the current node based on the planar structure information of the N neighboring nodes in the above S102-B is not limited in the embodiments of the present application.

In some embodiments, the decoding side determines a context model index based on the planar structure information of the N neighboring nodes, then selects a context model from multiple preset context models based on the context model index, and then performs the predictive decoding on the planar position information of the current node based on the context model.

In some embodiments, the above S102-B includes the following steps, where

in S102-B1, first context information and/or second context information corresponding to the i-th coordinate axis are determined based on the planar structure information of the N neighboring nodes, where the i-th coordinate axis is the X coordinate axis, the Y coordinate axis or the Z coordinate axis; and

in S102-B2, predictive decoding is performed on the planar position information of the current node on the i-th coordinate axis based on the first context information and/or the second context information corresponding to the i-th coordinate axis.

In these embodiments, the decoding side determines at least one of the first context information or the second context information corresponding to the i-th coordinate axis based on the planar structure information of the N neighboring nodes, and then performs the predictive decoding on the planar position information of the current node on the i-th coordinate axis based on the determined first context information and/or the determined second context information. For example, the decoding side determines at least one of first context information or second context information corresponding to the X coordinate axis based on the planar structure information of the N neighboring nodes, and then performs predictive decoding on the planar position information of the current node on the X coordinate axis based on the first context information and/or the second context information corresponding to the X coordinate axis. As another example, the decoding side determines at least one of first context information or second context information corresponding to the Y coordinate axis based on the planar structure information of the N neighboring nodes, and then performs predictive decoding on the planar position information of the current node on the Y coordinate axis based on the first context information and/or the second context information corresponding to the Y coordinate axis. As yet another example, the decoding side determines at least one of first context information or second context information corresponding to the Z coordinate axis based on the planar structure information of the N neighboring nodes, and then performs predictive decoding on the planar position information of the current node on the Z coordinate axis based on the first context information and/or the second context information corresponding to the Z coordinate axis.

The specific process in which the decoding side determines the first context information corresponding to the i-th coordinate axis based on the planar structure information of the N neighboring nodes will be introduced below.

It will be noted that in the embodiments of the present application, the specific manner in which the decoding side determines the first context information corresponding to the i-th coordinate axis based on the planar structure information of the N neighboring nodes includes but is not limited to types as follows.

Manner 1, the decoding side determines the first context information corresponding to the i-th coordinate axis based on planar structure information of some neighboring nodes in the N neighboring nodes.

For example, the decoding side determines the first context information corresponding to the i-th coordinate axis based on planar structure information of P neighboring nodes that are coplanar with the current node in the N neighboring nodes, where P is a positive integer.

The planar structure information of the P neighboring nodes includes planar identification information and/or planar position information of the P neighboring nodes. That is, the decoding side determines the first context information corresponding to the i-th coordinate axis based on the planar identification information of the P coplanar neighboring nodes. Alternatively, the decoding side determines the first context information corresponding to the i-th coordinate axis based on the planar position information of the P coplanar neighboring nodes. Alternatively, the decoding side determines the first context information corresponding to the i-th coordinate axis based on the planar identification information and the planar position information of the P coplanar neighboring nodes.

The specific manner in which the decoding side determines the first context information corresponding to the i-th coordinate axis based on the planar structure information of the P neighboring nodes that are coplanar with the current node in the N neighboring nodes is not limited in the embodiments of the present application.

In a possible implementation, for any one neighboring node in the P neighboring nodes, the decoding side performs an AND operation on planar structure information of the neighboring node and a first preset value corresponding to the i-th coordinate axis, to obtain a first value corresponding to the neighboring node, and then weights first values corresponding to the P neighboring nodes, to obtain the first context information corresponding to the i-th coordinate axis. It will be noted that different coordinate axes correspond to different first preset values, and the specific value of the first preset value corresponding to each coordinate axis is not limited in the embodiments of the present application.

For example, the first preset value corresponding to the X coordinate axis is 0, the first preset value corresponding to the Y coordinate axis is 1, and the first preset value corresponding to the Z coordinate axis is 2.

As can be seen from the above, the planar structure information of the neighboring node includes the planar identification information and/or the planar position information. Therefore, in some embodiments, the above performing, by the decoding side, the AND operation on the planar structure information of the neighboring node and the first preset value corresponding to the i-th coordinate axis, to obtain the first value corresponding to the neighboring node, includes: performing, by the decoding side, the AND operation on the planar identification information and/or the planar position information of the neighboring node and the first preset value corresponding to the i-th coordinate axis, to obtain the first value corresponding to the neighboring node. That is, the decoding side performs the AND operation on the planar identification information of the P coplanar neighboring nodes and the first preset value corresponding to the i-th coordinate axis, and then performs weighting to obtain the first context information corresponding to the i-th coordinate axis. Alternatively, the decoding side performs the AND operation on the planar position information of the P coplanar neighboring nodes and the first preset value corresponding to the i-th coordinate axis, and then performs weighting to obtain the first context information corresponding to the i-th coordinate axis. Alternatively, the decoding side performs the AND operation on both the planar identification information and the planar position information of the P coplanar neighboring nodes and the first preset value corresponding to the i-th coordinate axis, and then performs weighting to obtain the first context information corresponding to the i-th coordinate axis.

The specific manner of weighting the first values corresponding to the P neighboring nodes to obtain the first context information corresponding to the i-th coordinate axis is not limited in the embodiments of the present application.

In some embodiments, weighting factors of the first values corresponding to the P neighboring nodes are preset values, so that the first values corresponding to the P neighboring nodes may be weighted based on a weighting factor of a first value corresponding to each neighboring node in the P neighboring nodes, to obtain the first context information corresponding to the i-th coordinate axis.

In some embodiments, weighting the first values corresponding to the P neighboring nodes to obtain the first context information corresponding to the i-th coordinate axis includes the following steps A1 and A2, where

in step A1, the number of left shifted bits corresponding to each first value is determined, and a weighting factor corresponding to the first value is determined based on the number of left shifted bits; and
in step A2, the first values corresponding to the P neighboring nodes are weighted based on weighting factors of first values, to obtain the first context information corresponding to the i-th coordinate axis.

By way of example, it is assumed that the P neighboring nodes that are coplanar with the current node in the N neighboring nodes are three coplanar neighboring nodes in FIG. 11, pieces of planar identification information of these three coplanar neighboring nodes are recorded in sequence as: coPlanarLeftPlaneMode, coPlanarFrontPlaneMode, and coPlanarBelowPlaneMode, and pieces of planar position information of these three coplanar neighboring nodes are recorded in sequence as: coPlanarLeftPlanePos, coPlanarFrontPlanePos, and coPlanarBelowPlanePos.

The AND operation is performed on coPlanarLeftPlaneMode and the first preset value to obtain a first value 1, the AND operation is performed on coPlanarFrontPlaneMode and the first preset value to obtain a first value 2, the AND operation is performed on coPlanarBelowPlaneMode and the first preset value to obtain a first value 3, the AND operation is performed on coPlanarLeftPlanePos and the first preset value to obtain a first value 4, the AND operation is performed on coPlanarFrontPlanePos and the first preset value to obtain a first value 5, the AND operation is performed on coPlanarBelowPlanePos and the first preset value to obtain a first value 6. In this case, these six first values occupy 6 bits in total, so the number of left shifted bits corresponding to these six first values may be determined. It is assumed that the number of left shifted bits corresponding to the first value 1 is 5, the number of left shifted bits corresponding to the first value 2 is 4, the number of left shifted bits corresponding to the first value 3 is 3, the number of left shifted bits corresponding to the first value 4 is 2, the number of left shifted bits corresponding to the first value 5 is 1, and the number of left shifted bits corresponding to the first value 6 is 0.

In this way, a weighting factor corresponding to each first value may be determined based on the number of left shifted bits corresponding to each first value. For example, the number of left shifted bits corresponding to a first value is m, so $2^m$ is determined as a weighting factor corresponding to the first value. In this way, it may be determined that a weighting factor corresponding to the first value 1 is $2^5$, a weighting factor corresponding to the first value 2 is $2^4$, a weighting factor corresponding to the first value 3 is $2^3$, a weighting factor corresponding to the first value 4 is $2^2$, a weighting factor corresponding to the first value 5 is $2^1$, and a weighting factor corresponding to the first value 6 is $2^0$.

Next, the first values are weighted based on the weighting factors of the first values, to obtain the first context information corresponding to the i-th coordinate axis. It can be understood that the above weighting of the first values may be understood as concatenating of the first values, which is, placing each first value on corresponding bits to obtain the first context information corresponding to the i-th coordinate axis.

In an example, in a case where the decoding side performs the AND operation on the planar identification information of the P coplanar neighboring nodes and the first preset value corresponding to the i-th coordinate axis, and then performs weighting to obtain the first context information corresponding to the i-th coordinate axis, the decoding side performs calculation to obtain the first context information Ctx1 through a method shown in the following codes:

$$\text{Const int mask} = 1 << \text{axisIdx (axisIdx} = 0(x), 1(y), 2(z))$$
$$\text{Ctx1} = !!(\text{coPlanarLeftPlaneMode \& mask}) << 2|$$
$$!!(\text{coPlanarFrontPlaneMode \& mask}) << 1|$$
$$!!(\text{coPlanarBelowPlaneMode \& mask})$$

In an example, in a case where the decoding side performs the AND operation on the planar position information of the P coplanar neighboring nodes and the first preset value corresponding to the i-th coordinate axis, and then performs weighting to obtain the first context information corresponding to the i-th coordinate axis, the decoding side performs calculation to obtain the first context information Ctx1 through a method shown in the following codes:

$$\text{Const int mask} = 1 << \text{axisIdx (axisIdx} = 0(x), 1(y), 2(z))$$
$$\text{Ctx1} = !!(\text{coPlanarLeftPlanePos \& mask}) << 2$$
$$!!(\text{coPlanarFrontPlanePos \& mask}) << 1|$$
$$!!(\text{coPlanarBelowPlanePos \& mask}) |$$

In an example, in a case where the decoding side performs the AND operation on both the planar identification information and the planar position information of the P coplanar neighboring nodes and the first preset value corresponding to the i-th coordinate axis, and then performs weighting to obtain the first context information corresponding to the i-th coordinate axis, the decoding side performs calculation to obtain the first context information Ctx1 through a method shown in the following codes:

$$\text{Const int mask} = 1 << \text{axisIdx (axisIdx} = 0(x), 1(y), 2(z))$$
$$\text{Ctx1} = !!(\text{coPlanarLeftPlanePos \& mask}) << 5$$
$$!!(\text{coPlanarFrontPlanePos \& mask}) << 4|$$
$$!!(\text{coPlanarBelowPlanePos \& mask}) << 3|$$
$$!!(\text{coPlanarLeftPlaneMode \& mask}) << 2|$$
$$!!(\text{coPlanarFrontPlaneMode \& mask}) << 1|$$
$$!!(\text{coPlanarBelowPlaneMode \& mask})$$

The specific process in which the decoding side determines the first context information corresponding to the i-th coordinate axis based on the planar structure information of the P neighboring nodes that are coplanar with the current node in the N neighboring nodes is introduced above.

Alternatively, in some embodiments, the decoding side may determine the first context information corresponding to the i-th coordinate axis based on planar structure information of neighboring nodes are coedge with the current node in the N neighboring nodes that.

Alternatively, in some embodiments, the decoding side may determine the first context information corresponding to the i-th coordinate axis based on planar structure information of neighboring nodes that are coVertex with the current node in the N neighboring nodes.

Alternatively, in some embodiments, the decoding side may determine the first context information corresponding to the i-th coordinate axis based on planar structure information of one or more neighboring nodes that are coplanar and coedge with the current node in the N neighboring nodes.

Alternatively, in some embodiments, the decoding side may determine the first context information corresponding to the i-th coordinate axis based on planar structure information of one or more neighboring nodes that are coplanar and coVertex with the current node in the N neighboring nodes.

Alternatively, in some embodiments, the decoding side may determine the first context information corresponding to the i-th coordinate axis based on planar structure information of one or more of neighboring nodes that are coedge and coVertex with the current node in the N neighboring nodes.

The specific process in which the decoding side determines the first context information corresponding to the i-th coordinate axis based on the planar structure information of some neighboring nodes in the N neighboring nodes is introduced above.

Manner 2, the decoding side determines the first context information corresponding to the i-th coordinate axis based on first planar position information of the N neighboring nodes.

The first planar structure information includes planar identification information and/or planar position information of the neighboring node. That is, the decoding side determines the first context information corresponding to the i-th coordinate axis based on the planar identification information of the N neighboring nodes. Alternatively, the decoding side determines the first context information corresponding to the i-th coordinate axis based on the planar position information of the N neighboring nodes. Alternatively, the decoding side determines the first context information corresponding to the i-th coordinate axis based on the planar position information and planar identification information of the N neighboring nodes.

The specific manner in which the decoding side determines the first context information corresponding to the i-th coordinate axis based on the first planar position information of the N neighboring nodes is not limited in the embodiments of the present application.

In a possible implementation, for any one neighboring node in the N neighboring nodes, the decoding side performs an AND operation on first planar position information of the neighboring node and a first preset value corresponding to the i-th coordinate axis, to obtain a second value corresponding to the neighboring node, and then the decoding side weights second values corresponding to the N neighboring nodes, to obtain the first context information corresponding to the i-th coordinate axis. It will be noted that different coordinate axes correspond to different first preset values, and the specific value of the first preset value corresponding to each coordinate axis is not limited in the embodiments of the present application.

For example, the first preset value corresponding to the X coordinate axis is 0, the first preset value corresponding to the Y coordinate axis is 1, and the first preset value corresponding to the Z coordinate axis is 2.

As can be seen from the above, the planar structure information of the neighboring node includes the planar identification information and/or the planar position information. Therefore, in some embodiments, the above performing, by the decoding side, the AND operation on the first planar structure information of the neighboring node and the first preset value corresponding to the i-th coordinate axis, to obtain the second value corresponding to the neighboring node, includes: performing, by the decoding side, the AND operation on the planar identification information and/or the planar position information of the N neighboring nodes and the first preset value corresponding to the i-th coordinate axis, to obtain the first value corresponding to the neighboring node. That is, the decoding side performs the AND operation on the planar identification information of the N neighboring nodes and the first preset value corresponding to the i-th coordinate axis, and then performs weighting to obtain the first context information corresponding to the i-th coordinate axis. Alternatively, the decoding side performs the AND operation on the planar position information of the N neighboring nodes and the first preset value corresponding to the i-th coordinate axis, and then performs weighting to obtain the first context information corresponding to the i-th coordinate axis. Alternatively, the decoding side performs the AND operation on both the planar identification information and the planar position information of the N neighboring nodes and the first preset value corresponding to the i-th coordinate axis, and then performs weighting to obtain the first context information corresponding to the i-th coordinate axis.

The specific manner of weighting the second values corresponding to the N neighboring nodes, to obtain the first context information corresponding to the i-th coordinate axis is not limited in the embodiments of the present application.

In some embodiments, weighting factors of the second values corresponding to the N neighboring nodes are preset values, so that the second values corresponding to the N neighboring nodes may be weighted based on a weighting factor of a second value corresponding to each neighboring node in the N neighboring nodes, to obtain the first context information corresponding to the i-th coordinate axis.

In some embodiments, weighting the second values corresponding to the N neighboring nodes to obtain the first context information corresponding to the i-th coordinate axis includes the following steps B1 and B2, where

in step B1, the number of left shifted bits corresponding to each second value is determined, and a weighting factor corresponding to the second value is determined based on the number of left shifted bits; and
in step B2: the second values corresponding to the N neighboring nodes are weighted based on weighting factors of second values, to obtain the first context information corresponding to the i-th coordinate axis.

By way of example, it is assumed that the N neighboring nodes include three coplanar neighboring nodes (coPlanarLeft, coPlanarFrontPlane and coPlanarBelow), three coedge neighboring nodes (coEdgerLeft, coEdgerFront and coEdgerBelow), and one coVertex neighboring node (coVertex), in FIG. 11. Pieces of planar identification information of these seven neighboring nodes are recorded in sequence as: coPlanarLeftPlaneMode, coPlanarFrontPlaneMode, coPlanarBelowPlaneMode, coEdgerLeftPlanarMode, coEdgerFrontPlanarMode, coEdgerBelowPlanarMode, and coVertexPlanarMode. Pieces of planar position information of these seven neighboring nodes are recorded in sequence as: coPlanarLeftPlanePos, coPlanarFrontPlanePos, coPlanarBelowPlanePos, coEdgerLeftPlanePos, coEdgerFrontPlanePos, coEdgerBelowPlanePos, and coVertexPlanePos.

For example, the AND operation is performed on coPlanarLeftPlaneMode and the first preset value to obtain a second value 1, the AND operation is performed on coPlanarFrontPlaneMode and the first preset value to obtain a second value 2, the AND operation is performed on coPlanarBelowPlaneMode and the first preset value to obtain a second value 3, the AND operation is performed on coEdgerLeftPlanarMode and the first preset value to obtain a second value 4, the AND operation is performed on coEdgerFrontPlanarMode and the first preset value to obtain a second value 5, the AND operation is performed on coEdgerBelowPlanarMode and the first preset value to obtain a second value 6, and the AND operation is performed on coVertexPlanarMode and the first preset value to obtain a second value 7. In this case, these seven second values occupy 7 bits in total, so the number of left shifted bits corresponding to the seven second values may be determined. It is assumed that the number of left shifted bits corresponding to the second value 1 is 6, the number of left shifted bits corresponding to the second value 2 is 5, the number of left shifted bits corresponding to the second value 3 is 4, the number of left shifted bits corresponding to the second value 4 is 3, the number of left shifted bits corresponding to the second value 5 is 2, the number of left shifted bits corresponding to the second value 6 is 1, and the number of left shifted bits corresponding to the second value 7 is 0.

In this way, a weighting factor corresponding to each second value may be determined based on the number of left shifted bits corresponding to each second value. For example, the number of left shifted bits corresponding to a second value is m, so $2^m$ is determined as a weighting factor corresponding to the second value. In this way, it may be determined that a weighting factor corresponding to the second value 1 is $2^6$, a weighting factor corresponding to the second value 2 is $2^5$, a weighting factor corresponding to the second value 3 is $2^4$, a weighting factor corresponding to the second value 4 is

$2^3$, a weighting factor corresponding to the second value 5 is $2^2$, a weighting factor corresponding to the second value 6 is $2^1$, and a weighting factor corresponding to the second value 7 is $2^0$.

Next, the second values are weighted based on the weighting factors of the second values, to obtain the first context information corresponding to the i-th coordinate axis. It can be understood that the above weighting of the second values may be understood as concatenating of the second values, which is, placing each second value on corresponding bits to obtain the first context information corresponding to the i-th coordinate axis.

In an example, in a case where the decoding side performs the AND operation on the planar identification information of the N neighboring nodes and the first preset value corresponding to the i-th coordinate axis, and then performs weighting to obtain the first context information corresponding to the i-th coordinate axis, the decoding side performs calculation to obtain the first context information Ctx1 through a method shown in the following codes:

```
Const int mask = 1 << axisIdx (axisIdx = 0(x), 1(y), 2(z))
Ctx1 = !!(coPlanarLeftPlanarMode & mask) << 6|
       !!(coPlanarFrontPlanarMode & mask) << 5|
       !!(coPlanarBelowPlanarMode & mask) << 4|
       !!(coEdgerLeftPlanarMode & mask) << 3|
       !!(coEdgerFrontPlanarMode & mask) << 2|
       !!(coEdgerBelowPlanarMode & mask) << 1|
    !!(coVertexPlanarMode & mask)
```

In an example, in a case where the decoding side performs the AND operation on the planar position information of the N neighboring nodes and the first preset value corresponding to the i-th coordinate axis, and then performs weighting to obtain the first context information corresponding to the i-th coordinate axis, the decoding side performs calculation to obtain the first context information Ctx1 through a method shown in the following codes:

```
Const int mask = 1 << axisIdx (axisIdx = 0(x), 1(y), 2(z))
Ctx1 = !!(coPlanarLeftPlanePos & mask) << 6|
       !!(coPlanarFrontlanePos & mask) << 5|
       !!(coPlanarBelowPlanePos & mask) << 4|
       !!(coEdgerLeftPlanePos & mask) << 3|
       !!(coEdgerFrontPlanePos & mask) << 2|
       !!(coEdgerBelowPlanePos & mask) << 1|


    !!(coVertexPlanePos & mask)
```

In an example, in a case where the decoding side performs the AND operation on both the planar identification information and the planar position information of the N neighboring nodes and the first preset value corresponding to the i-th coordinate axis, and then performs weighting to obtain the first context information corresponding to the i-th coordinate axis, the decoding side performs calculation to obtain the first context information Ctx1 through a method shown in the following codes:

```
Const int mask = 1 << axisIdx (axisIdx = 0(x), 1(y), 2(z))
Ctx1 = !!(coPlanarLeftPlanarMode & mask) << 13|
       !!(coPlanarFrontPlanarMode & mask) << 12|
       !!(coPlanarBelowPlanarMode & mask) << 11|
       !!(coEdgerLeftPlanarMode & mask) << 10|
       !!(coEdgerFrontPlanarMode & mask) << 9|
       !!(coEdgerBelowPlanarMode & mask) << 8|
       !!(coVertexPlanarMode & mask) << 7|
       !!(coPlanarLeftPlanePos & mask) << 6|
       !!(coPlanarFrontlanePos & mask) << 5|
       !!(coPlanarBelowPlanePos & mask) << 4|
       !!(coEdgerLeftPlanePos & mask) << 3|
       !!(coEdgerFrontPlanePos & mask) << 2|
       !!(coEdgerBelowPlanePos & mask) << 1|
    !!(coVertexPlanePos & mask)
```

The specific process in which the decoding side determines the first context information corresponding to the i-th coordinate axis based on the planar structure information of the N neighboring nodes is introduced above. It will be noted that in addition to determining the first context information corresponding to the i-th coordinate axis based on the above manners, the decoding side may determine the first context information corresponding to the i-th coordinate axis in other manners.

The specific process of determining the second context information corresponding to the i-th coordinate axis based on the planar structure information of the N neighboring nodes in S102-B1 will be introduced below.

It will be noted that in the embodiments of the present application, the specific manner in which the decoding side determines the second context information corresponding to the i-th coordinate axis based on the planar structure information of the N neighboring nodes includes but is not limited to types as follows.

Manner 1: the decoding side determines the second context information corresponding to the i-th coordinate axis based on the planar structure information of some neighboring nodes in the N neighboring nodes.

For example, the decoding side determines the second context information corresponding to the i-th coordinate axis based on planar structure information of Q neighboring nodes that are coedge and/or coVertex with the current node in the N neighboring nodes, where Q is a positive integer.

The planar structure information of the Q neighboring nodes includes planar identification information and/or planar position information of the Q neighboring nodes. That is, the decoding side determines the second context information corresponding to the i-th coordinate axis based on the planar identification information of the P coplanar neighboring nodes. Alternatively, the decoding side determines the second context information corresponding to the i-th coordinate axis based on the planar position information of the Q neighboring nodes. Alternatively, the decoding side determines the second context information corresponding to the i-th coordinate axis based on the planar identification information and the planar position information of the Q neighboring nodes.

The specific manner in which the decoding side determines the second context information corresponding to the i-th coordinate axis based on the planar structure information of the Q neighboring nodes that are coedge and/or coVertex with the current node in the N neighboring nodes is not limited in the embodiments of the present application.

In a possible implementation, for any one neighboring node in the Q neighboring nodes, the decoding side performs an AND operation on planar structure information of the neighboring node and a first preset value corresponding to the i-th coordinate axis, to obtain a first value corresponding to the neighboring node, and then weights first values corresponding to the P neighboring nodes to obtain the second context information corresponding to the i-th coordinate axis. It will be noted that different coordinate axes correspond to different first preset values, and the specific value of the first preset value corresponding to each coordinate axis is not limited in the embodiments of the present application.

For example, the first preset value corresponding to the X coordinate axis is 0, the first preset value corresponding to the Y coordinate axis is 1, and the first preset value corresponding to the Z coordinate axis is 2.

As can be seen from the above, the planar structure information of the neighboring node includes the planar identification information and/or the planar position information. Therefore, in some embodiments, the above of performing, by the decoding side, the AND operation on the planar structure information of the neighboring node and the first preset value corresponding to the i-th coordinate axis, to obtain the first value corresponding to the neighboring node, includes: performing, by the decoding side, the AND operation on the planar identification information and/or the planar position information of the neighboring node and the first preset value corresponding to the i-th coordinate axis, to obtain the first value corresponding to the neighboring node. That is, the decoding side performs the AND operation on the planar identification information of the Q neighboring nodes and the first preset value corresponding to the i-th coordinate axis, and then performs weighting to obtain the second context information corresponding to the i-th coordinate axis. Alternatively, the decoding side performs the AND operation on the planar position information of the Q neighboring nodes and the first preset value corresponding to the i-th coordinate axis, and then performs weighting to obtain the second context information corresponding to the i-th coordinate axis. Alternatively, the decoding side performs the AND operation on both the planar identification information and the planar position information of the Q neighboring nodes and the first preset value corresponding to the i-th coordinate axis, and then performs weighting to obtain the second context information corresponding to the i-th coordinate axis.

The specific manner of weighting the first values corresponding to the Q neighboring nodes to obtain the second context information corresponding to the i-th coordinate axis is not limited in the embodiments of the present application,

In some embodiments, weighting factors of the first values corresponding to the Q neighboring nodes are preset values, so that the first values corresponding to the Q neighboring nodes may be weighted based on a weighting factor of a first value corresponding to each neighboring node in the Q neighboring nodes, to obtain the second context information corresponding to the i-th coordinate axis.

In some embodiments, weighting the first values corresponding to the Q neighboring nodes to obtain the second context information corresponding to the i-th coordinate axis includes the following steps C1 and C2, where

in step C1, the number of left shifted bits corresponding to each first value is determined, and a weighting factor corresponding to the first value is determined based on the number of left shifted bits; and
in step C2, the first values corresponding to the Q neighboring nodes are weighted based on weighting factors of the first values, to obtain the second context information corresponding to the i-th coordinate axis.

By way of example, it is assumed that the Q neighboring nodes that are coedge or coVertex with the current node in the N neighboring nodes are three coedge neighboring nodes (coEdgerLeft, coEdgerFront and coEdgerBelow), and one neighboring node (coVertex) that is coVertex with the current node, in FIG. 11. Pieces of planar identification information of these four neighboring nodes are recorded in sequence as: coEdgerLeftPlaneMode, coEdgerFrontPlaneMode, coEdgerBelowPlaneMode, and coVertexPlaneMode. Pieces of planar position information of these four neighboring nodes are recorded in sequence as: coEdgerLeftPlanePos, coEdgerFrontPlanePos, coEdgerBelowPlanePos, and coVertexPlanePos.

For example, the AND operation is performed on coEdgerLeftPlaneMode and the first preset value to obtain a first value 1, the AND operation is performed on coEdgerFrontPlaneMode and the first preset value to obtain a first value 2, the AND operation is performed on coEdgerBelowPlaneMode and the first preset value to obtain a first value 3, the AND operation is performed on coVertexPlaneMode and the first preset value to obtain a first value 4, the AND operation is performed on coEdgerLeftPlanePos and the first preset value to obtain a first value 5, the AND operation is performed on coEdgerFrontPlanePos and the first preset value to obtain a first value 6, the AND operation is performed on coEdgerBelowPlanePos and the first preset value to obtain a first value 7, and the AND operation is performed on coVertexPlanePos and the first preset value to obtain a first value 8. In this case, these eight first values occupy 8 bits in total, so the number of left shifted bits corresponding to these eight first values may be determined. It is assumed that the number of left shifted bits corresponding to the first value 1 is 7, the number of left shifted bits corresponding to the first value 2 is 6, the number of left shifted bits corresponding to the first value 3 is 5, the number of left shifted bits corresponding to the first value 4 is 4, the number of left shifted bits corresponding to the first value 5 is 3, the number of left shifted bits corresponding to the first value 6 is 2, the number of left shifted bits corresponding to the first value 7 is 1, and the number of left shifted bits corresponding to the first value 8 is 0.

In this way, a weighting factor corresponding to each first value may be determined based on the number of left shifted bits corresponding to each first value. For example, the number of left shifted bits corresponding to a first value is m, so $2^m$ is determined as a weighting factor corresponding to the first value. In this way, it may be determined that a weighting factor corresponding to the first value 1 is $2^7$, a weighting factor corresponding to the first value 2 is $2^6$, a weighting factor corresponding to the first value 3 is $2^5$, a weighting factor corresponding to the first value 4 is $2^4$, a weighting factor corresponding to the first value 5 is $2^3$, a weighting factor corresponding to the first value 6 is $2^2$, a weighting factor corresponding to the first value 7 is $2^1$, and a weighting factor corresponding to the first value 8 is $2^0$.

Next, the first values are weighted based on the weighting factors of the first values, to obtain the second context information corresponding to the i-th coordinate axis. It can be understood that the above weighting of the first values may be understood as concatenating of the first values, which is, placing each first value on corresponding bits to obtain the second context information corresponding to the i-th coordinate axis.

In an example, in a case where the decoding side performs the AND operation on the planar identification information of the Q neighboring nodes and the first preset value corresponding to the i-th coordinate axis, and then performs weighting to obtain the second context information corresponding to the i-th coordinate axis, the decoding side performs calculation to obtain the second context information Ctx2 through a method shown in the following codes:

```
Const int mask = 1 << axisIdx (axisIdx = 0(x), 1(y), 2(z))
Ctx2 = !!(coEdgerFrontPlaneMode & mask) << 3|
       !!(coEdgerFrontPlaneMode & mask) << 2|
       !!(coEdgerBelowPlaneMode & mask) << 1|
       !!(coVertexPlaneMode & mask)
```

In an example, in a case where the decoding side performs the AND operation on the planar position information of the Q neighboring nodes and the first preset value corresponding to the i-th coordinate axis, and then performs weighting to obtain the second context information corresponding to the i-th coordinate axis, the decoding side performs calculation to obtain the second context information Ctx2 through a method shown in the following codes:

```
Const int mask = 1 << axisIdx (axisIdx = 0(x), 1(y), 2(z))
Ctx2 = !!(coEdgerFrontPlanePos & mask) << 3|
       !!(coEdgerFrontPlanePos & mask) << 2|
       !!(coEdgerBelowPlanePos & mask) << 1|
       !!(coVertexPlanePos & mask)
```

In an example, in a case where the decoding side performs the AND operation on both the planar identification information and the planar position information of the Q neighboring nodes and the first preset value corresponding to the i-th coordinate axis, and then performs weighting to obtain the second context information corresponding to the i-th coordinate axis, the decoding side performs calculation to obtain the second context information Ctx2 through a method shown in the following codes:

```
Const int mask =1 << axisIdx (axisIdx = 0(x), 1(y), 2(z))
Ctx2 = !!(coEdgerLeftPlanePos & mask) << 7|
        !!(coEdgerFrontPlanePos & mask) << 6|
        !!(coEdgerBelowPlanePos & mask) << 5|
        !!(coVertexPlanePos& mask) << 4|
        !!(coEdgerFrontPlaneMode & mask) << 3|
        !!(coEdgerFrontPlaneMode & mask) << 2|
        !!(coEdgerBelowPlaneMode & mask) << 1|
        !!(coVertexPlaneMode & mask)
```

The specific process in which the decoding side determines the second context information corresponding to the i-th coordinate axis based on the planar structure information of the Q neighboring nodes that are coedge and/or coVertex with the current node in the N neighboring nodes is introduced above.

Alternatively, in some embodiments, the decoding side may determine the second context information corresponding to the i-th coordinate axis based on planar structure information of at least one neighboring node that is coedge with the current node in the N neighboring nodes.

Alternatively, in some embodiments, the decoding side may determine the second context information corresponding to the i-th coordinate axis based on planar structure information of at least one neighboring node that is coVertex with the current node in the N neighboring nodes.

Alternatively, in some embodiments, the decoding side may determine the second context information corresponding to the i-th coordinate axis based on planar structure information of at least one neighboring node that is coplanar with the current node in the N neighboring nodes.

Alternatively, in some embodiments, the decoding side may determine the second context information corresponding to the i-th coordinate axis based on planar structure information of one or more neighboring nodes that are coplanar and coedge with the current node in the N neighboring nodes.

Alternatively, in some embodiments, the decoding side may determine the second context information corresponding to the i-th coordinate axis based on planar structure information of one or more neighboring nodes that are coplanar and coVertex with the current node in the N neighboring nodes.

The specific process in which the decoding side determines the second context information corresponding to the i-th coordinate axis based on the planar structure information of some neighboring nodes in the N neighboring nodes is introduced above.

Manner 2, the decoding side determines the second context information corresponding to the i-th coordinate axis based on second planar position information of the N neighboring nodes.

The second planar structure information includes planar identification information and/or planar position information of the neighboring node. That is, the decoding side determines the second context information corresponding to the i-th coordinate axis based on the planar identification information of the N neighboring nodes. Alternatively, the decoding side determines the second context information corresponding to the i-th coordinate axis based on the planar position information of the N neighboring nodes. Alternatively, the decoding side determines the second context information corresponding to the i-th coordinate axis based on the planar position information and the planar identification information of the N neighboring nodes.

The specific manner in which the decoding side determines the second context information corresponding to the i-th coordinate axis based on the first planar position information of the N neighboring nodes is not limited in the embodiments of the present application.

In a possible implementation, for any one neighboring node in the N neighboring nodes, the decoding side performs an AND operation on second planar position information of the neighboring node and a first preset value corresponding to the i-th coordinate axis, to obtain a third value corresponding to the neighboring node, and then the decoding side weights third values corresponding to the N neighboring nodes, to obtain the second context information corresponding to the i-th coordinate axis. It will be noted that different coordinate axes correspond to different first preset values, and the specific value of the first preset value corresponding to each coordinate axis is not limited in the embodiments of the present application.

For example, the first preset value corresponding to the X coordinate axis is 0, the first preset value corresponding to the Y coordinate axis is 1, and the first preset value corresponding to the Z coordinate axis is 2.

As can be seen from the above, the planar structure information of the neighboring node includes the planar identification information and/or the planar position information. Therefore, in some embodiments, the above performing, by the decoding side, the AND operation on the second planar structure information of the neighboring node and the first preset value corresponding to the i-th coordinate axis, to obtain the third value corresponding to the neighboring node, includes: performing, by the decoding side, the AND operation on the planar identification information and/or the planar position information of the N neighboring nodes and the first preset value corresponding to the i-th coordinate axis, to obtain the third value corresponding to the neighboring node. That is, the decoding side performs the AND operation on the planar identification information of the N neighboring nodes and the first preset value corresponding to the i-th coordinate axis, and then performs weighting to obtain the second context information corresponding to the i-th coordinate axis. Alternatively, the decoding side performs the AND operation on the planar position information of the N neighboring nodes and the first preset value corresponding to the i-th coordinate axis, and then performs weighting to obtain the second context information corresponding to the i-th coordinate axis. Alternatively, the decoding side performs the AND operation on both the planar identification information and the planar position information of the N neighboring nodes and the first preset value corresponding to the i-th coordinate axis, and then performs weighting to obtain the second context information corresponding to the i-th coordinate axis.

The specific manner of weighting the third values corresponding to the N neighboring nodes to obtain the second context information corresponding to the i-th coordinate axis is not limited in the embodiments of the present application.

In some embodiments, weighting factors of the third values corresponding to the N neighboring nodes are preset values, so that the third values corresponding to the N neighboring nodes may be weighted based on a weighting factor of a third value corresponding to each neighboring node in the N neighboring nodes, to obtain the second context information corresponding to the i-th coordinate axis.

In some embodiments, weighting the third values corresponding to the N neighboring nodes to obtain the second context information corresponding to the i-th coordinate axis includes the following steps D1 and D2, where

in step D1, the number of left shifted bits corresponding to each third value is determined, and a weighting factor corresponding to the third value is determined based on the number of left shifted bits; and

in step D2, the third values corresponding to the N neighboring nodes are weighted based on weighting factors of the third values, to obtain the second context information corresponding to the i-th coordinate axis.

By way of example, the N neighboring nodes include three coplanar neighboring nodes (coPlanarLeft, coPlanarFrontPlane and coPlanarBelow), three coedge neighboring nodes (coEdgerLeft, coEdgerFront and coEdger-Below), and one coVertex neighboring node (coVertex), in FIG. 11. Pieces of planar identification information of these seven neighboring nodes are recorded in sequence as: coPlanarLeftPlaneMode, coPlanarFrontPlaneMode, coPlanar-BelowPlaneMode, coEdgerLeftPlanarMode, coEdgerFrontPlanarMode, coEdgerBelowPlanarMode, and coVertexPlanarMode. Pieces of planar position information of these seven neighboring nodes are recorded in sequence as: coPlanarLeftPlanePos, coPlanarFrontPlanePos, coPlanarBelowPlanePos, coEdgerLeftPlanePos, coEdgerFrontPlane-Pos, coEdgerBelowPlanePos, and coVertexPlanePos.

For example, the AND operation is performed on coPlanarLeftPlaneMode and the first preset value to obtain a third value 1, the AND operation is performed on coPlanarFrontPlaneMode and the first preset value to obtain a third value 2, the AND operation is performed on coPlanarBelowPlaneMode and the first preset value to obtain a third value 3, the AND operation is performed on coEdgerLeftPlanarMode and the first preset value to obtain a third value 4, the AND operation is performed on coEdgerFrontPlanarMode and the first preset value to obtain a third value 5, the AND operation is performed on coEdgerBelowPlanarMode and the first preset value to obtain a third value 6, and the AND operation is performed on coVertexPlanarMode and the first preset value to obtain a third value 7. In this case, these seven third values occupy 7 bits in total, so the number of left shifted bits corresponding to these 7 third values may be determined. It is assumed that the number of left shifted bits corresponding to the third value 1 is 6, the number of left shifted bits corresponding to the third value 2 is 5, the number of left shifted bits corresponding to the third value 3 is 4, the number of left shifted bits corresponding to the third value 4 is 3, the number of left shifted bits corresponding to the third value 5 is 2, the number of left shifted bits corresponding to the third value 6 is 1, and the number of left shifted bits corresponding to the third value 7 is 0.

In this way, a weighting factor corresponding to each third value may be determined based on the number of left shifted bits corresponding to each third value. For example, the number of left shifted bits corresponding to a third value is m, so $2^m$ is determined as a weighting factor corresponding to the third value. In this way, it may be determined that a weighting factor corresponding to the third value 1 is $2^6$, a weighting factor corresponding to the third value 2 is $2^5$, a weighting factor corresponding to the third value 3 is $2^4$, a weighting factor corresponding to the third value 4 is $2^3$, a weighting factor corresponding to the third value 5 is $2^2$, a weighting factor corresponding to the third value 6 is $2^1$, and a weighting factor corresponding to the third value 7 is $2^0$.

Next, the third values are weighted based on the weighting factors of the third values, to obtain the second context information corresponding to the i-th coordinate axis. It can be understood that the above weighting of the third values may be understood as concatenating of the third values, which is, placing each third value on corresponding bits to obtain the second context information corresponding to the i-th coordinate axis.

In an example, in a case where the decoding side performs the AND operation on the planar identification information of the N neighboring nodes and the first preset value corresponding to the i-th coordinate axis, and then performs weighting to obtain the second context information corresponding to the i-th coordinate axis, the decoding side performs calculation to obtain the second context information Ctx2 through a method shown in the following codes:

```
Const int mask = 1 << axisIdx (axisIdx = 0(x), 1(y), 2(z))
Ctx2 = !!(coPlanarLeftPlanarMode & mask) << 6|
        !!(coPlanarFrontPlanarMode & mask) << 5|
        !!(coPlanarBelowPlanarMode & mask) << 4|
        !!(coEdgerLeftPlanarMode & mask) << 3|
        !!(coEdgerFrontPlanarMode & mask) << 2|
        !!(coEdgerBelowPlanarMode & mask) << 1|
    !!(coVertexPlanarMode & mask)
```

In an example, in a case where the decoding side performs the AND operation on the planar position information of the N neighboring nodes and the first preset value corresponding to the i-th coordinate axis, and then performs weighting to obtain the second context information corresponding to the i-th coordinate axis, the decoding side performs calculation to obtain the second context information Ctx2 through a method shown in the following codes:

```
Const int mask = 1 << axisIdx (axisIdx = 0(x), 1(y), 2(z))
Ctx2 = !!(coPlanarLeftPlanePos & mask) << 6|
        !!(coPlanarFrontlanePos & mask) << 5|
        !!(coPlanarBelowPlanePos & mask) << 4|
        !!(coEdgerLeftPlanePos & mask) << 3|
        !!(coEdgerFrontPlanePos & mask) << 2|
        !!(coEdgerBelowPlanePos & mask) << 1|
    !!(coVertexPlanePos & mask)
```

In an example, in a case where the decoding side performs the AND operation on both the planar identification information and the planar position information of the N neighboring nodes and the first preset value corresponding to the i-th coordinate axis, and then performs weighting to obtain the second context information corresponding to the i-th coordinate axis, the decoding side performs calculation to obtain the second context information Ctx2 through a method shown in the following codes:

```
Const int mask = 1 << axisIdx (axisIdx = 0(x), 1(y), 2(z))
Ctx2 = !!(coPlanarLeftPlanarMode & mask) << 13|
        !!(coPlanarFrontPlanarMode & mask) << 12|
        !!(coPlanarBelowPlanarMode & mask) << 11|
        !!(coEdgerLeftPlanarMode & mask) << 10|
        !!(coEdgerFrontPlanarMode & mask) << 9|
        !!(coEdgerBelowPlanarMode & mask) << 8|
    !!(coVertexPlanarMode & mask) << 7|
        !!(coPlanarLeftPlanePos & mask) << 6|
        !!(coPlanarFrontlanePos & mask) << 5|
        !!(coPlanarBelowPlanePos & mask) << 4|
        !!(coEdgerLeftPlanePos & mask) << 3|
        !!(coEdgerFrontPlanePos & mask) << 2|
        !!(coEdgerBelowPlanePos & mask) << 1|
    !!(coVertexPlanePos & mask)
```

The specific process in which the decoding side determines the second context information corresponding to the i-th coordinate axis based on the planar structure information of the N neighboring nodes is introduced above. It will be noted that in addition to determining the second context information corresponding to the i-th coordinate axis based on the above manners, the decoding side may determine the second context information corresponding to the i-th coordinate axis in other manners.

It will be noted that the first context information corresponding to the i-th coordinate axis and the second context information corresponding to the i-th coordinate axis that are obtained by the decoding side are different, that is, the manner used by the decoding side to determine the first context information corresponding to the i-th coordinate axis is different from the manner used to determine the second context information corresponding to the i-th coordinate axis, and thus obtained first context information and the second context information are also different.

After determining the first context information and/or the second context information corresponding to the i-th coordinate axis based on the planar structure information of the N neighboring nodes through the above manners, the decoding side performs the above step S102-B2 to perform the predictive decoding on the planar position information of the current node on the i-th coordinate axis based on the first context information and/or the second context information corresponding to the i-th coordinate axis.

The specific manner of performing the predictive decoding on the planar position information of the current node on the i-th coordinate axis based on the first context information and/or the second context information corresponding to the i-th coordinate axis in S102-B2 is not limited in the embodiments of the present application.

In some embodiments, the decoding side performs the predictive decoding on the planar position information of the current node on the i-th coordinate axis based on only the first context information and/or the second context information corresponding to the i-th coordinate axis. For example, the decoding side determines a context model index based on the first context information and/or the second context information corresponding to the i-th coordinate axis, and then selects a context model from multiple preset context models based on the context model index, and then performs, by using the context model, the predictive decoding on the planar position information of the current node on the i-th coordinate axis.

In some embodiments, the above S102-B2 includes a step S102-B21, where
in S102-B21, the predictive decoding is performed on the planar position information of the current node on the i-th coordinate axis based on the first context information and/or the second context information corresponding to the i-th coordinate axis, and preset context information.

In these embodiments, in performing the predictive decoding on the planar position information of the current node on the i-th coordinate axis by the decoding side, in addition to the first context information and/or the second context information corresponding to the i-th coordinate axis, reference context information includes other preset context information.

The specific content of the preset context information is not limited in the embodiments of the present application, which may be determined depending on actual needs.

In a possible implementation, the preset context information includes at least one of the following four pieces of context information:

1, the planar position information of the current node being obtained as three elements through predicting by using the occupancy information of the neighboring node: predicted to be a low plane, predicted to be a high plane, or unpredictable;

2, a spatial distance between a node at the same partition depth and the same coordinate as the current node and the current node being "close" or "far";

3, a planar position of a node at the same partition depth and the same coordinate as the current node if it is a plane; or

4, a coordinate dimension i being equal to 0, 1 or 2.

In these embodiments, in a case where performing the predictive decoding on the planar position information of the current node on the i-th coordinate axis, the decoding side determines the first context information and/or the second context information corresponding to the i-th coordinate axis based on the planar structure information of the N neighboring nodes of the current node, and then performs the predictive decoding on the planar position information of the current node on the i-th coordinate axis based on the first context information and/or the second context information corresponding to the i-th coordinate axis, and the preset context information. As can be seen, in the embodiments of the present application, in performing the predictive decoding on the planar position information of the current node by the decoding side, not only preset prior information (i.e., the preset context information) is considered, but also the planar structure information of the neighboring node (i.e., the first context information and/or the second context information) is considered, so as to improve the effect of the predictive decoding of the planar position information of the current node and to improve the decoding efficiency of the point cloud.

The specific process in which the decoding side performs the predictive decoding on the planar position information of the current node on the i-th coordinate axis based on the first context information and/or the second context information corresponding to the i-th coordinate axis, and the preset context information is not limited in the embodiments of the present application.

In some embodiments, the above S102-B21 includes the following steps S102-B211 and S102-B212, where

in S102-B211, a target context model is determined based on the first context information and/or the second context information corresponding to the i-th coordinate axis, and the preset context information; and

in S102-B212, the predictive decoding is performed on the planar position information of the current node on the i-th coordinate axis based on the target context model.

In these embodiments, the decoding side determines a context model based on the first context information and/or the second context information corresponding to the i-th coordinate axis and the preset context information. For the sake of ease of description, the context model is noted as the target context model. Next, the decoding side performs the predictive decoding on the planar position information of the current node on the i-th coordinate axis by using the target context model.

The specific process in which the decoding side determines the target context model based on the first context information and/or the second context information corresponding to the i-th coordinate axis, and the preset context information will be introduced below.

In some embodiments, the decoding side determines an index of the target context model based on the first context information and/or the second context information corresponding to the i-th coordinate axis, and the preset context information, then selects the target context model from the preset multiple context models based on the index of the target context model, and then performs the predictive decoding on the planar position information of the current node on the i-th coordinate axis by using the target context model.

In these embodiments, multiple context models are set for the planar position information. The specific number of the context models corresponding to the planar position information is not limited in the embodiments of the present application, as long as it is greater than 1. That is, in the embodiments of the present application, an optimal context model is selected from at least two context models to perform the predictive decoding on the planar position information of the current node on the i-th coordinate axis.

For example, the planar position information corresponds to multiple context models as shown in Table 2:

Table 2

| Index | Context Model |
|-------|---------------|
| 0 | Context Model A |
| 1 | Context Model B |
| ... | ... |

In this way, the decoding side determines the index of the target context model based on the first context information and/or the second context information corresponding to the i-th coordinate axis, and the preset context information. Next, based on the index of the target context model, the target context model is selected from the context models corresponding to Table 2 to perform the predictive decoding on the planar position information of the current node on the i-th coordinate axis.

In some embodiments, the above S102-B211 includes the following steps S102-B2111 and S102-B2112, where

in S102-B2111, the first context information and/or the second context information corresponding to the i-th coordinate axis, and the preset context information are classified into primary information and minor information; and
in S102-B2112, the target context model is determined based on the primary information of the current node and a part or all of the minor information of the current node.

As can be seen from the above, it is assumed that the context information of the planar position information includes the first context information and the second context information corresponding to the i-th coordinate axis, and the above four pieces of preset context information, the final context of the planar position is as follows:

1, the planar position information of the current node being obtained as three elements through predicting by using the occupancy information of the neighboring node: predicted to be a low plane, predicted to be a high plane, or unpredictable;
2, a spatial distance between a node at the same partition depth and the same coordinate as the current node and the current node being "close" or "far";
3, a planar position of a node at the same partition depth and the same coordinate as the current node if it is a plane;
4, a coordinate dimension i being equal to 0, 1 or 2;
5, Ctx1: planar structure information of three coplanar neighboring nodes; and
6, Ctx2: planar structure information of three coedge neighboring nodes and one coVertex neighboring node.

It is assumed that the decoding side determines the first context information corresponding to the i-th coordinate axis based on planar identification information and planar position information of three neighboring nodes that are coplanar with the current node in the N neighboring nodes, it may be obtained that Ctx1 includes $2^6 = 64$ contexts. It is assumed that the decoding side determines the second context information corresponding to the i-th coordinate axis based on planar identification information and planar position information of three neighboring nodes that are coedge with the current node and one neighboring node that is coVertex with the current node in the N neighboring nodes, it may be obtained that Ctx2 includes $2^8 = 256$ contexts. In this way, the decoding side may obtain $3 \times 2 \times 2 \times 3 \times 64 \times 256 = 589,824$ contexts based on the first context information and the second context information corresponding to the i-th coordinate axis and the above four pieces of preset context information. The memory space occupied by so many contexts is very large. In light of this, in performing the predictive decoding on the planar position information of the node in the embodiments of the present application, the advanced coding technology Dynamic-OUBF of GPCC is introduced into an algorithm to reduce the number of contexts used for decoding the planar position information, for example, to reduce the number of the contexts for the planar position to $3 \times 16 = 48$.

Specifically, in the embodiments of the present application, as shown in FIG, 12, the decoding side classifies the first context information and/or the second context information corresponding to the i-th coordinate axis determined above, and the preset context information into the primary information and the minor information, and then determines the target context model based on the primary information of the current node and a part or all of the minor information of the current node. It will be noted that in the embodiments of the present application, the target context model is mainly determined based on the primary information and a part of the minor information of the current node, so as to reduce the number of contexts, which may not only reduce the memory occupancy of the contexts, but also improve the predictive decoding efficiency of the planar position information of the node.

The specific manner of classifying the first context information and/or the second context information corresponding to the i-th coordinate axis, and the preset context information into the primary information and the minor information is not limited in the embodiments of the present application.

In an example, the decoding side classifies the following contents into the primary information: the first context information corresponding to the i-th coordinate axis, a spatial distance between a node at the same partition depth and the same coordinate as the current node and the current node being "close" or "far", and a planar position of a node at the same partition depth and the same coordinate as the current node if it is a plane; the decoding side classifies the following contents into the minor information: the second context information corresponding to the i-th coordinate axis, and the planar position information of the current node being obtained as three elements through predicting by using the occupancy information of the neighboring node: predicted to be a low plane, predicted to be a high plane, or unpredictable; and a coordinate dimension i being equal to 0, 1 or 2, as an index itself, is not classified into the primary information or the minor information.

In another example, the decoding side may classify the first context information and the second context information corresponding to the i-th coordinate axis into the primary information of the current node, and classify at least one of the four pieces of preset context information into the minor information of the current node.

In another example, the decoding side may classify the second context information corresponding to the i-th coordinate axis into the primary information of the current node, and classify the first context information corresponding to the i-th coordinate axis into the minor information of the current node. Optionally, based on this, at least one of the above four pieces of preset context information may be classified into the primary information of the current node, and the remaining preset context information may be classified into the minor information of the current node.

In another example, the decoding side may classify the first context information and the second context information corresponding to the i-th coordinate axis into the minor information of the current node, and classify at least one of the above four pieces of preset context information into the minor information of the current node.

It will be noted that the manners in which the decoding side classifies the first context information and/or the second context information corresponding to the i-th coordinate axis, and the preset context information into the primary information and the minor information includes but is not limited to the manner illustrated above. The decoding side may adopt other manners to classify the first context information and/or the second context information corresponding to the i-th coordinate axis, and the preset context information into the primary information and the minor information.

Based on the above steps, after classifying the first context information and/or the second context information corresponding to the i-th coordinate axis, and the preset context information into the primary information and the minor information, the decoding side performs the above step S102-B2112 to determine the target context model based on the primary information of the current node and a part or all of the minor information of the current node.

The specific manner in which the decoding side determines the target context model based on the primary information of the current node and a part or all of the minor information of the current node is not limited in the embodiments of the present application.

In some embodiments, the decoding side determines an index based on the primary information of the current node and a part of the minor information of the current node, and determines an index of the target context model based on the index; and then determines the target context model from multiple preset context models based on the index of the target context model.

In some embodiments, the above S102-B2112 includes the following steps S102-B21121 to S102-B21124, where

in S102-B21121, the primary information of the current node and the minor information of the current node are converted into binary representation;

in S102-B21122, the number of right shifted bits of the minor information corresponding to the current node is determined, and first minor information is selected from binary represented minor information of the current node based on the number of right shifted bits of the minor information corresponding to the current node, where an initial value of the number of right shifted bits of the minor information is the total number of bits of the binary minor information;

in S102-B21123, a first index is determined based on binary represented primary information of the current node and the first minor information, and an index of the target context model is obtained from a preset context model index cache based on the first index; and

in S102-B21124, the target context model is obtained based on the index of the target context model.

In these embodiments, based on the above steps, the decoding side classifies the first context information and/or the second context information corresponding to the i-th coordinate axis, and the preset context information into the primary information and the minor information. Next, the decoding side converts the primary information and the minor information of the current node obtained by classification into the binary representation.

By way of example, referring to the above example, in a case where the decoding side classifies the following contents into the primary information: the first context information corresponding to the i-th coordinate axis, a spatial distance between a node at the same partition depth and the same coordinate as the current node and the current node being "close" or "far", and a planar position of a node at the same partition depth and the same coordinate as the current node if it is a plane, it is assumed that the first context information Ctx1 corresponding to the i-th coordinate axis includes $2^6$ = 64 contexts, which require 6 bits for representation when converted into binary representation; the spatial distance between a node at the same partition depth and the same coordinate as the current node and the current node being "close" or "far" include 2 contexts, which require 1 bit for representation when converted into binary representation; and the planar position of the node at the same partition depth and the same coordinate as the current node includes 2 contexts, which require 1 bit for representation when converted into binary representation. Therefore, in this example, 6 + 1 + 1 = 8 bits are required for representation in a case where the primary information of the current node is converted into binary representation.

Similarly, in a case where the decoding side classifies the following contents into the minor information: the second context information corresponding to the i-th coordinate axis, and the planar position information of the current node being obtained as three elements through predicting by using the occupancy information of the neighboring node: predicted to be a low plane, predicted to be a high plane, or unpredictable, it is assumed that the second context information Ctx2 corresponding to the i-th coordinate axis includes $2^8$ = 256 contexts, which require 8 bits for representation when converted into binary representation; and the context information: the planar position information of the current node being obtained as three elements through predicting by using the occupancy information of the neighboring node: predicted to be a low plane, predicted to be a high plane, or unpredictable, includes 3 contexts, which require 2 bits for representation when converted into binary representation. Therefore, in this example, 8 + 2 = 10 bits are required for representation in a case where the minor information of the current node is converted into binary representation.

The specific process of converting the primary information of the current node and the minor information of the current node into binary representation is described above with examples. It will be noted that the manner of classifying the primary information and the minor information of the current node includes but is not limited to the above example. In a case where the primary information and the minor information of the current node further include other context information, the primary information and the minor information of the current node may be converted into binary representation by referring to the method illustrated in the above example.

After converting the primary information and minor information of the current node into binary representation, the decoding side determines the number of right shifted bits of the minor information corresponding to the current node, and then selects the first minor information from binary represented minor information of the current node based on the number of right shifted bits of the minor information. In the embodiments of the present application, the number of right shifted bits of the minor information corresponding to the current node may be understood as being used to select which minor information from the minor information of the current node to perform the predictive decoding on the planar position information of the current node.

Determining the number of right shifted bits of the minor information corresponding to the current node will be introduced below.

The specific manner of determining the number of right shifted bits of the minor information corresponding to the current node is not limited in the embodiments of the present application.

In some embodiments, the number of right shifted bits of the minor information corresponding to the current node is a preset value. For example, for nodes in a point cloud octree, a preset number of nodes corresponds to the number of right shifted bits of the minor information, so that the number of right shifted bits of the minor information corresponding to the current node may be determined. For example, the closer the node is to the root node of the octree, the larger the number of right shifted bits of the minor information corresponding to the node is. Optionally, an initial value of the number of right shifted bits of the minor information is the total number of bits of the binary minor information. For example, in a case where the current node is the root node of the octree, the number of right shifted bits of the minor information corresponding to the current node is the above 10 bits.

In some embodiments, determining the number of right shifted bits of the minor information corresponding to the current node in the above S102-B21122 includes the following steps S102-B211221 and S102-B211222, where

in S102-B211221, the number of right shifted bits of the minor information corresponding to a last layer of a current minor information partitioning tree is determined, where the minor information partitioning tree is obtained by performing binary tree partitioning on the minor information starting from a highest bit of the minor information; and
in S102-B211222, the number of right shifted bits of the minor information corresponding to the last layer is determined as the number of right shifted bits of the minor information corresponding to the current node.

The partitioning process of the minor information will be introduced below.

Specifically, in decoding the current point cloud by the decoding side, in an entire Dynamic-OUBF initialization process, it is assumed that the integer representation of the primary information is ct1 and the integer representation of the minor information is ct2, a context model index cache ContextBuffer is initialized, with the size of ContextBuffer being $ct1 \times ct2$. For example, referring to the above example, it is assumed that the primary information includes 8 bits and the minor information includes 10 bits, a context model index cache ContextBuffer with the size of $8 \times 10$ may be determined, that is, the context model index cache ContextBuffer holds $8 \times 10$ context model indexes. In addition, an initial probability of a context for each state is set to 127 (i.e., 0.5).

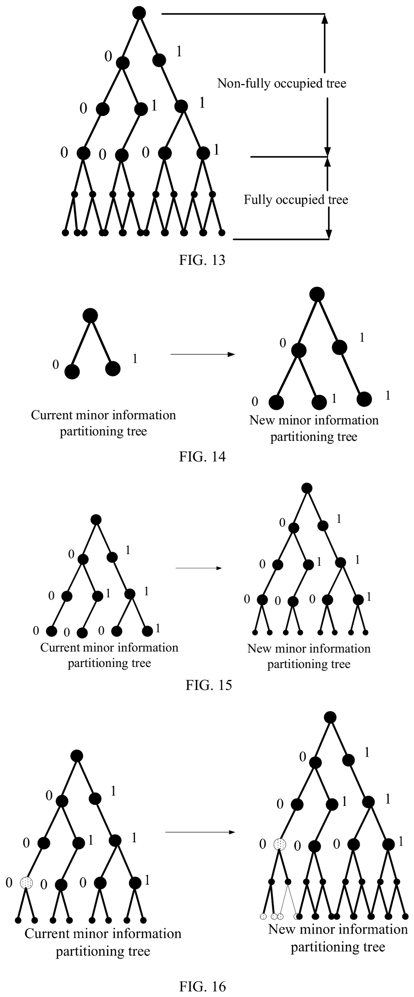

In some embodiments, the process of recovering the accuracy of the minor information is shown in FIG. 13.

First, the context of the entire minor information is represented in a binary format, and then the minor information is partitioned into a binary tree starting from the highest bit. As shown in FIG. 13, above a certain level, it is a non-full binary tree, that is, the partitioning is performed according to a situation of the minor information itself, but when the partitioning is performed below MinDepth (currently set to 3), the accuracy of the minor information will be fully restored. The partitioning of the minor information will be introduced in detail below.

For example, a countBuffer counter with the size of $ct1 \times (ct2 \gg MinDepth)$ is initialized to 0.

In addition, a KDown is initialized to represent the accuracy (i.e., the number of right shifted bits) of the minor information corresponding to each first index (state). An initial value of the number of right shifted bits of the minor information is the total number of bits of the binary minor information, that is, the highest accuracy of the minor information. For example, if the minor information is 10 bits, the initial value of the number of right shifted bits of the minor information is 10 bits.

Furthermore, a table of CountTimeTh is initialized to control a highest number of times a first index (state) of each layer of the minor information partitioning tree occurs. In a case where the number of times one first index (state) occurs exceeds the limit of this layer, a low bit accuracy of the minor information will be restored, and the number of times the current first index (state) occurs will be reset to zero. Context probability of a new first index (state) obtained by recovering inherits the probability of its parent node.

Specifically, as shown in FIG. 13, for a first node 1 in the point cloud, in a case where predictive decoding is performed on planar position information of node 1, first context information and/or second context information corresponding to node 1 are determined first based on the above steps, and the first context information and/or the second context information corresponding to node 1, and the preset context information are classified into primary information and minor information, for example, into primary information of 8 bits and minor information of 10 bits. Next, the number of right shifted bits of the minor information corresponding to node 1 is obtained in KDown. Since node 1 is the first point of the point cloud, the number of right shifted bits of the minor information corresponding to node 1 is an initial value of the number of right shifted bits of the minor information, for example, 10 bits. In this way, in a case where the decoding side determines that the number of right shifted bits of the minor information corresponding to node 1 is 10 bits, the minor information of node 1 is right shifted by 10 bits. Since the minor information of node 1 is 10 bits in total, after right shifting, the first minor information of node 1 is 0 bits. Next, the decoding side determines a first index 1 based on binary represented primary information and first minor information of node 1, obtains an index of a target context model corresponding to node 1 from the context model index cache ContextBuffer based on the first index 1, then obtains the target context model corresponding to node 1 based on the index of the target context model corresponding to node 1, and then performs the predictive decoding on the planar position information of node 1 on the i-th coordinate axis by using the target context model corresponding to this node. Moreover, the number of times the first index 1 occurs in countBuffer is increased by 1, and the number of times the first index 1 occurs in countBuffer is compared with a first preset threshold corresponding to a first layer of minor information partitioning tree stored in CountTimeTh. If the number of times the first index 1 occurs in countBuffer is less than the first preset threshold corresponding to the first layer of the minor information partitioning tree stored in CountTimeTh, the minor information partitioning tree is not partitioned.

Next, for node 2 in the point cloud, in a case where predictive decoding is performed on planar position information of node 2, first context information and/or second context information corresponding to node 2 are determined first based on the above steps, and the first context information and/or the second context information corresponding to node 2, and the preset context information are classified into primary information and minor information, for example, into primary information of 8 bits and minor information of 10 bits. Next, the number of right shifted bits of the minor information corresponding to node 2 is obtained in KDown. Since the minor information partitioning tree is not partitioned, the number of right shifted bits of the minor information corresponding to node 2 is equal to the number of right shifted bits of the minor information corresponding to node 1, which is the initial value of the number of right shifted bit number of the minor information, for example, 10 bits. In this way, in a case where the decoding side determines that the number of right shifted bits of the minor information corresponding to node 2 is 10 bits, the minor information of node 2 is right shifted by 10 bits. Since the minor information of node 2 is 10 bits in total, after right shifting, the first minor information of node 2 is 0 bits. Next the decoding side determines a first index 2 based on binary represented primary information and first minor information of node 2, obtains an index of a target context model corresponding to node 2 from the context model index cache ContextBuffer based on the first index 2, then obtains the target context model corresponding to node 2 based on the index of the target context model corresponding to node 2, and then performs the predictive decoding on the planar position information of node 2 on the i-th coordinate axis by using the target context model corresponding to the node. Moreover, the number of times the first index 2 occurs in countBuffer is increased by 1, and the number of times the first index 2 occurs in countBuffer is compared with the first preset threshold corresponding to the first layer of the minor information partitioning tree stored in CountTimeTh. If the number of times the first index 2 occurs in countBuffer is less than the first preset threshold corresponding to the first layer of the minor information partitioning tree stored in CountTimeTh, the minor information partitioning tree is not partitioned.

It is assumed that the first index 1 is the same as the first index 2, and the first preset threshold corresponding to the first layer of the minor information partitioning tree stored in CountTimeTh is 2, it may be determined that the number of times the first index 1 occurs in countBuffer is equal to the first preset threshold corresponding to the first layer of the minor information partitioning tree stored in CountTimeTh. In this case, the minor information partitioning tree will be partitioned, specifically, the first layer of the minor information partitioning tree is partitioned into a non-full binary tree, to obtain a new minor information partitioning tree. In this case, the new minor information partitioning tree includes 2 layers, a first layer includes 1 node, and a second layer includes 2 nodes.

Moreover, the number of right shifted bits of the minor information in KDown is updated to obtain the number of right shifted bits of the minor information corresponding to the second layer of the minor information partitioning tree. For example, the number of right shifted bits of the minor information corresponding to the second layer is obtained by subtracting one from the number of right shifted bits of the minor information corresponding to the first layer, that is, 10 bits -1 bit = 9 bits.

Furthermore, countBuffer is set to 0.

Referring to the above steps, the accuracy of the minor information is gradually restored, and the minor information partitioning tree illustrated in FIG. 13 may be obtained.

In this way, in a case where predictive decoding is performed on planar position information of a current node in the point cloud on the i-th coordinate axis, first context information and/or second context information corresponding to the current node are determined based on the above steps, and the first context information and/or the second context information corresponding to the current node, and the preset context information are classified into primary information and minor information, for example, into primary information of 8 bits and minor information of 10 bits. Next, the number of right shifted bits of the minor information corresponding to a last layer of a current minor information partitioning tree is determined. As can be seen from the above, the number of right shifted bits of the minor information corresponding to the last layer of the current minor information partitioning tree (i.e., a current layer obtained by a most recent partitioning) is stored in KDown. Therefore, the decoding side may obtain the number of right shifted bits of the minor information corresponding to the last layer of the current minor information partitioning tree from KDown, and then determine the number of right shifted bits of the minor information corresponding to the last layer as the number of right shifted bits of the minor information corresponding to the current node.

Next, the decoding side selects first minor information from binary represented minor information of the current node based on the number of right shifted bits of the minor information corresponding to the current node.

For example, the number of right shifted bits of the minor information corresponding to the current node is n, so the decoding side may right shift the binary represented minor information of the current node by (n + 1) bits or by (n - 1) bits, to obtain the first minor information.

As another example, the binary represented minor information of the current node is right shifted by the number of right shifted bits of the minor information corresponding to the current node, to obtain the first minor information. It is assumed that the number of right shifted bits of the minor information corresponding to the current node is n, the binary represented minor information of the current node is right shifted by n bits, to obtain the first minor information.

Next, the decoding side determines the first index based on the binary represented primary information of the current node and the first minor information.

The specific manner in which the decoding side determines the first index based on the binary represented primary information of the current node and the first minor information is not limited in the embodiments of the present application.

In an example, the decoding side obtains the first index corresponding to the current node based on the following formula (12):

$$state = ct1 \times (ct2 \gg shift) \qquad (12)$$

Here, state is the first index corresponding to the current node, ct1 is the binary represented primary information of the current node, ct2 is the binary represented minor information of the current node, shift is the number of right shifted bits of the minor information corresponding to the current node, and ct2 » shift is the first minor information corresponding to the current node.

After obtaining the first index corresponding to the current node based on the above formula (12), the decoding side obtains a context model index corresponding to the first index from the preset context model index cache, and then records the context model index as the index of the target context model. In this way, the decoding side selects the target context model from multiple preset context models based on the index of the target context model, and then performs the predictive decoding on the planar position information of the current node on the i-th coordinate axis by using the target context model.

In some embodiments, after determining the index of the target context model based on the above steps, the decoding side updates the index of the target context model in the context model index cache, to increase the probability of the index of the target context model.

In the embodiments of the present application, the decoding side performs, in addition to determining the target context model based on the above steps, steps of data updating and partitioning the minor information partitioning tree.

The specific manner of partitioning the minor information partitioning tree is not limited in the embodiments of the present application.

In an example, each layer in the minor information partitioning tree is partitioned into a non-full binary tree.

In another example, each layer in the minor information partitioning tree is partitioned into a full binary tree.

In yet another example, some layers in the minor information partitioning tree are partitioned into non-full binary trees, and some layers are partitioned into full binary trees.

The partitioning process of the minor information partitioning tree will be introduced below.

In some embodiments, in a case where the minor information partitioning tree in the embodiments of the present application includes a non-full binary tree layer, the method in the embodiments of the present application further includes the following step 1.

In Step 1, in a case where a last layer of the current minor information partitioning tree is a non-full binary tree layer, and the number of times the first index occurs in the last layer is greater than or equal to a first preset threshold corresponding to the last layer, binary tree partitioning is performed on the last layer, to obtain a new minor information partitioning tree.

Based on the above steps, the decoding side determines the first index corresponding to the current node and the index of the target context model corresponding to the current node, and further determines whether to continue to partition the last layer of the current minor information partitioning tree. Specifically, in a case where the last layer of the current minor information partitioning tree is a non-full binary tree, the decoding side determines whether the number of times the first index corresponding to the current node occurs in the last layer (i.e., the latest layer) of the current minor information partitioning tree is greater than or equal to the first preset threshold corresponding to the last layer. In response to determining that the number of times the first index corresponding to the current node occurs in the last layer (i.e., the latest layer) of the current minor information partitioning tree is greater than or equal to the first preset threshold corresponding to the last layer, the decoding side performs binary tree partitioning on the last layer of the current minor information partitioning tree, to obtain the new minor information partitioning tree.

For example, the decoding side performs determination based on the following formula (13), to further partition the minor information:

$$countBuffer[state] \gg= CountTimeTh[shift] \qquad (13)$$

Here, countBuffer[state] represents the number of times the first index (state) corresponding to the current node occurs in the last layer (i.e., the latest layer) of the current minor information partitioning tree, and CountTimeTh[shift] is the first preset threshold corresponding to the last layer of the current minor information partitioning tree.

In the embodiments of the present application, the decoding side performs the binary tree partitioning on the last layer of the current minor information partitioning tree, to obtain the new minor information partitioning tree, which includes at least two cases as follows.

Case 1: in a case where the last layer of the current minor information partitioning tree is not a last non-full binary tree layer of the minor information partitioning tree, non-full binary tree partitioning is performed on the last layer, to obtain the new minor information partitioning tree.

By way of example, as shown in FIG. 13, it is assumed that the minor information partitioning tree includes 4 non-full binary tree layers and 2 full binary tree layers. As shown in FIG. 14, it is assumed that the last layer of the current minor information partitioning tree is a second layer, that is, the minor information is partitioned to the second layer at the current moment. In this case, the second layer is not the last non-full binary tree layer, because the last non-full binary tree layer is a fourth layer. Therefore, in partitioning the second layer, non-full binary tree partitioning is performed on the second layer to obtain a new minor information partitioning tree. The new minor information partitioning tree includes three layers, and the three layers are all non-full binary tree layers.

Case 2: in a case where the last layer of the current minor information partitioning tree is the last non-full binary tree layer of the minor information partitioning tree, full binary tree partitioning is performed on the last layer, to obtain the new minor information partitioning tree.

By way of example, as shown in FIG. 13, it is assumed that the minor information partitioning tree includes 4 non-full binary tree layers and 2 full binary tree layers. As shown in FIG. 15, it is assumed that the last layer of the current minor information partitioning tree is a fourth layer, that is, the minor information is partitioned to the fourth layer at the current moment. In this case, the fourth layer is the last non-full binary tree layer. Therefore, in partitioning the fourth layer, full binary tree partitioning is performed on the fourth layer to obtain a new minor information partitioning tree. The new minor information partitioning tree includes five layers, and in the five layers, the first four layers are non-full binary tree layers, and the last layer is a full binary tree layer.

The embodiments of the present application include, in addition to performing the full binary tree partitioning on the last layer of the current minor information partitioning tree to obtain the new minor information partitioning tree, a step of updating the number of right shifted bits of the minor information, that is, subtracting one from the number of right shifted bits of the minor information corresponding to the current node to obtain a new number of right shifted bits of the minor information.

For example, the decoding side obtains the new number of right shifted bits of the minor information based on the following formula (14):

$$\text{newShift} = \text{shift } -1 \qquad (14)$$

Here, shift is the number of right shifted bits of the minor information corresponding to the current node, and newShift is the new number of right shifted bits of the minor information.

Correspondingly, a calculation formula of stateUpdate after updating is shown in formula (15):

$$\text{stateUpdate} = \text{ct1} \times (\text{ct2} \gg \text{newShift}) \qquad (15)$$

Correspondingly, the context probability corresponding to stateUpdate after updating inherits a context of its parent node, as shown in formula (16):

$$\text{ContextBuffer[stateUpdate]} = \text{ContextBuffer[state]} \qquad (16)$$

Correspondingly, the accuracy of the minor information corresponding to the current state is lowered, that is, KDown[state]--.

Finally, the decoding side resets the number of times the current state occurs to 0, that is, countBuffer[state]=0.

In some embodiments, in a case where the minor information partitioning tree in the embodiments of the present application includes a full binary tree layer, the method in the embodiments of the present application further includes the following steps 21 to 24, where

in step 21, in response to that a last layer of a current minor information partitioning tree is a full binary tree layer, the number of right shifted bits of the minor information and a first preset threshold corresponding to a last non-full binary tree layer of the current minor information partitioning tree are determined;

in step 22, second minor information is selected from the binary represented minor information of the current node based on the number of right shifted bits of the minor information corresponding to the last non-full binary tree layer;

in step 23, a second index is determined based on the binary represented primary information of the current node and the second minor information; and

in step 24, in response to that the number of times the second index occurs in the last layer is greater than or equal to the first preset threshold corresponding to the last non-full binary tree layer, full binary tree partitioning is performed on the last layer, to obtain a new minor information partitioning tree.

In these embodiments, in a case where the minor information partitioning tree includes non-full binary tree layers and full binary tree layers, whether to continue partitioning a full binary tree layer is determined based on the number of right shifted bits of the minor information and the first preset threshold corresponding to the last non-full binary tree layer of the minor information partitioning tree. Specifically, in a case where the last layer of the current minor information partitioning tree is a full binary tree layer, the number of right shifted bits of the minor information and the first preset threshold corresponding to the last non-full binary tree layer of the current minor information partitioning tree are determined, and based on the number of right shifted bits of the minor information corresponding to the last non-full binary tree layer, the second minor information is selected from binary represented minor information of the current node. For example, the binary represented minor information of the current node is right shifted by the number of right shifted bits of the minor information corresponding to the last non-full binary tree layer, to obtain the second minor information corresponding to the current node. Next, the second index is determined based on the binary represented primary information of the current node and the second minor information. For example, the binary represented primary information of the current node and the second minor information are multiplied to determine the second index.

Next, whether the number of times the second index occurs in the last layer of the current minor information partitioning tree is greater than or equal to the first preset threshold corresponding to the last non-full binary tree layer is determined based on the following formula (17):

$$countBuffer[state]1 >= CountTimeTh[shift]1 \qquad (17)$$

Here, countBuffer[state]1 is the number of times the second index occurs in the last layer of the current minor information partitioning tree, and CountTimeTh[shift]1 is the first preset threshold corresponding to the last non-full binary tree layer.

In a case where the number of times the second index occurs in the last layer of the current minor information partitioning tree is greater than or equal to the first preset threshold corresponding to the last non-full binary tree layer, full binary tree partitioning is performed on the last layer, to obtain the new minor information partitioning tree.

In this case, the decoding side updates the number of right shifted bits of the minor information, that is, the number of right shifted bits of the minor information corresponding to the current node is subtracted by one, to obtain the new number of right shifted bits of the minor information.

For example, the decoding side obtains the new number of right shifted bits of the minor information based on the above formula (14).

Correspondingly, the calculation formula of stateUpdate after updating is shown in the above formula (15).

Correspondingly, the context probability corresponding to stateUpdate after updating inherits the context from the last non-full binary tree layer.

Correspondingly, the accuracy of the minor information corresponding to the current state is lowered, that is, KDown[state]--.

Finally, the decoding side resets the number of times the current state occurs to 0, that is, countBuffer[state] = 0.

By way of example, as shown in FIG. 13, it is assumed that the minor information partitioning tree includes 4 non-full binary tree layers and 2 full binary tree layers. As shown in FIG. 16, it is assumed that the last layer of the current minor information partitioning tree is a fifth layer, that is, the minor information is partitioned to the fifth layer at the current moment. In this case, the fifth layer is a full binary tree layer. Therefore, in determining whether to partition the fifth layer, the decoding side first determines the number of right shifted bits of the minor information (which is a) and the first preset threshold (which is b) corresponding to the last non-full binary tree layer of the current minor information partitioning tree, that is, the fourth layer. Next, the decoding side right shifts the binary represented minor information of the current node by the number of right shifted bits (which is a) corresponding to the last non-full binary tree layer, to obtain the second minor information. Next, the decoding side performs multiplication on the binary represented primary information of the current node and the second minor information, to obtain the second index corresponding to the current node, then determines whether the number of times the second index occurs in the current last layer (i.e., the fifth layer) is greater than or equal to the first preset threshold (which is b) corresponding to the last non-full binary tree layer. In a case where the number of times the second index occurs in the fifth layer is greater than or equal to the first preset threshold (which is b) corresponding to the last non-full binary tree layer, full binary tree partitioning is performed on the fifth layer, to obtain the new minor information partitioning tree.

In summary, the entire processing flow of Dynamic-OUBF may be that: Dynamic-OUBF serves as a processor, with the primary information and the minor information of the current node as input, and finally an index (context) of the target context model between 0 and 255 is output.

In some embodiments, in order to further reduce the number of pieces of context information, obtaining the target context model based on the index of the target context model in the above S102-B21124 includes the following steps S102-B211241 and S102-B211242, where

in S102-B211241, the index of the target context model is quantized, to obtain a quantized model index; and

in S102-B211242, the target context model is obtained based on the quantized model index.

In these embodiments, in order to further reduce the number of pieces of context information, the index of the target context model determined above is quantized, to obtain the quantized model index, and then the target context model is obtained from multiple preset context models based on the quantized model index.

The specific manner of quantizing the index of the target context model, and obtaining the quantized model index is not limited in the embodiments of the present application.

In a possible implementation, the index of the target context model is right shifted by n bits, to obtain the quantized model index, where n is a positive integer.

The specific value of n is not limited in the embodiments of the present application.

In an example, n is equal to 2 bits (n = 2 bits). In this case, if the number of contexts is 256 without quantization, right shifting the index of the context model by 2 bits may reduce the total number of contexts to 256 / 4 = 64, which may greatly reduce the number of contexts and improve the decoding efficiency of the point cloud.

In an example, n is equal to 4 bits (n = 4 bits). In this case, if the number of contexts is 256 without quantization, right shifting the index of the context model by 4 bits may reduce the total number of contexts to 256 / 16 = 16. In this way, $3 \times 16 = 48$ context models may be obtained for three coordinate axes, which greatly reduces the number of contexts and improves the decoding efficiency of the point cloud.

The planar structure information of the neighboring nodes is considered in the embodiments of the present application to perform the predictive encoding on the planar position information of the current node, which may improve the geometric encoding efficiency of the point cloud.

The following is an example of a lossless test environment of a geometric lossless attribute, where the number of bits per pixel (bit per pixel, BPP) serves as a performance indicator to measure the compression efficiency. In a case where BPP is less than 100%, it means that the encoding and decoding efficiency is improved compared to the existing encoding and decoding solutions.

Table 3

| Test sequence | Geometric Information_bpp |
| --- | --- |
| egyptian_mask_vox12 | 97.124% |
| facade_00009_vox12 | 96.340% |
| facade_00015_vox14 | 96.740% |
| frog_00067_vox12 | 95.015% |
| house_without_roof_00057_vox12 | 96.777% |
| shiva_00035_vox12 | 97.763% |
| ulb_unicorn_vox13 | 99.722% |
| arco_valentino_dense_vox12 | 99.866% |
| arco_valentino_dense_vox20 | 99.941% |
| egyptian_mask_vox20 | 99.071% |
| facade_00009_vox20 | 99.154% |
| facade_00015_vox20 | 98.989% |
| facade_00064_vox14 | 96.055% |
| facade_00064_vox20 | 99.070% |
| frog_00067_vox20 | 98.862% |

(continued)

| Test sequence | Geometric Information_bpp |
|---|---|
| head_00039_vox20 | 99.230% |
| house_without_roof_00057_vox20 | 98.800% |
| landscape_00014_vox20 | 98.710% |
| palazzo_carignano_dense_vox14 | 99.879% |
| palazzo_carignano_dense_vox20 | 99.947% |
| shiva_00035_vox20 | 99.345% |
| stanford_area_2_vox16 | 99.590% |
| stanford_area_2_vox20 | 99.610% |
| staue_klimt_vox12 | 95.984% |
| staue_klimt_vox20 | 98.876% |
| ulb_unicorn_hires_vox15 | 98.008% |
| ulb_unicorn_hires_vox20 | 99.327% |
| ulb_unicorn_vox20 | 99.907% |
| citytunnel_q1mm | 99.066% |
| overpass_q1mm | 98.886% |
| tollbooth_q1mm | 98.665% |

As shown in Table 3, after experimental testing, it can be seen that the point cloud decoding method provided in the embodiments of the present application may improve the compression performance of a single sequence by up to 5% on a selected test sequence set (frog_00067_vox12).

Under the lossless geometric attribute, the performance of the point cloud decoding method provided in the embodiments of the present application is shown in Table 4:

Table 4

| CW_ai | Lossless geometry, Lossless attributes[all intra] | | | |
|---|---|---|---|---|
| | bpip ratio[%] | | | |
| | Geometry | Color | Reflectance | Total |
| Cat1-A average | 97.9% | 100.0% | | 99.3% |
| Cat1-B average | 99.2% | 100.0% | | 99.5% |
| Cat3-fused average | 98.9% | 100.0% | 100.0% | 99.4% |
| Cat3-frame average | 100.0% | | 100.0% | 100.0% |
| Overall average | 99.1% | 100.0% | 100.0% | 99.5% |
| Avg.Enc.Time[%] | #NUM! | | | |
| Avg.Dec.Time[%] | #NUM! | | | |

As shown in Table 3, in a case where the point cloud decoding method in the embodiments of the present application is applied to Cat1-A test set, the decoding performance of the geometric information is improved by 2.1%.

Under the lossy geometric attribute, the performance of the point cloud decoding method provided in the embodiments of the present application is shown in Table 5:

Table 5:

| C2_ai | Lossy geometry, Lossy attributes[all intra] | | | | | |
| | End-to-End BD-AttrRate[%] | | | | Geom BD-TotGeomRate[%] | |
| | Luma | Chroma Cb | Chroma Cr | Reflectance | D1 | D2 |
| Cat1-A average | 0.0% | 0.0% | 0.0% | | -0.2% | -0.2% |
| Cat1-B average | 0.0% | 0.0% | 0.0% | | -1.0% | -1.0% |
| Cat3-fused average | 0.0% | 0.0% | 0.0% | 0.0% | -1.3% | -1.3% |
| Cat3-frame average | | | | 0.0% | 0.0% | 0.0% |
| Overall average | 0.0% | 0.0% | 0.0% | 0.0% | -0.5% | -0.5% |
| Avg.Enc.Time[%] | #NUM! | | | | | |
| Avg.Dec.Time[%] | #NUM! | | | | | |

As shown in Table 4, in a case where the point cloud decoding method in the embodiments of the present application is applied to Cat3-frame test set, the decoding performance of the geometric information is improved by 1.3%.

With the plane decoding enabled for all test sequences, the test performance of the present application and the existing TMC13-v19 is shown in Table 6:

Table 6

| CW_ai | Lossless geometry, Lossless attributes[all intra] | | | |
| | bpip ratio[%] | | | |
| | Geometry | Color | Reflectance | Total |
| Cat1-A average | 95.0% | 100.0% | | 98.5% |
| Cat1-B average | 99.2% | 100.0% | | 99.5% |
| Cat3-fused average | 98.9% | 100.0% | 100.0% | 99.4% |
| Cat3-frame average | 100.0% | | 100.0% | 100.0% |
| Overall average | 98.8% | 100.0% | 100.0% | 99.3% |
| Avg.Enc.Time[%] | #NUM! | | | |
| Avg.Dec.Time[%] | #NUM! | | | |

As shown in Table 6, in a case where the point cloud decoding method in the embodiments of the present application is combined with TMC13-v19 and applied to Cat1-A test set, the decoding performance of the geometric information is improved by 5%.

As can be seen from the above, in the embodiments of the present application, in decoding the planar position information of a node, predictive decoding is performed on the planar position information of the current node based on the planar structure information of neighboring nodes, and correlation between the planar structure information between neighboring nodes is taken into account, which may effectively improve the geometric information encoding efficiency of the point cloud. Furthermore, the planar position information of the current node is predicted by using the planar structure information of neighboring nodes coplanar, coedge and coVertex with the current node in the embodiments of the present application, and finally, the context of the planar position is mapped to a preset number (e.g., 48) contexts by using the Dynamic-OUBF technology. In this way, the number of contexts is reduced on the premise of improving the decoding effect of the planar position information of the node, thereby saving memory space used to store context information, and further improving the decoding efficiency of the point cloud.

In the point cloud decoding method provided in the embodiments of the present application, N neighboring nodes of a current node are determined in decoding planar structure information of the current node in a current decoding frame, and predictive decoding is performed on the planar structure information of the current node based on occupancy information of the N neighboring nodes. That is, in performing the predictive decoding on the planar structure information of the current node in the embodiments of the present application, the correlation between the planar structure information of neighboring nodes is taken into account, which may effectively improve the decoding efficiency of the geometric information of the point cloud, thereby improving the predictive decoding performance of the planar structure information, and improve the decoding efficiency and performance of the point cloud.

The above takes the decoding side as an example to introduce the point cloud decoding method provided in the embodiments of the present application in detail. The following will take the encoding side as an example to introduce the point cloud encoding method provided in the embodiments of the present application.

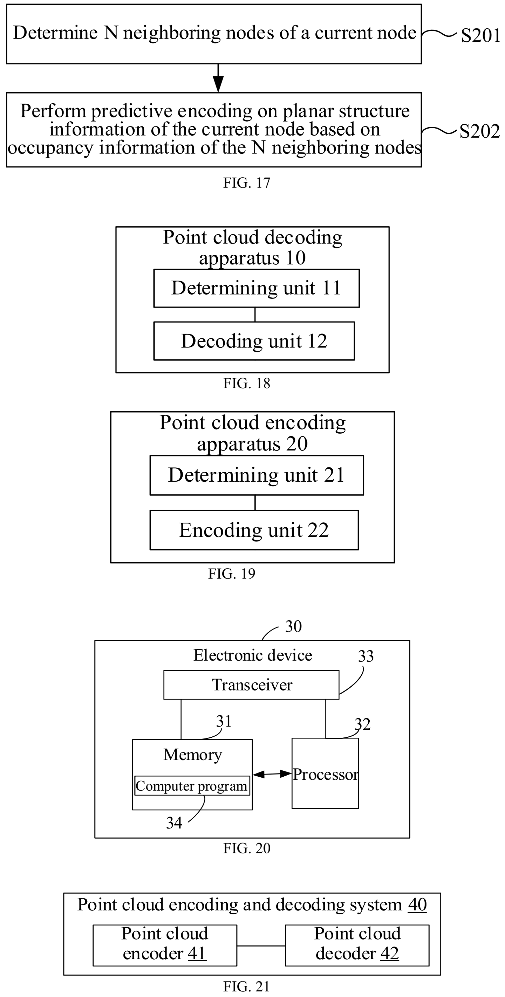

FIG. 17 is a schematic flowchart of the point cloud encoding method provided in the embodiments of the present application. The point cloud encoding method of the embodiments of the present application may be completed by the point cloud encoding device shown in FIG. 3 or FIG. 4A above.

As shown in FIG. 17, the point cloud encoding method of the embodiment of the present application includes the following steps, where

in S201, N neighboring nodes of a current node are determined.

As can be seen from the above, a point cloud includes geometric information and attribute information, and encoding of the point cloud includes geometric encoding and attribute encoding. The embodiments of the present application relate to the geometric encoding of the point cloud.

In some embodiments, the geometric information of the point cloud is also referred to as position information of the point cloud. Therefore, the geometric encoding of the point cloud is also referred to as position encoding of the point cloud.

In an octree-based encoding manner, the encoding side constructs an octree structure of the point cloud based on the geometric information of the point cloud. As shown in FIG. 9, the point cloud is enclosed by a smallest rectangular block, i.e., a bounding box, and octree partitioning is performed on the bounding box first to obtain 8 nodes. The octree partitioning is continued for occupied nodes in these 8 nodes, i.e., the nodes including points, and so on, until the partitioning reaches a voxel level position, for example, until there exist cubes of $1 \times 1 \times 1$. An octree structure of the point cloud obtained by such partitioning manner includes multiple layers of nodes, such as N layers. Occupancy information of each layer is encoded layer by layer in encoding until leaf nodes at the voxel level in the last layer are encoded. That is to say, in the octree encoding, the points in the point cloud are finally partitioned into the leaf nodes at the voxel level in the octree through partitioning the point cloud by the octree, so the encoding of the point cloud may be implemented by encoding the entire octree.

For some relatively flat nodes or nodes with planar characteristics, the encoding efficiency of point cloud geometric information may be further improved by using planar encoding. For example, as shown in FIG. 5A, four occupied child nodes in the current node are all positioned at a low planar position of the current node in the Z coordinate axis direction. In this case, occupancy information of the current node is represented as: 11001100. In this way, in a case where the current node is encoded by using a planar encoding manner, first, an identifier needs to be encoded to represent that the current node is a plane in the Z coordinate axis direction; second, if the current node is a plane in the Z coordinate axis direction, the planar position of the current node needs to be represented; and then only occupancy information of the low planar nodes in the Z coordinate axis direction needs to be encoded (e.g., occupancy information of the four child nodes 0246). Therefore, based on the planar encoding manner, only 6 bits are needed to encode the current node, which may reduce 2 bits of representation compared to the original octree encoding, so as to improve the encoding performance of the point cloud.

As can be seen from the above, in a case where the current node is encoded by using the planar encoding manner, the encoding side needs to perform predictive encoding on planar structure information of the current node.

Currently, the predictive encoding is performed on the planar structure information of the current node based on some prior reference information, such as a spatial distance between a node at the same partition depth and the same coordinate as the current node, and/or a planar position of a node at the same partition depth and the same coordinate as the current node, causing the poor predictive encoding performance of the planar structure information.

In order to solve the above problems, in the embodiments of the present application, the encoding side performs the predictive encoding on a planar structure of the current node based on the occupancy information of the N neighboring nodes of the current node, so as to improve the performance of the predictive encoding and decoding of the planar structure information, and improve the efficiency and performance of the encoding and decoding of the point cloud.

A specific process in which the encoding side determines the N neighboring nodes of the current node will be introduced below.

It will be noted that in the embodiments of the present application, there is no limitation on the specific manner in which the encoding side determines the N neighboring nodes of the current node.

In an example, the N neighboring nodes of the current node include at least one neighboring node of neighboring nodes that are coplanar, coedge, and coVertex with the current node. As shown in FIG. 10, the current node has 6 coplanar nodes, 12 coedge nodes, and 8 coVertex nodes.

In another example, in addition to at least one neighboring node of neighboring nodes that are coplanar, coedge, and coVertex with the current node, the N neighboring nodes of the current node may include other nodes within a range of a preset reference neighborhood, which is not limited in the embodiments.

In a specific embodiment, as shown in FIG. 11, a node shown with thick dashed lines is a current node to be encoded, nodes shown with solid lines are three neighboring nodes coplanar with the current node, nodes shown with dotted lines are three neighboring nodes coedge with the current node, and a node shown with long dashed lines is a neighboring node coVertex with the current node. Since according to an order of point cloud encoding, in a case where the occupancy information of the current node is encoded, seven neighboring nodes (at a lower left front direction) that are coplanar, coedge, and coVertex with the current node may be obtained. Predictive encoding is performed on the planar structure information of the current node by using occupancy information of at least one of these seven neighboring nodes.

In another specific embodiment, the N neighboring nodes of the current node include the seven neighboring nodes in the FIG. 11, namely, the three neighboring nodes coplanar with the current node, the three neighboring nodes coedge with the current node, and the neighboring node coVertex with the current node.

In another specific embodiment, the N neighboring nodes of the current node include neighboring nodes coplanar and coVertex with the current node, for example, the N neighboring nodes of the current node include six neighboring nodes coplanar with the current node and one neighboring node coVertex with the current node.

In another specific embodiment, the N neighboring nodes of the current node include neighboring nodes coedge and coVertex with the current node, for example, the N neighboring nodes of the current node include six neighboring nodes coedge with the current node and one neighboring node coVertex with the current node.

In another specific embodiment, the N neighboring nodes of the current node include neighboring nodes coedge and coplanar with the current node, for example, the N neighboring nodes of the current node include six neighboring nodes coplanar with the current node and six neighboring nodes coedge with the current node.

In another specific embodiment, the N neighboring nodes of the current node include only neighboring nodes coplanar with the current node, or include only neighboring nodes coedge with the current node, or include only neighboring nodes coVertex with the current node.

The embodiments of the present application do not limit the specific manner in which the encoding side determines the N neighboring nodes of the current node.

In S202, predictive encoding is performed on planar structure information of the current node based on occupancy information of the N neighboring nodes.

In the embodiments of the present application, the planar structure information of the current node includes planar identification information of the current node and/or planar position information of the current node.

As can be seen from the above, the planar identification information of the current node is represented by $PlaneMode_i$ (i = 0, 1 or 2), where i = 0 represents the X coordinate axis, i = 1 represents the Y coordinate axis, and i = 2 represents the Z coordinate axis. $PlaneMode_i = 0$ represents that the current node is not a plane in an i-th coordinate axis direction, and $PlaneMode_i = 1$ represents that the current node is a plane in the i-th coordinate axis direction.

If the current node is a plane in the i-th coordinate axis direction, that is, $PlaneMode_i = 1$, the encoding side continues to encode planar position information of the current node on the i-th coordinate axis. For example, $PlanePosition_i$ is used to represent the planar position information of the current node in the i-th coordinate axis direction. For example, $PlanePosition_i = 0$ represents that the current node is a plane in the i-th coordinate axis direction, with the planar position being a low plane. $PlanePosition_i = 1$ represents that the current node is a high plane in the i-th coordinate axis direction.

In the embodiments of the present application, the predictive encoding is performed on the planar structure information of the current node based on the occupancy information of the N neighboring nodes, that is, the predictive encoding is performed on the planar identification information and/or the planar position information of the current node.

For example, predictive encoding is performed on the planar identification information of the current node on the i-th coordinate axis based on the occupancy information of the N neighboring nodes of the current node.

As another example, predictive encoding is performed on the planar position information of the current node on the i-th coordinate axis based on the occupancy information of the N neighboring nodes of the current node.

In the embodiments of the present application, the predictive encoding is performed on the planar structure information of the current node based on the occupancy information of the N neighboring nodes of the current node, which may be understood that the predictive encoding is performed on the planar structure information of the current node with the occupancy information of the N neighboring nodes of the current node serving as context information of the planar structure information of the current node. For example, a context model index is determined based on the N neighboring nodes of the current node, a context model is determined based on the context model index, and the predictive encoding is performed on the planar structure information of the current node based on the context model, for example, the predictive encoding is performed on the planar identification information of the current node based on the context model, or the predictive encoding is performed on the planar position information of the current node based on the context model.

In some embodiments, in a case where the planar structure information of the current node includes the planar position information of the current node, the encoding side performs the predictive encoding on the planar position information of the current node based on the occupancy information of the N neighboring nodes of the current node. In this case, the above S202 includes steps S202-A and S202-B, where

in S202-A, planar structure information of the N neighboring nodes is determined based on the occupancy information of the N neighboring nodes; and

in S202-B, the predictive encoding is performed on the planar position information of the current node based on the planar structure information of the N neighboring nodes.

In these embodiments, in performing the predictive encoding on the planar position information of the current node by using the occupancy information of the N neighboring nodes of the current node, the encoding side first determines the planar structure information of the N neighboring nodes, and then performs the predictive encoding on the planar position information of the current node based on the planar structure information of the N neighboring nodes. For example, a context model index is determined based on the planar structure information of the N neighboring nodes, a context model is determined based on the context model index, and the predictive encoding is performed on the planar position information of the current node based on the context model.

In the embodiments of the present application, for each neighboring node in the N neighboring nodes, a specific process of determining planar structure information of the neighboring node based on occupancy information of the neighboring node is uniform. For the sake of ease of description, any one neighboring node in the N neighboring nodes is taken as an example for explanation.

In some embodiments, the above S202-A includes the following step S202-A1, where

in S202-A1, for any one neighboring node in the N neighboring nodes, at least one of planar identification information or planar position information of the neighboring node is determined based on occupancy information of the neighboring node.

In the embodiments of the present application, the encoding side may determine the planar identification information and/or the planar position information of the neighboring node based on the occupancy information of the neighboring node.

The specific process of determining the planar identification information of the neighboring node based on the occupancy information of the neighboring node will be introduced below.

Specifically, the encoding side determines plane0 and plane1 corresponding to the i-th coordinate axis based on the occupancy information of the neighboring node, and then determines planar identification information corresponding to the neighboring node on the i-th coordinate axis based on plane0 and plane1.

For example, the encoding side determines plane0 corresponding to the neighboring node on each of the X, Y, and Z coordinate axes based on the following codes:

```
uint8_t plane0 = 0;
plane0 |= !!(occupancy & 0x0f) << 0;
plane0 |= !!(occupancy & 0x33) << 1; and
plane0 |= !!(occupancy & 0x55) << 2.
```

Here, occupancy represents the occupancy information of the neighboring node, plane0 |= !!(occupancy & 0x0f) << 0 represents plane0 corresponding to the neighboring node on the X coordinate axis, plane0 |= !!(occupancy & 0x33) << 1 represents plane0 corresponding to the neighboring node on the Y coordinate axis, and plane0 |= !!(occupancy & 0x55) << 2 represents plane0 corresponding to the neighboring node on the Z coordinate axis. 0x0f represents 00001111, and an AND operation is performed on the occupancy information (occupancy) of the neighboring node and 0x0f, to obtain a value of the neighboring node on a low plane of the X coordinate axis as 0. 0x33 represents 00110011, and the AND operation is performed on the occupancy information (occupancy) of the neighboring node and 0x33, to obtain a value of the neighboring node on a low plane of the Y coordinate axis as 0. 0x55 represents 01010101, and the AND operation is performed on the occupancy information (occupancy) of the neighboring node and 0x55, to obtain a value of the neighboring node on a low plane of the Z coordinate axis as 0.

For example, the encoding side determines plane1 corresponding to the neighboring node on each of the X, Y, and Z coordinate axes based on the following codes:

```
uint8_t plane1 = 0;
plane1 |= !!(occupancy & 0xf0) << 0;
plane1 |= !!(occupancy & 0xcc) << 1; and
plane1 |= !!(occupancy & 0xaa) << 2.
```

Here, occupancy represents the occupancy information of the neighboring node, & represents an AND operation, plane1 |= !!(occupancy & 0xf0) << 0 represents plane1 corresponding to the neighboring node on the X coordinate axis, plane1 |= !!(occupancy & 0xcc) << 1 represents plane1 corresponding to the neighboring node on the Y coordinate axis, and plane1 |= !!(occupancy & 0xaa) << 2 represents plane1 corresponding to the neighboring node on the Z coordinate axis. 0xf0 represents 11110000, and the AND operation is performed on the occupancy information (occupancy) of the neighboring node and 0xf0, to obtain a value of the neighboring node on a high plane of the X coordinate axis as 0. 0xcc represents 11001100, and the AND operation is performed on the occupancy information (occupancy) of the neighboring node and 0xcc, to obtain a value of the neighboring node on a high plane on the Y coordinate axis as 0. 0xaa represents 10101010, and the AND operation is performed on the occupancy information (occupancy) of the neighboring node and 0xaa, to obtain a value of the neighboring node on a high plane of the Z coordinate axis as 0.

Based on the above method, the encoding side may determine plane0 and plane1 corresponding to the neighboring node on the i-th coordinate axis, and then determine the planar identification information corresponding to the neighboring node on the i-th coordinate axis based on plane0 and plane1.

For example, for the i-th coordinate axis, an XOR operation may be performed on plane0 and plane1 of the i-th coordinate axis determined above, to determine the planar identification information of the neighboring node on the i-th axis, specifically, only planar if a single plane perpendicular to the axis is occupied.

For example, the encoding side determines the planar identification information of the neighboring node on the i-th axis based on the above formula (10).

The specific process of determining the planar position information of the neighboring node will be introduced below.

In the embodiments of the present application, the encoding side may determine the planar identification information (planarMode) of the neighboring node based on the above method, and then may determine the planar position information of the neighboring node based on the planar identification information (planarMode).

For example, the encoding side determines the planar position information of the neighboring node on the i-th axis based on the above formula (11).

The specific process of determining the planar identification information and the planar position information of the neighboring node on the X coordinate axis is introduced above. The specific process of determining the planar identification information and the planar position information of the neighboring node on the Y coordinate axis and the Z coordinate axis may be referred to the above process of determining the planar identification information and the planar position information of the X coordinate axis, which will not be repeated here.

The encoding side determines planar identification information and/or planar position information of each neighboring node in the N neighboring nodes based on the above steps, and then the encoding side performs predictive encoding on the planar position information of the current node based on the planar identification information and/or the planar position information of each neighboring node in the N neighboring nodes.

The specific manner of performing the predictive encoding on the planar position information of the current node based on the planar structure information of the N neighboring nodes in the above S202-B is not limited in the embodiments of the present application.

In some embodiments, the encoding side determines a context model index based on the planar structure information of the N neighboring nodes, then selects a context model from multiple preset context models based on the context model index, and then performs the predictive encoding on the planar position information of the current node based on the context model.

In some embodiments, the above S202-B includes the following steps, where

in S202-B1, first context information and/or second context information corresponding to the i-th coordinate axis are determined based on the planar structure information of the N neighboring nodes, where the i-th coordinate axis is the X coordinate axis, the Y coordinate axis or the Z coordinate axis; and

in S202-B2, predictive encoding is performed on the planar position information of the current node on the i-th coordinate axis based on the first context information and/or the second context information corresponding to the i-th coordinate axis.

In these embodiments, the encoding side determines at least one of the first context information or the second context information corresponding to the i-th coordinate axis based on the planar structure information of the N neighboring nodes, and then performs the predictive encoding on the planar position information of the current node on the i-th coordinate axis based on the determined first context information and/or the determined second context information. For example, the encoding side determines at least one of first context information or second context information corresponding to the X coordinate axis based on the planar structure information of the N neighboring nodes, and then performs predictive encoding on the planar position information of the current node on the X coordinate axis based on the first context information and/or the second context information corresponding to the X coordinate axis. As another example, the encoding side determines at least one of first context information or second context information corresponding to the Y coordinate axis based on the planar structure information of the N neighboring nodes, and then performs predictive encoding on the planar position information of the current node on the Y coordinate axis based on the first context information and/or the second context information corresponding to the Y coordinate axis. As yet another example, the encoding side determines at least one of first context information or second context information corresponding to the Z coordinate axis based on the planar structure information of the N neighboring nodes, and then performs predictive encoding on the planar position information of the current node on the Z coordinate axis based on the first context information and/or the second context information corresponding to the Z coordinate axis.

The specific process in which the encoding side determines the first context information corresponding to the i-th coordinate axis based on the planar structure information of the N neighboring nodes will be introduced below.

It will be noted that in the embodiments of the present application, the specific manner in which the encoding side determines the first context information corresponding to the i-th coordinate axis based on the planar structure information of the N neighboring nodes includes but is not limited to types as follows.

Manner 1, the encoding side determines the first context information corresponding to the i-th coordinate axis based on planar structure information of some neighboring nodes in the N neighboring nodes.

For example, the encoding side determines the first context information corresponding to the i-th coordinate axis based on planar structure information of P neighboring nodes that are coplanar with the current node in the N neighboring nodes, where P is a positive integer.

The planar structure information of the P neighboring nodes includes planar identification information and/or planar position information of the P neighboring nodes. That is, the encoding side determines the first context information corresponding to the i-th coordinate axis based on the planar identification information of the P coplanar neighboring nodes. Alternatively, the encoding side determines the first context information corresponding to the i-th coordinate axis based on the planar position information of the P coplanar neighboring nodes. Alternatively, the encoding side determines the first context information corresponding to the i-th coordinate axis based on the planar identification information and the planar position information of the P coplanar neighboring nodes.

The specific manner in which the encoding side determines the first context information corresponding to the i-th coordinate axis based on the planar structure information of the P neighboring nodes that are coplanar with the current node in the N neighboring nodes is not limited in the embodiments of the present application.

In a possible implementation, for any one neighboring node in the P neighboring nodes, the encoding side performs an AND operation on planar structure information of the neighboring node and a first preset value corresponding to the i-th coordinate axis, to obtain a first value corresponding to the neighboring node, and then weights first values corresponding to the P neighboring nodes, to obtain the first context information corresponding to the i-th coordinate axis. It will be noted that different coordinate axes correspond to different first preset values, and the specific value of the first preset value corresponding to each coordinate axis is not limited in the embodiments of the present application.

For example, the first preset value corresponding to the X coordinate axis is 0, the first preset value corresponding to the Y coordinate axis is 1, and the first preset value corresponding to the Z coordinate axis is 2.

As can be seen from the above, the planar structure information of the neighboring node includes the planar identification information and/or the planar position information. Therefore, in some embodiments, the above performing, by the encoding side, the AND operation on the planar structure information of the neighboring node and the first preset value corresponding to the i-th coordinate axis, to obtain the first value corresponding to the neighboring node, includes: performing, by the encoding side, the AND operation on the planar identification information and/or the planar position information of the neighboring node and the first preset value corresponding to the i-th coordinate axis, to obtain the first value corresponding to the neighboring node. That is, the encoding side performs the AND operation on the planar identification information of the P coplanar neighboring nodes and the first preset value corresponding to the i-th coordinate axis, and then performs weighting to obtain the first context information corresponding to the i-th coordinate axis. Alternatively, the encoding side performs the AND operation on the planar position information of the P coplanar neighboring nodes and the first preset value corresponding to the i-th coordinate axis, and then performs weighting to obtain the first context information corresponding to the i-th coordinate axis. Alternatively, the encoding side performs the AND operation on both the planar identification information and the planar position information of the P coplanar neighboring nodes and the first preset value corresponding to the i-th coordinate axis, and then performs weighting to obtain the first context information corresponding to the i-th coordinate axis.

By way of example, it is assumed that the P neighboring nodes that are coplanar with the current node in the N neighboring nodes are three coplanar neighboring nodes in FIG. 11, pieces of planar identification information of these three coplanar neighboring nodes are recorded in sequence as: coPlanarLeftPlaneMode, coPlanarFrontPlaneMode, and coPlanarBelowPlaneMode, and pieces of planar position information of these three coplanar neighboring nodes are recorded in sequence as: coPlanarLeftPlanePos, coPlanarFrontPlanePos, and coPlanarBelowPlanePos.

In an example, the encoding side performs the AND operation on the planar identification information of the P coplanar neighboring nodes and the first preset value corresponding to the i-th coordinate axis, and then performs weighting to obtain the first context information Ctx1 corresponding to the i-th coordinate axis.

In an example, the encoding side performs the AND operation on the planar position information of the P coplanar neighboring nodes and the first preset value corresponding to the i-th coordinate axis, and then performs weighting to obtain the first context information Ctx1 corresponding to the i-th coordinate axis.

In an example, the encoding side performs the AND operation on both the planar identification information and the planar position information of the P coplanar neighboring nodes and the first preset value corresponding to the i-th coordinate axis, and then performs weighting to obtain the first context information Ctx1 corresponding to the i-th coordinate axis.

The specific process in which the encoding side determines the first context information corresponding to the i-th coordinate axis based on the planar structure information of the P neighboring nodes that are coplanar with the current node in the N neighboring nodes is introduced above.

Alternatively, in some embodiments, the encoding side may determine the first context information corresponding to the i-th coordinate axis based on planar structure information of neighboring nodes that are coedge with the current node in the N neighboring nodes.

Alternatively, in some embodiments, the encoding side may determine the first context information corresponding to the i-th coordinate axis based on planar structure information of neighboring nodes that are coVertex with the current node in the N neighboring nodes.

Alternatively, in some embodiments, the encoding side may determine the first context information corresponding to the i-th coordinate axis based on planar structure information of one or more neighboring nodes that are coplanar and coedge with the current node in the N neighboring nodes.

Alternatively, in some embodiments, the encoding side may determine the first context information corresponding to the i-th coordinate axis based on planar structure information of one or more neighboring nodes that are coplanar and coVertex with the current node in the N neighboring nodes.

Alternatively, in some embodiments, the encoding side may determine the first context information corresponding to the i-th coordinate axis based on planar structure information of one or more of neighboring nodes that are coedge and coVertex with the current node in the N neighboring nodes.

The specific process in which the encoding side determines the first context information corresponding to the i-th coordinate axis based on the planar structure information of some neighboring nodes in the N neighboring nodes is introduced above.

Manner 2, the encoding side determines the first context information corresponding to the i-th coordinate axis based on first planar position information of the N neighboring nodes.

The first planar structure information includes planar identification information and/or planar position information of the neighboring node. That is, the encoding side determines the first context information corresponding to the i-th coordinate axis based on the planar identification information of the N neighboring nodes. Alternatively, the encoding side determines the first context information corresponding to the i-th coordinate axis based on the planar position information of the N neighboring nodes. Alternatively, the encoding side determines the first context information corresponding to the i-th coordinate axis based on the planar position information and planar identification information of the N neighboring nodes.

The specific manner in which the encoding side determines the first context information corresponding to the i-th coordinate axis based on the first planar position information of the N neighboring nodes is not limited in the embodiments of the present application.

In a possible implementation, for any one neighboring node in the N neighboring nodes, the encoding side performs an AND operation on first planar position information of the neighboring node and a first preset value corresponding to the i-th coordinate axis, to obtain a second value corresponding to the neighboring node, and then the encoding side weights second values corresponding to the N neighboring nodes, to obtain the first context information corresponding to the i-th coordinate axis. It will be noted that different coordinate axes correspond to different first preset values, and the specific value of the first preset value corresponding to each coordinate axis is not limited in the embodiments of the present application.

For example, the first preset value corresponding to the X coordinate axis is 0, the first preset value corresponding to the Y coordinate axis is 1, and the first preset value corresponding to the Z coordinate axis is 2.

As can be seen from the above, the planar structure information of the neighboring node includes the planar identification information and/or the planar position information. Therefore, in some embodiments, the above performing, by the encoding side, the AND operation on the first planar structure information of the neighboring node and the first preset value corresponding to the i-th coordinate axis, to obtain the second value corresponding to the neighboring node, includes: performing, by the encoding side, the AND operation on the planar identification information and/or the planar position information of the N neighboring nodes and the first preset value corresponding to the i-th coordinate axis, to obtain the first value corresponding to the neighboring node. That is, the encoding side performs the AND operation on the planar identification information of the N neighboring nodes and the first preset value corresponding to the i-th coordinate axis, and then performs weighting to obtain the first context information corresponding to the i-th coordinate axis. Alternatively, the encoding side performs the AND operation on the planar position information of the N neighboring nodes and the first preset value corresponding to the i-th coordinate axis, and then performs weighting to obtain the first context information corresponding to the i-th coordinate axis. Alternatively, the encoding side performs the AND operation on both the planar identification information and the planar position information of the N neighboring nodes and the first preset value corresponding to the i-th coordinate axis, and then performs weighting to obtain the first context information corresponding to the i-th coordinate axis.

By way of example, it is assumed that the N neighboring nodes include three coplanar neighboring nodes (coPlanarLeft, coPlanarFrontPlane and coPlanarBelow), three coedge neighboring nodes (coEdgerLeft, coEdgerFront and coEdgerBelow), and one coVertex neighboring node (coVertex), in FIG. 11. Pieces of planar identification information of these seven neighboring nodes are recorded in sequence as: coPlanarLeftPlaneMode, coPlanarFrontPlaneMode, coPlanarBelowPlaneMode, coEdgerLeftPlanarMode, coEdgerFrontPlanarMode, coEdgerBelowPlanarMode, and coVertexPlanarMode. Pieces of planar position information of these seven neighboring nodes are recorded in sequence as: coPlanarLeftPlanePos, coPlanarFrontPlanePos, coPlanarBelowPlanePos, coEdgerLeftPlanePos, coEdgerFrontPlanePos, coEdgerBelowPlanePos, and coVertexPlanePos.

In an example, the encoding side performs the AND operation on the planar identification information of the N neighboring nodes and the first preset value corresponding to the i-th coordinate axis, and then performs weighting obtain the first context information Ctx1 corresponding to the i-th coordinate axis.

In an example, the encoding side performs the AND operation on the planar position information of the N neighboring nodes and the first preset value corresponding to the i-th coordinate axis, and then performs weighting obtain the first context information Ctx1 corresponding to the i-th coordinate axis.

In an example, the encoding side performs the AND operation on both the planar identification information and the planar position information of the N neighboring nodes and the first preset value corresponding to the i-th coordinate axis, and then performs weighting to obtain the first context information Ctx1 corresponding to the i-th coordinate axis.

The specific process in which the encoding side determines the first context information corresponding to the i-th coordinate axis based on the planar structure information of the N neighboring nodes is introduced above. It will be noted that in addition to determining the first context information corresponding to the i-th coordinate axis based on the above manners, the encoding side may determine the first context information corresponding to the i-th coordinate axis in other manners.

The specific process of determining the second context information corresponding to the i-th coordinate axis based on the planar structure information of the N neighboring nodes in S202-B1 will be introduced below.

It will be noted that in the embodiments of the present application, the specific manner in which the encoding side determines the second context information corresponding to the i-th coordinate axis based on the planar structure information of the N neighboring nodes includes but is not limited to types as follows.

Manner 1: the encoding side determines the second context information corresponding to the i-th coordinate axis based on the planar structure information of some neighboring nodes in the N neighboring nodes.

For example, the encoding side determines the second context information corresponding to the i-th coordinate axis based on planar structure information of Q neighboring nodes that are coedge and/or coVertex with the current node in the N neighboring nodes, where Q is a positive integer.

The planar structure information of the Q neighboring nodes includes planar identification information and/or planar position information of the Q neighboring nodes. That is, the encoding side determines the second context information corresponding to the i-th coordinate axis based on the planar identification information of the P coplanar neighboring nodes. Alternatively, the encoding side determines the second context information corresponding to the i-th coordinate axis based on the planar position information of the Q neighboring nodes. Alternatively, the encoding side determines the second context information corresponding to the i-th coordinate axis based on the planar identification information and the planar position information of the Q neighboring nodes.

The specific manner in which the encoding side determines the second context information corresponding to the i-th coordinate axis based on the planar structure information of the Q neighboring nodes that are coedge and/or coVertex with the current node in the N neighboring nodes is not limited in the embodiments of the present application.

In a possible implementation, for any one neighboring node in the Q neighboring nodes, the encoding side performs an AND operation on planar structure information of the neighboring node and a first preset value corresponding to the i-th coordinate axis, to obtain a first value corresponding to the neighboring node, and then weights first values corresponding to the P neighboring nodes to obtain the second context information corresponding to the i-th coordinate axis. It will be noted that different coordinate axes correspond to different first preset values, and the specific value of the first preset value corresponding to each coordinate axis is not limited in the embodiments of the present application.

For example, the first preset value corresponding to the X coordinate axis is 0, the first preset value corresponding to the Y coordinate axis is 1, and the first preset value corresponding to the Z coordinate axis is 2.

As can be seen from the above, the planar structure information of the neighboring node includes the planar identification information and/or the planar position information. Therefore, in some embodiments, the above of performing, by the encoding side, the AND operation on the planar structure information of the neighboring node and the first preset value corresponding to the i-th coordinate axis, to obtain the first value corresponding to the neighboring node, includes:

performing, by the encoding side, the AND operation on the planar identification information and/or the planar position information of the neighboring node and the first preset value corresponding to the i-th coordinate axis, to obtain the first value corresponding to the neighboring node. That is, the encoding side performs the AND operation on the planar identification information of the Q neighboring nodes and the first preset value corresponding to the i-th coordinate axis, and then performs weighting to obtain the second context information corresponding to the i-th coordinate axis. Alternatively, the encoding side performs the AND operation on the planar position information of the Q neighboring nodes and the first preset value corresponding to the i-th coordinate axis, and then performs weighting to obtain the second context information corresponding to the i-th coordinate axis. Alternatively, the encoding side performs the AND operation on both the planar identification information and the planar position information of the Q neighboring nodes and the first preset value corresponding to the i-th coordinate axis, and then performs weighting to obtain the second context information corresponding to the i-th coordinate axis.

By way of example, it is assumed that the Q neighboring nodes that are coedge or coVertex with the current node in the N neighboring nodes are three coedge neighboring nodes (coEdgerLeft, coEdgerFront and coEdgerBelow), and one neighboring node (coVertex) that is coVertex with the current node, in FIG. 11. Pieces of planar identification information of these four neighboring nodes are recorded in sequence as: coEdgerLeftPlaneMode, coEdgerFrontPlaneMode, coEdgerBelowPlaneMode, and coVertexPlaneMode. Pieces of planar position information of these four neighboring nodes are recorded in sequence as: coEdgerLeftPlanePos, coEdgerFrontPlanePos, coEdgerBelowPlanePos, and coVertexPlanePos.

In an example, the encoding side performs the AND operation on the planar identification information of the Q neighboring nodes and the first preset value corresponding to the i-th coordinate axis, and then performs weighting to obtain the second context information Ctx2 corresponding to the i-th coordinate axis.

In an example, the encoding side performs the AND operation on the planar position information of the Q neighboring nodes and the first preset value corresponding to the i-th coordinate axis, and then performs weighting to obtain the second context information Ctx2 corresponding to the i-th coordinate axis.

In an example, the encoding side performs the AND operation on both the planar identification information and the planar position information of the Q neighboring nodes and the first preset value corresponding to the i-th coordinate axis, and then performs weighting to obtain the second context information Ctx2 corresponding to the i-th coordinate axis.

The specific process in which the encoding side determines the second context information corresponding to the i-th coordinate axis based on the planar structure information of the Q neighboring nodes that are coedge and/or coVertex with the current node in the N neighboring nodes is introduced above.

Alternatively, in some embodiments, the encoding side may determine the second context information corresponding to the i-th coordinate axis based on planar structure information of at least one neighboring node that is coedge with the current node in the N neighboring nodes.

Alternatively, in some embodiments, the encoding side may determine the second context information corresponding to the i-th coordinate axis based on planar structure information of at least one neighboring node that is coVertex with the current node in the N neighboring nodes.

Alternatively, in some embodiments, the encoding side may determine the second context information corresponding to the i-th coordinate axis based on planar structure information of at least one neighboring node that is coplanar with the current node in the N neighboring nodes.

Alternatively, in some embodiments, the encoding side may determine the second context information corresponding to the i-th coordinate axis based on planar structure information of one or more neighboring nodes that are coplanar and coedge with the current node in the N neighboring nodes.

Alternatively, in some embodiments, the encoding side may determine the second context information corresponding to the i-th coordinate axis based on planar structure information of one or more neighboring nodes that are coplanar and coVertex with the current node in the N neighboring nodes.

The specific process in which the encoding side determines the second context information corresponding to the i-th coordinate axis based on the planar structure information of some neighboring nodes in the N neighboring nodes is introduced above.

Manner 2, the encoding side determines the second context information corresponding to the i-th coordinate axis based on second planar position information of the N neighboring nodes.

The second planar structure information includes planar identification information and/or planar position information of the neighboring node. That is, the encoding side determines the second context information corresponding to the i-th coordinate axis based on the planar identification information of the N neighboring nodes. Alternatively, the encoding side determines the second context information corresponding to the i-th coordinate axis based on the planar position information of the N neighboring nodes. Alternatively, the encoding side determines the second context information corresponding to the i-th coordinate axis based on the planar position information and the planar identification information of the N neighboring nodes.

The specific manner in which the encoding side determines the second context information corresponding to the i-th coordinate axis based on the first planar position information of the N neighboring nodes is not limited in the embodiments of the present application.

In a possible implementation, for any one neighboring node in the N neighboring nodes, the encoding side performs an AND operation on second planar position information of the neighboring node and a first preset value corresponding to the i-th coordinate axis, to obtain a third value corresponding to the neighboring node, and then the encoding side weights third values corresponding to the N neighboring nodes, to obtain the second context information corresponding to the i-th coordinate axis. It will be noted that different coordinate axes correspond to different first preset values, and the specific value of the first preset value corresponding to each coordinate axis is not limited in the embodiments of the present application.

For example, the first preset value corresponding to the X coordinate axis is 0, the first preset value corresponding to the Y coordinate axis is 1, and the first preset value corresponding to the Z coordinate axis is 2.

As can be seen from the above, the planar structure information of the neighboring node includes the planar identification information and/or the planar position information. Therefore, in some embodiments, the above performing, by the encoding side, the AND operation on the second planar structure information of the neighboring node and the first preset value corresponding to the i-th coordinate axis, to obtain the third value corresponding to the neighboring node, includes: performing, by the encoding side, the AND operation on the planar identification information and/or the planar position information of the N neighboring nodes and the first preset value corresponding to the i-th coordinate axis, to obtain the third value corresponding to the neighboring node. That is, the encoding side performs the AND operation on the planar identification information of the N neighboring nodes and the first preset value corresponding to the i-th coordinate axis, and then performs weighting to obtain the second context information corresponding to the i-th coordinate axis. Alternatively, the encoding side performs the AND operation on the planar position information of the N neighboring nodes and the first preset value corresponding to the i-th coordinate axis, and then performs weighting to obtain the second context information corresponding to the i-th coordinate axis. Alternatively, the encoding side performs the AND operation on both the planar identification information and the planar position information of the N neighboring nodes and the first preset value corresponding to the i-th coordinate axis, and then performs weighting to obtain the second context information corresponding to the i-th coordinate axis.

By way of example, the N neighboring nodes include three coplanar neighboring nodes (coPlanarLeft, coPlanarFrontPlane and coPlanarBelow), three coedge neighboring nodes (coEdgerLeft, coEdgerFront and coEdgerBelow), and one coVertex neighboring node (coVertex), in FIG. 11. Pieces of planar identification information of these seven neighboring nodes are recorded in sequence as: coPlanarLeftPlaneMode, coPlanarFrontPlaneMode, coPlanarBelowPlaneMode, coEdgerLeftPlanarMode, coEdgerFrontPlanarMode, coEdgerBelowPlanarMode, and coVertexPlanarMode. Pieces of planar position information of these seven neighboring nodes are recorded in sequence as: coPlanarLeftPlanePos, coPlanarFrontPlanePos, coPlanarBelowPlanePos, coEdgerLeftPlanePos, coEdgerFrontPlanePos, coEdgerBelowPlanePos, and coVertexPlanePos.

In an example, the encoding side performs the AND operation on the planar identification information of the N neighboring nodes and the first preset value corresponding to the i-th coordinate axis and then performs weighting to obtain the second context information Ctx2 corresponding to the i-th coordinate axis.

In an example, the encoding side performs the AND operation on the planar position information of the N neighboring nodes and the first preset value corresponding to the i-th coordinate axis and then performs weighting to obtain the second context information Ctx2 corresponding to the i-th coordinate axis.

In an example, the encoding side performs the AND operation on both the planar identification information and the planar position information of the N neighboring nodes and the first preset value corresponding to the i-th coordinate axis and then performs weighting to obtain the second context information Ctx2 corresponding to the i-th coordinate axis.

The specific process in which the encoding side determines the second context information corresponding to the i-th coordinate axis based on the planar structure information of the N neighboring nodes is introduced above. It will be noted that in addition to determining the second context information corresponding to the i-th coordinate axis based on the above manners, the encoding side may determine the second context information corresponding to the i-th coordinate axis in other manners.

It will be noted that the first context information corresponding to the i-th coordinate axis and the second context information corresponding to the i-th coordinate axis that are obtained by the encoding side are different, that is, the manner used by the encoding side to determine the first context information corresponding to the i-th coordinate axis is different from the manner used to determine the second context information corresponding to the i-th coordinate axis, and thus obtained first context information and the second context information are also different.

In the embodiments of the present application, the specific processes of weighting the first values corresponding to the P neighboring nodes, the specific processes of weighting the first values corresponding to the Q neighboring nodes, the specific processes of weighting the second values corresponding to the N neighboring nodes, and the specific processes of weighting the third values corresponding to the N neighboring nodes are substantially the same.

The weighting process will be introduced below.

It will be noted that for the sake of description, a target value below may be understood as the first value corresponding to the neighboring node, the second value corresponding to the neighboring node, or the third value corresponding to the neighboring node; at least one neighboring node below may be understood as the P neighboring nodes, the Q neighboring nodes, or the N neighboring nodes; and target context information below may be understood as the first context information or the second context information.

In some embodiments, a weighting factor of the target value corresponding to the neighboring node is a preset value, so that the target value corresponding to at least one neighboring node may be weighted based on a weighting factor of a target value corresponding to each neighboring node in the at least one neighboring node, to obtain the target context information corresponding to the i-th coordinate axis.

In some embodiments, the weighting of the target value corresponding to the at least one neighboring node to obtain the target context information corresponding to the i-th coordinate axis includes the following steps E1 and E2, where

in step E1, the number of left shifted bits corresponding to the target value is determined, and the weighting factor corresponding to the target value is determined based on the number of left shifted bits; and

in step E2, the target value corresponding to the at least one neighboring node is weighted based on the weighting factor of the target value, to obtain the target context information corresponding to the i-th coordinate axis.

For example, the number of left shifted bits corresponding to the above first value is determined, and a weighting factor corresponding to the first value is determined based on the number of left shifted bits; and the first values corresponding to the P neighboring nodes are weighted based on the weighting factors of the first values, to obtain the first context information corresponding to the i-th coordinate axis.

As another example, the number of left shifted bits corresponding to the above second value is determined, and a weighting factor corresponding to the second value is determined based on the number of left shifted bits; and the second values corresponding to the N neighboring nodes are weighted based on the weighting factors of the second values, to obtain the first context information corresponding to the i-th coordinate axis.

As another example, the number of left shifted bits corresponding to the above first value is determined, and a weighting factor corresponding to the first value is determined based on the number of left shifted bits; and the first values corresponding to the Q neighboring nodes are weighted based on the weighting factors of the first values, to obtain the second context information corresponding to the i-th coordinate axis.

As another example, the number of left shifted bits corresponding to the above third value is determined, and a weighting factor corresponding to the third value is determined based on the number of left shifted bits; and the third values corresponding to the N neighboring nodes are weighted based on the weighting factors of the third values, to obtain the second context information corresponding to the i-th coordinate axis.

After determining the first context information and/or the second context information corresponding to the i-th coordinate axis based on the planar structure information of the N neighboring nodes through the above manners, the encoding side performs the above step S202-B2 to perform the predictive encoding on the planar position information of the current node on the i-th coordinate axis based on the first context information and/or the second context information corresponding to the i-th coordinate axis.

The specific manner of performing the predictive encoding on the planar position information of the current node on the i-th coordinate axis based on the first context information and/or the second context information corresponding to the i-th coordinate axis in S202-B2 is not limited in the embodiments of the present application.

In some embodiments, the encoding side performs the predictive encoding on the planar position information of the current node on the i-th coordinate axis based on only the first context information and/or the second context information corresponding to the i-th coordinate axis. For example, the encoding side determines a context model index based on the first context information and/or the second context information corresponding to the i-th coordinate axis, and then selects a context model from multiple preset context models based on the context model index, and then performs, by using the context model, the predictive encoding on the planar position information of the current node on the i-th coordinate axis.

In some embodiments, the above S202-B2 includes a step S202-B21, where

in S102-B21, the predictive encoding is performed on the planar position information of the current node on the i-th coordinate axis based on the first context information and/or the second context information corresponding to the i-th coordinate axis, and preset context information.

In these embodiments, in performing the predictive encoding on the planar position information of the current node on the i-th coordinate axis by the encoding side, in addition to the first context information and/or the second context information corresponding to the i-th coordinate axis, reference context information includes other preset context information.

The specific content of the preset context information is not limited in the embodiments of the present application, which may be determined depending on actual needs.

In a possible implementation, the preset context information includes at least one of the following four pieces of context information:

1, the planar position information of the current node being obtained as three elements through predicting by using the occupancy information of the neighboring node: predicted to be a low plane, predicted to be a high plane, or unpredictable;

2, a spatial distance between a node at the same partition depth and the same coordinate as the current node and the current node being "close" or "far";

3, a planar position of a node at the same partition depth and the same coordinate as the current node if it is a plane; or

4, a coordinate dimension i being equal to 0, 1 or 2.

In these embodiments, in a case where performing the predictive encoding on the planar position information of the current node on the i-th coordinate axis, the encoding side determines the first context information and/or the second context information corresponding to the i-th coordinate axis based on the planar structure information of the N neighboring nodes of the current node, and then performs the predictive encoding on the planar position information of the current node on the i-th coordinate axis based on the first context information and/or the second context information corresponding to the i-th coordinate axis, and the preset context information. As can be seen, in the embodiments of the present application, in performing the predictive encoding on the planar position information of the current node by the encoding side, not only preset prior information (i.e., the preset context information) is considered, but also the planar structure information of the neighboring node (i.e., the first context information and/or the second context information) is considered, so as to improve the effect of the predictive encoding of the planar position information of the current node and to improve the encoding efficiency of the point cloud.

The specific process in which the encoding side performs the predictive encoding on the planar position information of the current node on the i-th coordinate axis based on the first context information and/or the second context information corresponding to the i-th coordinate axis, and the preset context information is not limited in the embodiments of the present application.

In some embodiments, the above S202-B21 includes the following steps S202-B211 and S2202-B212, where

in S202-B211, a target context model is determined based on the first context information and/or the second context information corresponding to the i-th coordinate axis, and the preset context information; and

in S202-B212, the predictive encoding is performed on the planar position information of the current node on the i-th coordinate axis based on the target context model.

In these embodiments, the encoding side determines a context model based on the first context information and/or the second context information corresponding to the i-th coordinate axis and the preset context information. For the sake of ease of description, the context model is noted as the target context model. Next, the encoding side performs the predictive encoding on the planar position information of the current node on the i-th coordinate axis by using the target context model.

The specific process in which the encoding side determines the target context model based on the first context information and/or the second context information corresponding to the i-th coordinate axis, and the preset context information will be introduced below.

In some embodiments, the encoding side determines an index of the target context model based on the first context information and/or the second context information corresponding to the i-th coordinate axis, and the preset context information, then selects the target context model from the preset multiple context models based on the index of the target context model, and then performs the predictive encoding on the planar position information of the current node on the i-th coordinate axis by using the target context model.

In these embodiments, multiple context models are set for the planar position information. The specific number of the context models corresponding to the planar position information is not limited in the embodiments of the present application, as long as it is greater than 1. That is, in the embodiments of the present application, an optimal context model is selected from at least two context models to perform the predictive encoding on the planar position information of the current node on the i-th coordinate axis.

For example, the planar position information corresponds to multiple context models as shown in Table 2. In this way, the encoding side determines the index of the target context model based on the first context information and/or the second context information corresponding to the i-th coordinate axis, and the preset context information. Next, based on the index of the target context model, the target context model is selected from the context models corresponding to Table 2 to perform the predictive encoding on the planar position information of the current node on the i-th coordinate axis.

In some embodiments, the above S202-B211 includes the following steps S202-B2111 and S202-B2112, where

in S202-B2111, the first context information and/or the second context information corresponding to the i-th coordinate axis, and the preset context information are classified into primary information and minor information; and

in S202-B2112, the target context model is determined based on the primary information of the current node and a part or all of the minor information of the current node.

As can be seen from the above, it is assumed that the context information of the planar position information includes the first context information and the second context information corresponding to the i-th coordinate axis, and the above four pieces of preset context information, the final context of the planar position is as follows:

1, the planar position information of the current node being obtained as three elements through predicting by using the occupancy information of the neighboring node: predicted to be a low plane, predicted to be a high plane, or unpredictable;

2, a spatial distance between a node at the same partition depth and the same coordinate as the current node and the current node being "close" or "far";

3, a planar position of a node at the same partition depth and the same coordinate as the current node if it is a plane;

4, a coordinate dimension i being equal to 0, 1 or 2;

5, Ctx1: planar structure information of three coplanar neighboring nodes; and

6, Ctx2: planar structure information of three coedge neighboring nodes and one coVertex neighboring node.

It is assumed that the encoding side determines the first context information corresponding to the i-th coordinate axis based on planar identification information and planar position information of three neighboring nodes that are coplanar with the current node in the N neighboring nodes, it may be obtained that Ctx1 includes $2^6$ = 64 contexts. It is assumed that the encoding side determines the second context information corresponding to the i-th coordinate axis based on planar identification information and planar position information of three neighboring nodes that are coedge with the current node and one neighboring node that is coVertex with the current node in the N neighboring nodes, it may be obtained that Ctx2 includes $2^8$ = 256 contexts. In this way, the encoding side may obtain $3 \times 2 \times 2 \times 3 \times 64 \times 256$ = 589,824 contexts based on the first context information and the second context information corresponding to the i-th coordinate axis and the above four pieces of preset context information. The memory space occupied by so many contexts is very large. In light of this, in performing the predictive encoding on the planar position information of the node in the embodiments of the present application, the advanced coding technology Dynamic-OUBF of GPCC is introduced into an algorithm to reduce the number of contexts used for encoding the planar position information, for example, to reduce the number of the contexts for the planar position to $3 \times 16$ = 48.

Specifically, in the embodiments of the present application, as shown in FIG, 12, the encoding side classifies the first context information and/or the second context information corresponding to the i-th coordinate axis determined above, and the preset context information into the primary information and the minor information, and then determines the target context model based on the primary information of the current node and a part or all of the minor information of the current node. It will be noted that in the embodiments of the present application, the target context model is mainly determined based on the primary information and a part of the minor information of the current node, so as to reduce the number of contexts, which may not only reduce the memory occupancy of the contexts, but also improve the predictive encoding efficiency of the planar position information of the node.

The specific manner of classifying the first context information and/or the second context information corresponding to the i-th coordinate axis, and the preset context information into the primary information and the minor information is not limited in the embodiments of the present application.

In an example, the encoding side classifies the following contents into the primary information: the first context information corresponding to the i-th coordinate axis, a spatial distance between a node at the same partition depth and the same coordinate as the current node and the current node being "close" or "far", and a planar position of a node at the same partition depth and the same coordinate as the current node if it is a plane; the encoding side classifies the following contents into the minor information: the second context information corresponding to the i-th coordinate axis, and the planar position information of the current node being obtained as three elements through predicting by using the occupancy information of the neighboring node: predicted to be a low plane, predicted to be a high plane, or unpredictable; and a coordinate dimension i being equal to 0, 1 or 2, as an index itself, is not classified into the primary information or the minor information.

In another example, the encoding side may classify the first context information and the second context information corresponding to the i-th coordinate axis into the primary information of the current node, and classify at least one of the four pieces of preset context information into the minor information of the current node.

In another example, the encoding side may classify the second context information corresponding to the i-th coordinate axis into the primary information of the current node, and classify the first context information corresponding to the i-th coordinate axis into the minor information of the current node. Optionally, based on this, at least one of the above four pieces of preset context information may be classified into the primary information of the current node, and the remaining preset context information may be classified into the minor information of the current node.

In another example, the encoding side may classify the first context information and the second context information corresponding to the i-th coordinate axis into the minor information of the current node, and classify at least one of the above four pieces of preset context information into the minor information of the current node.

It will be noted that the manners in which the encoding side classifies the first context information and/or the second context information corresponding to the i-th coordinate axis, and the preset context information into the primary information and the minor information includes but is not limited to the manner illustrated above. The encoding side may adopt other manners to classify the first context information and/or the second context information corresponding to the i-th coordinate axis, and the preset context information into the primary information and the minor information.

Based on the above steps, after classifying the first context information and/or the second context information corresponding to the i-th coordinate axis, and the preset context information into the primary information and the minor information, the encoding side performs the above step S202-B2112 to determine the target context model based on the primary information of the current node and a part or all of the minor information of the current node.

The specific manner in which the encoding side determines the target context model based on the primary information of the current node and a part or all of the minor information of the current node is not limited in the embodiments of the present application.

In some embodiments, the encoding side determines an index based on the primary information of the current node and a part of the minor information of the current node, and determines an index of the target context model based on the index; and then determines the target context model from multiple preset context models based on the index of the target context model.

In some embodiments, the above S202-B2112 includes the following steps S202-B21121 to S202-B21124:

in S202-B21121, the primary information of the current node and the minor information of the current node are converted into binary representation;

in S202-B21122, the number of right shifted bits of the minor information corresponding to the current node is determined, and first minor information is selected from binary represented minor information of the current node based on the number of right shifted bits of the minor information corresponding to the current node, where an initial value of the number of right shifted bits of the minor information is the total number of bits of the binary minor information;

in S202-B21123, a first index is determined based on binary represented primary information of the current node and the first minor information, and an index of the target context model is obtained from a preset context model index cache based on the first index; and

in S202-B21124, the target context model is obtained based on the index of the target context model.

In these embodiments, based on the above steps, the encoding side classifies the first context information and/or the second context information corresponding to the i-th coordinate axis, and the preset context information into the primary information and the minor information. Next, the encoding side converts the primary information and the minor information of the current node obtained by classification into the binary representation.

By way of example, referring to the above example, in a case where the encoding side classifies the following contents into the primary information: the first context information corresponding to the i-th coordinate axis, a spatial distance between a node at the same partition depth and the same coordinate as the current node and the current node being "close" or "far", and a planar position of a node at the same partition depth and the same coordinate as the current node if it is a plane, it is assumed that the first context information Ctx1 corresponding to the i-th coordinate axis includes $2^6$ = 64 contexts, which require 6 bits for representation when converted into binary representation; the spatial distance between a node at the same partition depth and the same coordinate as the current node and the current node being "close" or "far" include 2 contexts, which require 1 bit for representation when converted into binary representation; and the planar position of the node at the same partition depth and the same coordinate as the current node includes 2 contexts, which require 1 bit for representation when converted into binary representation. Therefore, in this example, 6 + 1 + 1 = 8 bits are required for representation in a case where the primary information of the current node is converted into binary representation.

Similarly, in a case where the encoding side classifies the following contents into the minor information: the second context information corresponding to the i-th coordinate axis, and the planar position information of the current node being obtained as three elements through predicting by using the occupancy information of the neighboring node: predicted to be a low plane, predicted to be a high plane, or unpredictable, it is assumed that the second context information Ctx2 corresponding to the i-th coordinate axis includes $2^8$ = 256 contexts, which require 8 bits for representation when converted into binary representation; and the context information: the planar position information of the current node being obtained as three elements through predicting by using the occupancy information of the neighboring node: predicted to be a low plane, predicted to be a high plane, or unpredictable, includes 3 contexts, which require 2 bits for representation when converted into binary representation. Therefore, in this example, 8 + 2 = 10 bits are required for representation in a case where the minor information of the current node is converted into binary representation.

The specific process of converting the primary information of the current node and the minor information of the current node into binary representation is described above with examples. It will be noted that the manner of classifying the primary information and the minor information of the current node includes but is not limited to the above example. In a case where the primary information and the minor information of the current node further include other context information, the primary information and the minor information of the current node may be converted into binary representation by referring to the method illustrated in the above example.

After converting the primary information and minor information of the current node into binary representation, the encoding side determines the number of right shifted bits of the minor information corresponding to the current node, and then selects the first minor information from binary represented minor information of the current node based on the number of right shifted bits of the minor information. In the embodiments of the present application, the number of right shifted bits of the minor information corresponding to the current node may be understood as being used to select which minor information from the minor information of the current node to perform the predictive encoding on the planar position information of the current node.

Determining the number of right shifted bits of the minor information corresponding to the current node will be introduced below.

The specific manner of determining the number of right shifted bits of the minor information corresponding to the current node is not limited in the embodiments of the present application.

In some embodiments, the number of right shifted bits of the minor information corresponding to the current node is a preset value. For example, for nodes in a point cloud octree, a preset number of nodes corresponds to the number of right shifted bits of the minor information, so that the number of right shifted bits of the minor information corresponding to the current node may be determined. For example, the closer the node is to the root node of the octree, the larger the number of right shifted bits of the minor information corresponding to the node is. Optionally, an initial value of the number of right shifted bits of the minor information is the total number of bits of the binary minor information. For example, in a case where the current node is the root node of the octree, the number of right shifted bits of the minor information corresponding to the current node is the above 10 bits.

In some embodiments, determining the number of right shifted bits of the minor information corresponding to the current node in the above S202-B21122 includes the following steps S202-B211221 and S202-B211222, where

in S202-B211221, the number of right shifted bits of the minor information corresponding to a last layer of a current minor information partitioning tree is determined, where the minor information partitioning tree is obtained by performing binary tree partitioning on the minor information starting from a highest bit of the minor information; and

in S202-B211222, the number of right shifted bits of the minor information corresponding to the last layer is determined as the number of right shifted bits of the minor information corresponding to the current node.

The partitioning process of the minor information will be introduced below.

Specifically, in encoding the current point cloud by the encoding side, in an entire Dynamic-OUBF initialization process, it is assumed that the integer representation of the primary information is ct1 and the integer representation of the minor information is ct2, a context model index cache ContextBuffer is initialized, with the size of ContextBuffer being ct1 × ct2. For example, referring to the above example, it is assumed that the primary information includes 8 bits and the minor information includes 10 bits, a context model index cache ContextBuffer with the size of 8 × 10 may be determined, that is, the context model index cache ContextBuffer holds 8 × 10 context model indexes. In addition, an initial probability of a context for each state is set to 127 (i.e., 0.5).

In some embodiments, the process of recovering the accuracy of the minor information is shown in FIG. 13.

First, the context of the entire minor information is represented in a binary format, and then the minor information is partitioned into a binary tree starting from the highest bit. As shown in FIG. 13, above a certain level, it is a non-full binary tree, that is, the partitioning is performed according to a situation of the minor information itself, but when the partitioning is performed below MinDepth (currently set to 3), the accuracy of the minor information will be fully restored. The partitioning of the minor information will be introduced in detail below.

For example, a countBuffer counter with the size of ct1 × (ct2 » MinDepth) is initialized to 0.

In addition, a KDown is initialized to represent the accuracy (i.e., the number of right shifted bits) of the minor information corresponding to each first index (state). An initial value of the number of right shifted bits of the minor information is the total number of bits of the binary minor information, that is, the highest accuracy of the minor information. For example, if the minor information is 10 bits, the initial value of the number of right shifted bits of the minor information is 10 bits.

Furthermore, a table of CountTimeTh is initialized to control a highest number of times a first index (state) of each layer of the minor information partitioning tree occurs. In a case where the number of times one first index (state) occurs exceeds the limit of this layer, a low bit accuracy of the minor information will be restored, and the number of times the current first index (state) occurs will be reset to zero. Context probability of a new first index (state) obtained by recovering inherits the probability of its parent node.

Specifically, as shown in FIG. 13, for a first node 1 in the point cloud, in a case where predictive encoding is performed on planar position information of node 1, first context information and/or second context information corresponding to node 1 are determined first based on the above steps, and the first context information and/or the second context information corresponding to node 1, and the preset context information are classified into primary information and minor information, for example, into primary information of 8 bits and minor information of 10 bits. Next, the number of right shifted bits of the minor information corresponding to node 1 is obtained in KDown. Since node 1 is the first point of the point cloud, the number of right shifted bits of the minor information corresponding to node 1 is an initial value of the number of right shifted bits of the minor information, for example, 10 bits. In this way, in a case where the encoding side determines that the number of right shifted bits of the minor information corresponding to node 1 is 10 bits, the minor information of node 1 is right shifted by 10 bits. Since the minor information of node 1 is 10 bits in total, after right shifting, the first minor information of node 1 is 0 bits. Next, the encoding side determines a first index 1 based on binary represented primary information and first minor information of node 1, obtains an index of a target context model corresponding to node 1 from the context model index cache ContextBuffer based on the first index 1, then obtains the target context model corresponding to node 1 based on the index of the target context model corresponding to node 1, and then performs the predictive encoding on the planar position information of node 1 on the i-th coordinate axis by using the target context model corresponding to this node. Moreover, the number of times the first index 1 occurs in countBuffer is increased by 1, and the number of times the first index 1 occurs in countBuffer is compared with a first preset threshold corresponding to a first layer of minor information partitioning tree stored in CountTimeTh. If the number of times the first index 1 occurs in countBuffer is less than the first preset threshold corresponding to the first layer of the minor information partitioning tree stored in CountTimeTh, the minor information partitioning tree is not partitioned.

Next, for node 2 in the point cloud, in a case where predictive encoding is performed on planar position information of node 2, first context information and/or second context information corresponding to node 2 are determined first based on the above steps, and the first context information and/or the second context information corresponding to node 2, and the preset context information are classified into primary information and minor information, for example, into primary information of 8 bits and minor information of 10 bits. Next, the number of right shifted bits of the minor information corresponding to node 2 is obtained in KDown. Since the minor information partitioning tree is not partitioned, the number of right shifted bits of the minor information corresponding to node 2 is equal to the number of right shifted bits of the minor information corresponding to node 1, which is the initial value of the number of right shifted bit number of the minor information, for example, 10 bits. In this way, in a case where the encoding side determines that the number of right shifted bits of the minor information corresponding to node 2 is 10 bits, the minor information of node 2 is right shifted by 10 bits. Since the minor information of node 2 is 10 bits in total, after right shifting, the first minor information of node 2 is 0 bits. Next, the encoding side determines a first index 2 based on binary represented primary information and first minor information of node 2, obtains an index of a target context model corresponding to node 2 from the context model index cache ContextBuffer based on the first index 2, then obtains the target context model corresponding to node 2 based on the index of the target context model corresponding to node 2, and then performs the predictive encoding on the planar position information of node 2 on the i-th coordinate axis by using the target context model corresponding to the node. Moreover, the number of times the first index 2 occurs in countBuffer is increased by 1, and the number of times the first index 2 occurs in countBuffer is compared with the first preset threshold corresponding to the first layer of the minor information partitioning tree stored in CountTimeTh. If the number of times the first index 2 occurs in countBuffer is less than the first preset threshold corresponding to the first layer of the minor information partitioning tree stored in CountTimeTh, the minor information partitioning tree is not partitioned.

It is assumed that the first index 1 is the same as the first index 2, and the first preset threshold corresponding to the first layer of the minor information partitioning tree stored in CountTimeTh is 2, it may be determined that the number of times the first index 1 occurs in countBuffer is equal to the first preset threshold corresponding to the first layer of the minor information partitioning tree stored in CountTimeTh. In this case, the minor information partitioning tree will be partitioned, specifically, the first layer of the minor information partitioning tree is partitioned into a non-full binary tree, to obtain a new minor information partitioning tree. In this case, the new minor information partitioning tree includes 2 layers, a first layer includes 1 node, and a second layer includes 2 nodes.

Moreover, the number of right shifted bits of the minor information in KDown is updated to obtain the number of right shifted bits of the minor information corresponding to the second layer of the minor information partitioning tree. For example, the number of right shifted bits of the minor information corresponding to the second layer is obtained by subtracting one from the number of right shifted bits of the minor information corresponding to the first layer, that is, 10 bits -1 bit = 9 bits.

Furthermore, countBuffer is set to 0.

Referring to the above steps, the accuracy of the minor information is gradually restored, and the minor information partitioning tree illustrated in FIG. 13 may be obtained.

In this way, in a case where predictive encoding is performed on planar position information of a current node in the point cloud on the i-th coordinate axis, first context information and/or second context information corresponding to the current node are determined based on the above steps, and the first context information and/or the second context information corresponding to the current node, and the preset context information are classified into primary information and minor information, for example, into primary information of 8 bits and minor information of 10 bits. Next, the number of right shifted bits of the minor information corresponding to a last layer of a current minor information partitioning tree is determined. As can be seen from the above, the number of right shifted bits of the minor information corresponding to the last layer of the current minor information partitioning tree (i.e., a current layer obtained by a most recent partitioning) is stored in KDown. Therefore, the encoding side may obtain the number of right shifted bits of the minor information corresponding to the last layer of the current minor information partitioning tree from KDown, and then determine the number of right shifted bits of the minor information corresponding to the last layer as the number of right shifted bits of the minor information corresponding to the current node.

Next, the encoding side selects first minor information from binary represented minor information of the current node based on the number of right shifted bits of the minor information corresponding to the current node.

For example, the number of right shifted bits of the minor information corresponding to the current node is n, so the encoding side may right shift the binary represented minor information of the current node by (n + 1) bits or by (n - 1) bits, to obtain the first minor information.

As another example, the binary represented minor information of the current node is right shifted by the number of right shifted bits of the minor information corresponding to the current node, to obtain the first minor information. It is assumed that the number of right shifted bits of the minor information corresponding to the current node is n, the binary represented minor information of the current node is right shifted by n bits, to obtain the first minor information.

Next, the encoding side determines the first index based on the binary represented primary information of the current node and the first minor information.

The specific manner in which the encoding side determines the first index based on the binary represented primary information of the current node and the first minor information is not limited in the embodiments of the present application.

In an example, the encoding side obtains the first index corresponding to the current node based on the above formula (12).

After obtaining the first index corresponding to the current node based on the above formula (12), the encoding side obtains a context model index corresponding to the first index from the preset context model index cache, and then records the context model index as the index of the target context model. In this way, the encoding side selects the target context model from multiple preset context models based on the index of the target context model, and then performs the predictive encoding on the planar position information of the current node on the i-th coordinate axis by using the target context model.

In some embodiments, after determining the index of the target context model based on the above steps, the encoding side updates the index of the target context model in the context model index cache, to increase the probability of the index of the target context model.

In the embodiments of the present application, the encoding side performs, in addition to determining the target context model based on the above steps, steps of data updating and partitioning the minor information partitioning tree.

The specific manner of partitioning the minor information partitioning tree is not limited in the embodiments of the present application.

In an example, each layer in the minor information partitioning tree is partitioned into a non-full binary tree.

In another example, each layer in the minor information partitioning tree is partitioned into a full binary tree.

In yet another example, some layers in the minor information partitioning tree are partitioned into non-full binary trees, and some layers are partitioned into full binary trees.

The partitioning process of the minor information partitioning tree will be introduced below.

In some embodiments, in a case where the minor information partitioning tree in the embodiments of the present application includes a non-full binary tree layer, the method in the embodiments of the present application further includes the following step 1.

In Step 1, in a case where a last layer of the current minor information partitioning tree is a non-full binary tree layer, and the number of times the first index occurs in the last layer is greater than or equal to a first preset threshold corresponding to the last layer, binary tree partitioning is performed on the last layer, to obtain a new minor information partitioning tree.

Based on the above steps, the encoding side determines the first index corresponding to the current node and the index of the target context model corresponding to the current node, and further determines whether to continue to partition the last layer of the current minor information partitioning tree. Specifically, in a case where the last layer of the current minor information partitioning tree is a non-full binary tree, the encoding side determines whether the number of times the first index corresponding to the current node occurs in the last layer (i.e., the latest layer) of the current minor information partitioning tree is greater than or equal to the first preset threshold corresponding to the last layer. In response to determining that the number of times the first index corresponding to the current node occurs in the last layer (i.e., the latest layer) of the current minor information partitioning tree is greater than or equal to the first preset threshold corresponding to the last layer, the encoding side performs binary tree partitioning on the last layer of the current minor information partitioning tree, to obtain the new minor information partitioning tree.

For example, the encoding side performs determination based on the above formula (13), to further partition the minor information:

In the embodiments of the present application, the encoding side performs the binary tree partitioning on the last layer of the current minor information partitioning tree, to obtain the new minor information partitioning tree, which includes at least two cases as follows.

Case 1: in a case where the last layer of the current minor information partitioning tree is not a last non-full binary tree layer of the minor information partitioning tree, non-full binary tree partitioning is performed on the last layer, to obtain the new minor information partitioning tree.

Case 2: in a case where the last layer of the current minor information partitioning tree is the last non-full binary tree layer of the minor information partitioning tree, full binary tree partitioning is performed on the last layer, to obtain the new minor information partitioning tree.

The embodiments of the present application include, in addition to performing the full binary tree partitioning on the last layer of the current minor information partitioning tree to obtain the new minor information partitioning tree, a step of updating the number of right shifted bits of the minor information, that is, subtracting one from the number of right shifted bits of the minor information corresponding to the current node to obtain a new number of right shifted bits of the minor information.

For example, the encoding side obtains the new number of right shifted bits of the minor information based on the above formula (14).

Correspondingly, a calculation formula of stateUpdate after updating is shown in the above formula (15).

Correspondingly, the context probability corresponding to stateUpdate after updating inherits the context of its parent node, as shown in the above formula (16).

Correspondingly, the accuracy of the minor information corresponding to the current state is lowered, that is, KDown[state]--.

Finally, the encoding side resets the number of times the current state occurs to 0, that is, countBuffer[state]=0.

In some embodiments, in a case where the minor information partitioning tree in the embodiments of the present application includes a full binary tree layer, the method in the embodiments of the present application further includes the following steps 21 to 24, where

in step 21, in response to that a last layer of a current minor information partitioning tree is a full binary tree layer, the number of right shifted bits of the minor information and a first preset threshold corresponding to a last non-full binary tree layer of the current minor information partitioning tree are determined;

in step 22, second minor information is selected from the binary represented minor information of the current node based on the number of right shifted bits of the minor information corresponding to the last non-full binary tree layer;

in step 23, a second index is determined based on the binary represented primary information of the current node and the second minor information; and

in step 24, in response to that the number of times the second index occurs in the last layer is greater than or equal to the first preset threshold corresponding to the last non-full binary tree layer, full binary tree partitioning is performed on the last layer, to obtain a new minor information partitioning tree.

In these embodiments, in a case where the minor information partitioning tree includes non-full binary tree layers and full binary tree layers, whether to continue partitioning a full binary tree layer is determined based on the number of right shifted bits of the minor information and the first preset threshold corresponding to the last non-full binary tree layer of the minor information partitioning tree. Specifically, in a case where the last layer of the current minor information partitioning tree is a full binary tree layer, the number of right shifted bits of the minor information and the first preset threshold corresponding to the last non-full binary tree layer of the current minor information partitioning tree are determined, and based on the number of right shifted bits of the minor information corresponding to the last non-full binary tree layer, the second minor information is selected from binary represented minor information of the current node. For example, the binary represented minor information of the current node is right shifted by the number of right shifted bits of the minor information corresponding to the last non-full binary tree layer, to obtain the second minor information corresponding to the current node. Next, the second index is determined based on the binary represented primary information of the current node and the second minor information. For example, the binary represented primary information of the current node and the second minor information are multiplied to determine the second index.

Next, whether the number of times the second index occurs in the last layer of the current minor information partitioning tree is greater than or equal to the first preset threshold corresponding to the last non-full binary tree layer is determined based on the above formula (17).

In a case where the number of times the second index occurs in the last layer of the current minor information partitioning tree is greater than or equal to the first preset threshold corresponding to the last non-full binary tree layer, full binary tree partitioning is performed on the last layer, to obtain the new minor information partitioning tree.

In this case, the encoding side updates the number of right shifted bits of the minor information, that is, the number of right shifted bits of the minor information corresponding to the current node is subtracted by one, to obtain the new number of right shifted bits of the minor information.

For example, the encoding side obtains the new number of right shifted bits of the minor information based on the above formula (14).

Correspondingly, the calculation formula of stateUpdate after updating is shown in the above formula (15).

Correspondingly, the context probability corresponding to stateUpdate after updating inherits the context from the last non-full binary tree layer.

Correspondingly, the accuracy of the minor information corresponding to the current state is lowered, that is, KDown[state]--.

Finally, the encoding side resets the number of times the current state occurs to 0, that is, countBuffer[state] = 0.

By way of example, as shown in FIG. 13, it is assumed that the minor information partitioning tree includes 4 non-full binary tree layers and 2 full binary tree layers. As shown in FIG. 16, it is assumed that the last layer of the current minor information partitioning tree is a fifth layer, that is, the minor information is partitioned to the fifth layer at the current moment. In this case, the fifth layer is a full binary tree layer. Therefore, in determining whether to partition the fifth layer, the encoding side first determines the number of right shifted bits of the minor information (which is a) and the first preset threshold (which is b) corresponding to the last non-full binary tree layer of the current minor information partitioning tree, that is, the fourth layer. Next, the encoding side right shifts the binary represented minor information of the current node by the number of right shifted bits (which is a) corresponding to the last non-full binary tree layer, to obtain the second minor information. Next, the encoding side performs multiplication on the binary represented primary information of the current node and the second minor information, to obtain the second index corresponding to the current node, then determines whether the number of times the second index occurs in the current last layer (i.e., the fifth layer) is greater than or equal to the first preset threshold (which is b) corresponding to the last non-full binary tree layer. In a case where the number of times the second index occurs in the fifth layer is greater than or equal to the first preset threshold (which is b) corresponding to the last non-full binary tree layer, full binary tree partitioning is performed on the fifth layer, to obtain the new minor information partitioning tree.

In summary, the entire processing flow of Dynamic-OUBF may be that: Dynamic-OUBF serves as a processor, with the primary information and the minor information of the current node as input, and finally an index (context) of the target context model between 0 and 255 is output.

In some embodiments, in order to further reduce the number of pieces of context information, obtaining the target context model based on the index of the target context model in the above S202-B21124 includes the following steps S202-B211241 and S202-B211242, where

in S202-B211241, the index of the target context model is quantized, to obtain a quantized model index; and
in S202-B211242, the target context model is obtained based on the quantized model index.

In these embodiments, in order to further reduce the number of pieces of context information, the index of the target context model determined above is quantized, to obtain the quantized model index, and then the target context model is obtained from multiple preset context models based on the quantized model index.

The specific manner of quantizing the index of the target context model, and obtaining the quantized model index is not limited in the embodiments of the present application.

In a possible implementation, the index of the target context model is right shifted by n bits, to obtain the quantized model index, where n is a positive integer.

The specific value of n is not limited in the embodiments of the present application.

In an example, n is equal to 2 bits (n = 2 bits). In this case, if the number of contexts is 256 without quantization, right shifting the index of the context model by 2 bits may reduce the total number of contexts to 256 / 4 = 64, which may greatly reduce the number of contexts and improve the encoding efficiency of the point cloud.

In an example, n is equal to 4 bits (n = 4 bits). In this case, if the number of contexts is 256 without quantization, right shifting the index of the context model by 4 bits may reduce the total number of contexts to 256 / 16 = 16. In this way, 3 × 16 = 48 context models may be obtained for three coordinate axes, which greatly reduces the number of contexts and improves the encoding efficiency of the point cloud.

In the point cloud encoding method provided in the embodiments of the present application, N neighboring nodes of a current node are determined in encoding planar structure information of the current node in a current encoding frame, and predictive encoding is performed on the planar structure information of the current node based on occupancy information of the N neighboring nodes. That is, in performing the predictive encoding on the planar structure information of the current node in the embodiments of the present application, the correlation between the planar structure information of neighboring nodes is taken into account, which may effectively improve the encoding efficiency of the geometric information of the point cloud, thereby improving the predictive encoding performance of the planar structure information, and improve the encoding efficiency and performance of the point cloud.

It should be understood that FIGS. 8 to 17 are merely examples of the present application and should not be construed as limitations to the present application.

The preferred embodiments of the present application are described in detail above in conjunction with the accompanying drawings; however, the present application is not limited to the specific details in the above embodiments. Within the technical concept of the present application, a variety of simple variations may be made to the technical solution of the present application, and these simple variations all fall within the protection scope of the present application. For example, the various specific technical features described in the above specific embodiments may be combined in any suitable manner without contradiction. In order to avoid unnecessary repetition, the various possible combinations are not described additionally in the present application. As another example, any combination between different implementations of the present application is also possible, and as long as it does not violate the concept of the present application, which should also be regarded as the contents disclosed in the present application.

It should also be understood that in various method embodiments of the present application, the magnitude of a serial number of each of the above processes does not imply a sequential order of execution, and that the order of execution of the processes should be determined by their function and inherent logic without constituting any limitation of the process of implementing the embodiments of the present application. In addition, in the embodiments of the present application, the term "and/or" is only a description of an association relationship of associated objects, which indicates that there may be three kinds of relationships. Specifically, "A and/or B" may represent three situations: A exists alone, both A and B exist, and B exists alone. In addition, the character "/" herein generally indicates that the associated objects before and after this character are in an "or" relationship.

In conjunction with FIGS. 8 to 17, the method embodiments of the present application are described in detail above, and the apparatus embodiments of the present application will be described in detail below in conjunction with FIGS. 18 and 19.

FIG. 18 is a schematic block diagram of a point cloud decoding apparatus provided in the embodiments of the present application.

As shown in FIG. 18, the point cloud decoding apparatus 10 may include:

a determining unit 11, used to determine N neighboring nodes of a current node, where N is a positive integer; and

a decoding unit 12, used to perform predictive decoding on planar structure information of the current node based on occupancy information of the N neighboring nodes.

In some embodiments, the planar structure information of the current node includes planar position information of the current node, and the decoding unit 12 is specifically used to determine planar structure information of the N neighboring nodes based on the occupancy information of the N neighboring nodes; and perform the predictive decoding on the planar position information of the current node based on the planar structure information of the N neighboring nodes.

In some embodiments, the decoding unit 12 is specifically used to, for any one neighboring node in the N neighboring nodes, determine at least one of planar identification information or planar position information of the neighboring node based on occupancy information of the neighboring node.

In some embodiments, the decoding unit 12 is specifically used to determine first context information and/or second context information corresponding to an i-th coordinate axis based on the planar structure information of the N neighboring nodes, where the i-th coordinate axis is an X coordinate axis, a Y coordinate axis or a Z coordinate axis; and perform predictive decoding on the planar position information of the current node on the i-th coordinate axis based on the first context information and/or the second context information corresponding to the i-th coordinate axis.

In some embodiments, the decoding unit 12 is specifically used to determine the first context information corresponding to the i-th coordinate axis based on planar structure information of P neighboring nodes that are coplanar with the current node in the N neighboring nodes, where P is a positive integer.

In some embodiments, the decoding unit 12 is specifically used to, for any one neighboring node in the P neighboring nodes, perform an AND operation on planar structure information of the neighboring node and a first preset value corresponding to the i-th coordinate axis, to obtain a first value corresponding to the neighboring node; and weight first values corresponding to the P neighboring nodes, to obtain the first context information corresponding to the i-th coordinate axis.

In some embodiments, the decoding unit 12 is specifically used to determine the second context information corresponding to the i-th coordinate axis based on planar structure information of Q neighboring nodes that are coedge and/or coVertex with the current node in the N neighboring nodes, where Q is a positive integer.

In some embodiments, the decoding unit 12 is specifically used to, for any one neighboring node in the Q neighboring nodes, perform an AND operation on planar structure information of the neighboring node and a first preset value corresponding to the i-th coordinate axis, to obtain a first value corresponding to the neighboring node; and weight first values corresponding to the Q neighboring nodes, to obtain the second context information corresponding to the i-th coordinate axis.

In some embodiments, the decoding unit 12 is specifically used to perform the AND operation on the planar identification information and/or the planar position information of the neighboring node and the first preset value, to obtain the first value corresponding to the neighboring node.

In some embodiments, the decoding unit 12 is specifically used to determine the first context information corresponding to the i-th coordinate axis based on first planar structure information of the N neighboring nodes, where the first planar structure information includes the planar identification information or the planar position information of the neighboring node.

In some embodiments, the decoding unit 12 is specifically used to, for any one neighboring node in the N neighboring nodes, perform the AND operation on first planar structure information of the neighboring node and the first preset value corresponding to the i-th coordinate axis, to obtain a second value corresponding to the neighboring node; and weight second values corresponding to the N neighboring nodes, to obtain the first context information corresponding to the i-th coordinate axis.

In some embodiments, the decoding unit 12 is specifically used to determine the second context information corresponding to the i-th coordinate axis based on second planar structure information of the N neighboring nodes, where the second planar structure information is the planar identification information or the planar position information of the neighboring node.

In some embodiments, the decoding unit 12 is specifically used to, for any one neighboring node in the N neighboring nodes, perform the AND operation on second planar structure information of the neighboring node and a first preset value corresponding to the i-th coordinate axis, to obtain a third value corresponding to the neighboring node; and weight third values corresponding to the N neighboring nodes, to obtain the second context information corresponding to the i-th coordinate axis.

In some embodiments, the decoding unit 12 is specifically used to determine the number of left shifted bits corresponding to a target value, and determine a weighting factor corresponding to the target value based on the number of left shifted bits, where the target value is a first value corresponding to the neighboring node, a second value corresponding to the neighboring node, or a third value corresponding to the neighboring node; and weight a target value corresponding to at least one neighboring node based on the weighting factor of the target value, to obtain target context information corresponding to the i-th coordinate axis, where the at least one neighboring node is the P neighboring nodes, the Q neighboring nodes or the N neighboring nodes, and the target context information is the first context information or the second context information.

In some embodiments, the decoding unit 12 is specifically used to perform predictive decoding on the planar position information of the current node on the i-th coordinate axis based on the first context information and/or the second context information corresponding to the i-th coordinate axis, and preset context information.

In some embodiments, the preset context information includes at least one of:

the planar position information of the current node being obtained as three elements through predicting by using the occupancy information of the neighboring node: predicted to be a low plane, predicted to be a high plane, or unpredictable;

a spatial distance between a node at the same partition depth and the same coordinate as the current node and the current node being "close" or "far";

a planar position of a node at the same partition depth and the same coordinate as the current node; or

a coordinate dimension i being equal to 0, 1 or 2.

In some embodiments, the decoding unit 12 is specifically used to determine a target context model based on the first context information and/or the second context information corresponding to the i-th coordinate axis, and the preset context information; and perform the predictive decoding on the planar position information of the current node on the i-th coordinate axis based on the target context model.

In some embodiments, the decoding unit 12 is specifically used to classify the first context information and/or the second context information corresponding to the i-th coordinate axis, and the preset context information into primary information and minor information; and determine the target context model based on the primary information of the current node and a part or all of the minor information of the current node.

In some embodiments, the decoding unit 12 is specifically used to convert the primary information of the current node and the minor information of the current node into binary representation; determine the number of right shifted bits of the minor information corresponding to the current node, and select first minor information from binary represented minor information of the current node based on the number of right shifted bits of the minor information corresponding to the current node, where an initial value of the number of right shifted bits of the minor information is the total number of bits of the binary minor information; determine a first index based on binary represented primary information of the current node and the first minor information, and obtain an index of the target context model from a preset context model index cache based on the first index; and obtain the target context model based on the index of the target context model.

In some embodiments, the decoding unit 12 is specifically used to right shift the binary represented minor information of the current node by the number of right shifted bits of the minor information corresponding to the current node, to obtain the first minor information.

In some embodiments, the decoding unit 12 is specifically used to determine the number of right shifted bits of the minor information corresponding to a last layer of a current minor information partitioning tree, where the minor information partitioning tree is obtained by performing binary tree partitioning on the minor information starting from a highest bit of the minor information; and determine the number of right shifted bits of the minor information corresponding to the last layer as the number of right shifted bits of the minor information corresponding to the current node.

In some embodiments, the decoding unit 12 is further used to, in response to that the last layer of the current minor information partitioning tree is a non-full binary tree layer, and the number of times the first index occurs in the last layer is greater than or equal to a first preset threshold corresponding to the last layer, perform binary tree partitioning on the last layer, to obtain a new minor information partitioning tree.

In some embodiments, the decoding unit 12 is specifically used to, in response to that the last layer is not a last non-full binary tree layer of the minor information partitioning tree, perform non-full binary tree partitioning on the last layer, to obtain the new minor information partitioning tree.

In some embodiments, the decoding unit 12 is specifically used to, in response to that the last layer is a last non-full binary tree layer of the minor information partitioning tree, perform full binary tree partitioning on the last layer, to obtain the new minor information partitioning tree.

In some embodiments, the decoding unit 12 is further used to, in response to that a last layer of a current minor information partitioning tree is a full binary tree layer, determine the number of right shifted bits of the minor information and a first preset threshold corresponding to a last non-full binary tree layer of the current minor information partitioning tree; select second minor information from the binary represented minor information of the current node based on the number of right shifted bits of the minor information corresponding to the last non-full binary tree layer; determine a second index based on the binary represented primary information of the current node and the second minor information; and in response to that the number of times the second index occurs in the last layer is greater than or equal to a second preset threshold corresponding to the last non-full binary tree layer, perform full binary tree partitioning on the last layer, to obtain a new minor information partitioning tree.

In some embodiments, the decoding unit 12 is further used to subtract one from the number of right shifted bits of the minor information corresponding to the current node, to obtain a new number of right shifted bits of the minor information.

In some embodiments, the decoding unit 12 is specifically used to quantize the index of the target context model, to obtain a quantized model index; and obtain the target context model based on the quantized model index.

In some embodiments, the decoding unit 12 is specifically used to right shift the index of the target context model by n bits, to obtain the quantized model index, where n is a positive integer.

In some embodiments, the decoding unit 12 is further used to update the index of the target context model in the context model index cache.

It should be understood that the apparatus embodiments and the method embodiments may correspond to each other, and similar descriptions may be referred to that of the method embodiments, which will not be repeated here to avoid repetition. Specifically, the point cloud decoding apparatus 10 shown in FIG. 18 may correspond to a corresponding subject performing the point cloud decoding method in the embodiments of the present application, and the above and other operations and/or functions of each unit in the point cloud decoding apparatus 10 are respectively for implementing corresponding processes in the point cloud decoding method, which will not be repeated here for the sake of brevity.

FIG. 19 is a schematic block diagram of a point cloud encoding apparatus provided in the embodiments of the present application.

As shown in FIG. 19, the point cloud encoding apparatus 20 includes:

a determining unit 21, used to determine N neighboring nodes of a current node, where N is a positive integer; and

an encoding unit 22, used to perform predictive encoding on planar structure information of the current node based on occupancy information of the N neighboring nodes.

In some embodiments, the planar structure information of the current node includes planar position information of the current node, and the encoding unit 22 is specifically used to determine planar structure information of the N neighboring nodes based on the occupancy information of the N neighboring nodes; and perform the predictive encoding on the planar position information of the current node based on the planar structure information of the N neighboring nodes.

In some embodiments, the encoding unit 22 is specifically used to, for any one neighboring node in the N neighboring nodes, determine at least one of planar identification information or planar position information of the neighboring node based on occupancy information of the neighboring node.

In some embodiments, the encoding unit 22 is specifically used to determine first context information and/or second context information corresponding to an i-th coordinate axis based on the planar structure information of the N neighboring nodes, where the i-th coordinate axis is an X coordinate axis, a Y coordinate axis or a Z coordinate axis; and perform predictive encoding on the planar position information of the current node on the i-th coordinate axis based on the first context information and/or the second context information corresponding to the i-th coordinate axis.

In some embodiments, the encoding unit 22 is specifically used to determine the first context information corresponding to the i-th coordinate axis based on planar structure information of P neighboring nodes that are coplanar with the current node in the N neighboring nodes, where P is a positive integer.

In some embodiments, the encoding unit 22 is specifically used to, for any one neighboring node in the P neighboring nodes, perform an AND operation on planar structure information of the neighboring node and a first preset value corresponding to the i-th coordinate axis, to obtain a first value corresponding to the neighboring node; and weight first values corresponding to the P neighboring nodes, to obtain the first context information corresponding to the i-th coordinate axis.

In some embodiments, the encoding unit 22 is specifically used to determine the second context information corresponding to the i-th coordinate axis based on planar structure information of Q neighboring nodes that are coedge and/or coVertex with the current node in the N neighboring nodes, where Q is a positive integer.

In some embodiments, the encoding unit 22 is specifically used to, for any one neighboring node in the Q neighboring nodes, perform an AND operation on planar structure information of the neighboring node and a first preset value corresponding to the i-th coordinate axis, to obtain a first value corresponding to the neighboring node; and weight first values corresponding to the Q neighboring nodes, to obtain the second context information corresponding to the i-th coordinate axis.

In some embodiments, the encoding unit 22 is specifically used to perform the AND operation on the planar identification information and/or the planar position information of the neighboring node and the first preset value, to obtain the first value corresponding to the neighboring node.

In some embodiments, the encoding unit 22 is specifically used to determine the first context information corresponding to the i-th coordinate axis based on first planar structure information of the N neighboring nodes, where the first planar structure information includes the planar identification information or the planar position information of the neighboring node.

In some embodiments, the encoding unit 22 is specifically used to, for any one neighboring node in the N neighboring nodes, perform the AND operation on first planar structure information of the neighboring node and the first preset value corresponding to the i-th coordinate axis, to obtain a second value corresponding to the neighboring node; and weight second values corresponding to the N neighboring nodes, to obtain the first context information corresponding to the i-th coordinate axis.

In some embodiments, the encoding unit 22 is specifically used to determine the second context information corresponding to the i-th coordinate axis based on second planar structure information of the N neighboring nodes, where the second planar structure information is the planar identification information or the planar position information of the neighboring node.

In some embodiments, the encoding unit 22 is specifically used to, for any one neighboring node in the N neighboring nodes, perform the AND operation on second planar structure information of the neighboring node and a first preset value corresponding to the i-th coordinate axis, to obtain a third value corresponding to the neighboring node; and weight third values corresponding to the N neighboring nodes, to obtain the second context information corresponding to the i-th coordinate axis.

In some embodiments, the encoding unit 22 is specifically used to determine the number of left shifted bits corresponding to a target value, and determine a weighting factor corresponding to the target value based on the number of left shifted bits, where the target value is a first value corresponding to the neighboring node, a second value corresponding to the neighboring node, or a third value corresponding to the neighboring node; and weight a target value corresponding to at least one neighboring node based on the weighting factor of the target value, to obtain target context information corresponding to the i-th coordinate axis, where the at least one neighboring node is the P neighboring nodes, the Q neighboring nodes or the N neighboring nodes, and the target context information is the first context information or the second context information.

In some embodiments, the encoding unit 22 is specifically used to perform predictive encoding on the planar position information of the current node on the i-th coordinate axis based on the first context information and/or the second context information corresponding to the i-th coordinate axis, and preset context information.

In some embodiments, the preset context information includes at least one of:

the planar position information of the current node being obtained as three elements through predicting by using the occupancy information of the neighboring node: predicted to be a low plane, predicted to be a high plane, or unpredictable;

a spatial distance between a node at the same partition depth and the same coordinate as the current node and the current node being "close" or "far";

a planar position of a node at the same partition depth and the same coordinate as the current node; or

a coordinate dimension i being equal to 0, 1 or 2.

In some embodiments, the encoding unit 22 is specifically used to determine a target context model based on the first context information and/or the second context information corresponding to the i-th coordinate axis, and the preset context information; and perform the predictive encoding on the planar position information of the current node on the i-th coordinate axis based on the target context model.

In some embodiments, the encoding unit 22 is specifically used to classify the first context information and/or the second context information corresponding to the i-th coordinate axis, and the preset context information into primary information and minor information; and determine the target context model based on the primary information of the current node and a part or all of the minor information of the current node.

In some embodiments, the encoding unit 22 is specifically used to convert the primary information of the current node and the minor information of the current node into binary representation; determine the number of right shifted bits of the minor information corresponding to the current node, and select first minor information from binary represented minor information of the current node based on the number of right shifted bits of the minor information corresponding to the current node, where an initial value of the number of right shifted bits of the minor information is the total number of bits of the binary minor information; determine a first index based on binary represented primary information of the current node and the first minor information, and obtain an index of the target context model from a preset context model index cache based on the first index; and obtain the target context model based on the index of the target context model.

In some embodiments, the encoding unit 22 is specifically used to right shift the binary represented minor information of the current node by the number of right shifted bits of the minor information corresponding to the current node, to obtain the first minor information.

In some embodiments, the encoding unit 22 is specifically used to determine the number of right shifted bits of the minor information corresponding to a last layer of a current minor information partitioning tree, where the minor information partitioning tree is obtained by performing binary tree partitioning on the minor information starting from a highest bit of the minor information; and determine the number of right shifted bits of the minor information corresponding to the last layer as the number of right shifted bits of the minor information corresponding to the current node.

In some embodiments, the encoding unit 22 is further used to, in response to that the last layer of the current minor information partitioning tree is a non-full binary tree layer, and the number of times the first index occurs in the last layer is greater than or equal to a first preset threshold corresponding to the last layer, perform binary tree partitioning on the last layer, to obtain a new minor information partitioning tree.

In some embodiments, the encoding unit 22 is specifically used to, in response to that the last layer is not a last non-full binary tree layer of the minor information partitioning tree, perform non-full binary tree partitioning on the last layer, to obtain the new minor information partitioning tree.

In some embodiments, the encoding unit 22 is specifically used to, in response to that the last layer is a last non-full binary tree layer of the minor information partitioning tree, perform full binary tree partitioning on the last layer, to obtain the new minor information partitioning tree.

In some embodiments, the encoding unit 22 is further used to, in response to that a last layer of a current minor information partitioning tree is a full binary tree layer, determine the number of right shifted bits of the minor information and a first preset threshold corresponding to a last non-full binary tree layer of the current minor information partitioning tree; select second minor information from the binary represented minor information of the current node based on the number of right shifted bits of the minor information corresponding to the last non-full binary tree layer; determine a second index based on the binary represented primary information of the current node and the second minor information; and in response to that the number of times the second index occurs in the last layer is greater than or equal to a second preset threshold corresponding to the last non-full binary tree layer, perform full binary tree partitioning on the last layer, to obtain a new minor information partitioning tree.

In some embodiments, the encoding unit 22 is further used to subtract one from the number of right shifted bits of the minor information corresponding to the current node, to obtain a new number of right shifted bits of the minor information.

In some embodiments, the encoding unit 22 is specifically used to quantize the index of the target context model, to obtain a quantized model index; and obtain the target context model based on the quantized model index.

In some embodiments, the encoding unit 22 is specifically used to right shift the index of the target context model by n bits, to obtain the quantized model index, where n is a positive integer.

In some embodiments, the encoding unit 22 is further used to update the index of the target context model in the context model index cache.

It should be understood that the apparatus embodiments and the method embodiments may correspond to each other, and similar descriptions may be referred to that of the method embodiments, which will not be repeated here to avoid repetition. Specifically, the point cloud encoding apparatus 20 shown in FIG. 19 may correspond to a corresponding subject performing the point cloud encoding method in the embodiments of the present application, and the above and other operations and/or functions of each unit in the point cloud encoding apparatus 20 are respectively for implementing corresponding processes in the point cloud encoding method, which will not be repeated here for the sake of brevity.

The above describes the apparatuses and the system of the embodiments of the present application from the perspective of functional units in conjunction with the accompanying drawings. It should be understood that the functional units may be implemented in the form of hardware, or may be implemented by instructions in the form of software, or may be implemented by a combination of hardware units and software units. Specifically, each step of the method embodiments in the embodiments of the present application may be completed by the hardware integrated logic circuit and/or software instructions in the processor. The steps of the method disclosed in the embodiments of the present application may be directly reflected as being performed by a hardware decoding processor, or being performed by a combination of hardware units and software units in the decoding processor. Optionally, the software unit may be located in a mature storage medium in the art, such as a random access memory, a flash memory, a read-only memory, a programmable read-only memory, an electrically erasable programmable memory, and a register. The storage medium is located in the memory, and the processor reads the information in the memory and completes the steps in the above method embodiments in conjunction with its hardware.

FIG. 20 is a schematic block diagram of an electronic device provided in the embodiments of the present application.

As shown in FIG. 20, the electronic device 30 may be the point cloud decoding apparatus or the point cloud encoding apparatus as described in the embodiments of the present application, and the electronic device 30 may include: a memory 33 and a processor 32, where the memory 33 is used to store a computer program 34 and transmit the program codes 34 to the processor 32, in other words, the processor 32 may call the computer program 34 from the memory 33 and run the computer program 34, to implement the method in the embodiments of the present application.

For example, the processor 32 may be used to perform the steps in the method 200 according to the instructions in the computer program 34.

In some embodiments of the present application, the processor 32 may include but is not limited to: a general purpose processor, a digital signal processor (DSP), an application specific integrated circuits (ASIC), a field programmable gate array (FPGA) or other programmable logic device, a discrete gate. a transistor logic device, a discrete hardware component, or the like.

In some embodiments of the present application, the memory 33 includes but is not limited to: a volatile (transitory) memory and/or a non-volatile (non-transitory) memory, where the non-volatile memory may be a read-only memory (ROM), a programmable read-only memory (programmable ROM, PROM), an erasable programmable read-only memory (Erasable PROM, EPROM), an electrically erasable programmable read-only memory (Electrically, EEPROM), or a flash memory; and the volatile memory may be a random access memory (RAM), serving as an external cache. As an example and not limitation, a variety of forms of RAMs are available, such as a static random access memory (Static RAM, SRAM), a dynamic random access memory (Dynamic RAM, DRAM), a synchronous dynamic random access memory (Synchronous, SDRAM), a double data rate synchronous dynamic random access memory (Double Data Rate SDRAM, DDR SDRAM), an enhanced synchronous dynamic random access memory (Enhanced SDRAM, ESDRAM), a synchronous link dynamic random access memory (Synchlink DRAM, SLDRAM), and a direct memory bus random access memory (Direct Rambus RAM, DR RAM).

In some embodiments of the present application, the computer program 34 may be partitioned into one or more units. The one or more units are stored in the memory 33 and performed by the processor 32, to complete the method provided in the present application. The one or more units may be a series of computer program instruction segments capable of completing specific functions, and the instruction segments are used to describe the performing process of the computer program 34 in the electronic device 30.

As shown in FIG. 20, the electronic device 30 may further include: a transceiver 33, where the transceiver 33 is connectable to the processor 32 or the memory 33.

The processor 32 may control the transceiver 33 to communicate with other devices, and specifically, may control the transceiver 33 to transmit information or data to other devices, or control the transceiver 33 to receive information or data transmitted by other devices. The transceiver 33 may include a transmitter and a receiver. The transceiver 33 may further include an antenna, and there may be one or more antennas.

It should be understood that various components in the electronic device 30 are connected via a bus system, where the bus system includes not only a data bus but also a power bus, a control bus and a status signal bus.

FIG. 21 is a schematic block diagram of a point cloud encoding and decoding system provided in the embodiments of the present application.

As shown in FIG. 21, the point cloud encoding and decoding system 40 may include: a point cloud encoder 41 and a point cloud decoder 42, where the point cloud encoder 41 is used to perform the point cloud encoding method involved in the embodiments of the present application, and the point cloud decoder 42 is used to perform the point cloud decoding method involved in the embodiments of the present application.

The present application further provides a bitstream, which is generated according to the above encoding method.

The present application further provides a computer storage medium with a computer program stored thereon. The computer program, when performed on a computer, enables the computer to perform the method of the above method embodiments. In other words, the embodiments of the present application further provide a computer program product including instructions, where the instructions, when performed on a computer, enable the computer to perform the method of the above method embodiments.

When implemented using software, all or part of the above embodiments may be implemented in a form of a computer program product. The computer program product includes one or more computer instructions. When loaded and executed on a computer, the computer program instructions produce, in all or in part, a process or function in accordance with the embodiments of the present application. The computer may be a general purpose computer, a special purpose computer, a computer network, or any of other programmable apparatuses. The computer instructions may be stored in a computer-readable storage medium, or transmitted from one computer-readable storage medium to another computer-readable storage medium. For example, the computer instructions may be transmitted from a website, a computer, a server, or a data center to another website, computer, server, or data center through wired manner (e.g., coaxial cable, optical fiber, or digital subscriber line (DSL)) or wireless (e.g., infrared, radio, or microwave) manner. The computer-readable storage medium may be any available medium to which a computer can access or may be a data storage device, such as a server or a data center that includes one or more available media. The available medium may be a magnetic medium (e.g., a floppy disk, a hard disk, or a magnetic tape), an optical medium (e.g., a digital video disc (DVD)), or a semiconductor medium (e.g., a solid state disk (SSD)).

Those skilled in the art will appreciate that the units and algorithm steps of each example described in conjunction with the embodiments disclosed herein may be implemented by electronic hardware, or a combination of computer software and electronic hardware. Whether these functions are performed in hardware or software depends on the specific application and design constraints of the technical solution. Professional technicians may use different methods to implement the described functions for each specific application, but such implementation should not be considered to be beyond the scope of the present application.

In several embodiments provided by the present application, it should be understood that the disclosed system, apparatuses and methods may be implemented in other manners. For example, the apparatus embodiments described above are only schematic. For example, the partition of the units is only partition of logical functions, and there may be other partition manners in the actual implementation, such as a plurality of units or components may be combined or integrated into another system, or some features may be ignored or not implemented. In addition, the mutual coupling or direct coupling or communication connection illustrated or discussed may be indirect coupling or communication connection through some interfaces, apparatuses or units, which may be in electrical, mechanical or other forms.

The units described as discrete components may or may not be physically separated, and the components shown as units may or may not be physical units, that is, they may be located at one place, or may be distributed onto a plurality of network units. Some or all of these units may be selected depending on actual requirements to fulfill the purpose of the solution of the embodiments. For example, various functional units in various embodiments of the present application may be integrated into one processing unit, or various units may exist physically alone, or two or more units may be integrated into one unit.

The foregoing descriptions are merely specific implementations of the present application, but the protection scope of the present application is not limited thereto. Any skilled person in the art could readily conceive of variations or replacements within the technical scope of the present application, which shall be all included in the protection scope of the present application. Therefore, the protection scope of the present application shall be subject to the protection scope of claims.

**Claims**

1. A point cloud decoding method, comprising:

   determining N neighboring nodes of a current node, N being a positive integer; and
   performing predictive decoding on planar structure information of the current node based on occupancy information of the N neighboring nodes.

2. The method according to claim 1, wherein the planar structure information of the current node comprises planar position information of the current node, and performing the predictive decoding on the planar structure information of the current node based on the occupancy information of the N neighboring nodes comprises:

   determining planar structure information of the N neighboring nodes based on the occupancy information of the N neighboring nodes; and
   performing the predictive decoding on the planar position information of the current node based on the planar structure information of the N neighboring nodes.

3. The method according to claim 2, wherein determining the planar structure information of the N neighboring nodes based on the occupancy information of the N neighboring nodes comprises:
   for any one neighboring node in the N neighboring nodes, determining at least one of planar identification information or planar position information of the neighboring node based on occupancy information of the neighboring node.

4. The method according to claim 3, wherein performing the predictive decoding on the planar position information of the current node based on the planar structure information of the N neighboring nodes comprises:

   determining first context information and/or second context information corresponding to an i-th coordinate axis based on the planar structure information of the N neighboring nodes, the i-th coordinate axis being an X coordinate axis, a Y coordinate axis or a Z coordinate axis; and
   performing the predictive decoding on planar position information of the current node on the i-th coordinate axis based on the first context information and/or the second context information corresponding to the i-th coordinate axis.

5. The method according to claim 4, wherein determining the first context information corresponding to the i-th coordinate axis based on the planar structure information of the N neighboring nodes comprises:
   determining the first context information corresponding to the i-th coordinate axis based on planar structure information of P neighboring nodes that are coplanar with the current node in the N neighboring nodes, P being a positive integer.

6. The method according to claim 5, wherein determining the first context information corresponding to the i-th coordinate axis based on the planar structure information of the P neighboring nodes that are coplanar with the current node in the N neighboring nodes comprises:

   for any one neighboring node in the P neighboring nodes, performing an AND operation on planar structure information of the neighboring node and a first preset value corresponding to the i-th coordinate axis, to obtain a first value corresponding to the neighboring node; and
   weighting first values corresponding to the P neighboring nodes, to obtain the first context information corresponding to the i-th coordinate axis.

7. The method according to claim 4, wherein determining the second context information corresponding to the i-th coordinate axis based on the planar structure information of the N neighboring nodes comprises:
   determining the second context information corresponding to the i-th coordinate axis based on planar structure information of Q neighboring nodes that are coedge and/or coVertex with the current node in the N neighboring nodes, Q being a positive integer.

8. The method according to claim 7, wherein determining the second context information corresponding to the i-th coordinate axis based on the planar structure information of the Q neighboring nodes that are coedge and/or coVertex with the current node in the N neighboring nodes comprises:

for any one neighboring node in the Q neighboring nodes, performing an AND operation on planar structure information of the neighboring node and a first preset value corresponding to the i-th coordinate axis, to obtain a first value corresponding to the neighboring node; and

weighting first values corresponding to the Q neighboring nodes, to obtain the second context information corresponding to the i-th coordinate axis.

9. The method according to claim 6 or 8, wherein performing the AND operation on the planar structure information of the neighboring node and the first preset value corresponding to the i-th coordinate axis, to obtain the first value corresponding to the neighboring node comprises:

performing the AND operation on planar identification information and/or planar position information of the neighboring node and the first preset value, to obtain the first value corresponding to the neighboring node.

10. The method according to claim 4, wherein determining the first context information corresponding to the i-th coordinate axis based on the planar structure information of the N neighboring nodes comprises:

determining the first context information corresponding to the i-th coordinate axis based on first planar structure information of the N neighboring nodes, the first planar structure information comprising the planar identification information or the planar position information of the neighboring node.

11. The method according to claim 10, wherein determining the first context information corresponding to the i-th coordinate axis based on the first planar structure information of the N neighboring nodes comprises:

for any one neighboring node in the N neighboring nodes, performing an AND operation on first planar structure information of the neighboring node and a first preset value corresponding to the i-th coordinate axis, to obtain a second value corresponding to the neighboring node; and

weighting second values corresponding to the N neighboring nodes, to obtain the first context information corresponding to the i-th coordinate axis.

12. The method according to claim 4, wherein determining the second context information corresponding to the i-th coordinate axis based on the planar structure information of the N neighboring nodes comprises:

determining the second context information corresponding to the i-th coordinate axis based on second planar structure information of the N neighboring nodes, the second planar structure information being the planar identification information or the planar position information of the neighboring node.

13. The method according to claim 12, wherein determining the second context information corresponding to the i-th coordinate axis based on the second planar structure information of the N neighboring nodes comprises:

for any one neighboring node in the N neighboring nodes, performing an AND operation on second planar structure information of the neighboring node and a first preset value corresponding to the i-th coordinate axis, to obtain a third value corresponding to the neighboring node; and

weighting third values corresponding to the N neighboring nodes, to obtain the second context information corresponding to the i-th coordinate axis.

14. The method according to claim 6, 8, 11 or 13, further comprising:

determining a number of left shifted bits corresponding to a target value, and determining a weighting factor corresponding to the target value based on the number of left shifted bits, the target value being a first value corresponding to the neighboring node, a second value corresponding to the neighboring node, or a third value corresponding to the neighboring node; and

weighting a target value corresponding to at least one neighboring node based on the weighting factor of the target value, to obtain target context information corresponding to the i-th coordinate axis, the at least one neighboring node being the P neighboring nodes, the Q neighboring nodes or the N neighboring nodes, and the target context information being the first context information or the second context information.

15. The method according to claim 4, wherein performing the predictive decoding on the planar position information of the current node on the i-th coordinate axis based on the first context information and/or the second context information corresponding to the i-th coordinate axis comprises:

performing the predictive decoding on the planar position information of the current node on the i-th coordinate axis based on the first context information and/or the second context information corresponding to the i-th coordinate axis, and preset context information.

16. The method according to claim 15, wherein the preset context information comprises at least one of following:

the planar position information of the current node being obtained as three elements through predicting by using the occupancy information of the neighboring node: predicted to be a low plane, predicted to be a high plane, or unpredictable;

a spatial distance between a node at a same partition depth and a same coordinate as the current node and the current node being "close" or "far";

a planar position of a node at a same partition depth and a same coordinate as the current node in response to that it is a plane; or

a coordinate dimension i being equal to 0, 1 or 2.

17. The method according to claim 15, wherein performing the predictive decoding on the planar position information of the current node on the i-th coordinate axis based on the first context information and/or the second context information corresponding to the i-th coordinate axis, and the preset context information comprises:

determining a target context model based on the first context information and/or the second context information corresponding to the i-th coordinate axis, and the preset context information; and

performing the predictive decoding on the planar position information of the current node on the i-th coordinate axis based on the target context model.

18. The method according to claim 17, wherein determining the target context model based on the first context information and/or the second context information corresponding to the i-th coordinate axis, and the preset context information comprises:

classifying the first context information and/or the second context information corresponding to the i-th coordinate axis, and the preset context information into primary information and minor information; and

determining the target context model based on the primary information of the current node and a part or all of the minor information of the current node.

19. The method according to claim 18, wherein determining the target context model based on the primary information of the current node and the part or all of the minor information of the current node comprises:

converting the primary information of the current node and the minor information of the current node into binary representation;

determining a number of right shifted bits of the minor information corresponding to the current node, and selecting first minor information from binary represented minor information of the current node based on the number of right shifted bits of the minor information corresponding to the current node, wherein an initial value of the number of right shifted bits of the minor information is a total number of bits of the binary minor information;

determining a first index based on binary represented primary information of the current node and the first minor information, and obtaining an index of the target context model from a preset context model index cache based on the first index; and

obtaining the target context model based on the index of the target context model.

20. The method according to claim 19, wherein selecting the first minor information from the binary represented minor information of the current node based on the number of right shifted bits of the minor information corresponding to the current node comprises:

right shifting the binary represented minor information of the current node by the number of right shifted bits of the minor information corresponding to the current node, to obtain the first minor information.

21. The method according to claim 19, wherein determining the number of right shifted bits of the minor information corresponding to the current node comprises:

determining a number of right shifted bits of the minor information corresponding to a last layer of a current minor information partitioning tree, the minor information partitioning tree being obtained by performing binary tree partitioning on the minor information starting from a highest bit of the minor information; and

determining the number of right shifted bits of the minor information corresponding to the last layer as the number of right shifted bits of the minor information corresponding to the current node.

22. The method according to claim 21, further comprising:
in response to that the last layer of the current minor information partitioning tree is a non-full binary tree layer, and a number of times the first index occurs in the last layer is greater than or equal to a first preset threshold corresponding to the last layer, performing binary tree partitioning on the last layer, to obtain a new minor information partitioning tree.

23. The method according to claim 22, wherein performing the binary tree partitioning on the last layer, to obtain the new minor information partitioning tree comprises:
in response to that the last layer is not a last non-full binary tree layer of the minor information partitioning tree, performing non-full binary tree partitioning on the last layer, to obtain the new minor information partitioning tree.

24. The method according to claim 22, wherein performing the binary tree partitioning on the last layer, to obtain the new minor information partitioning tree comprises:
in response to that the last layer is a last non-full binary tree layer of the minor information partitioning tree, performing full binary tree partitioning on the last layer, to obtain the new minor information partitioning tree.

25. The method according to claim 20, further comprising:

in response to that a last layer of a current minor information partitioning tree is a full binary tree layer, determining a number of right shifted bits of the minor information and a first preset threshold corresponding to a last non-full binary tree layer of the current minor information partitioning tree;
selecting second minor information from the binary represented minor information of the current node based on the number of right shifted bits of the minor information corresponding to the last non-full binary tree layer;
determining a second index based on the binary represented primary information of the current node and the second minor information; and
in response to that a number of times the second index occurs in the last layer is greater than or equal to a second preset threshold corresponding to the last non-full binary tree layer, performing full binary tree partitioning on the last layer, to obtain a new minor information partitioning tree.

26. The method according to claim 22 or 25, further comprising:
subtracting one from the number of right shifted bits of the minor information corresponding to the current node, to obtain a new number of right shifted bits of the minor information.

27. The method according to claim 19, wherein obtaining the target context model based on the index of the target context model comprises:

quantizing the index of the target context model, to obtain a quantized model index; and
obtaining the target context model based on the quantized model index.

28. The method according to claim 27, wherein quantizing the index of the target context model, to obtain the quantized model index comprises:
right shifting the index of the target context model by n bits, to obtain the quantized model index, n being a positive integer.

29. The method according to claim 19, further comprising:
updating the index of the target context model in the context model index cache.

30. A point cloud encoding method, comprising:

determining N neighboring nodes of a current node, N being a positive integer; and
performing predictive encoding on planar structure information of the current node based on occupancy information of the N neighboring nodes.

31. The method according to claim 30, wherein the planar structure information of the current node comprises planar position information of the current node, and performing the predictive encoding on the planar structure information of the current node based on the occupancy information of the N neighboring nodes comprises:

determining planar structure information of the N neighboring nodes based on the occupancy information of the N neighboring nodes; and

performing the predictive encoding on the planar position information of the current node based on the planar structure information of the N neighboring nodes.

32. The method according to claim 31, wherein determining the planar structure information of the N neighboring nodes based on the occupancy information of the N neighboring nodes comprises:
for any one neighboring node in the N neighboring nodes, determining at least one of planar identification information or planar position information of the neighboring node based on occupancy information of the neighboring node.

33. The method according to claim 32, wherein performing the predictive encoding on the planar position information of the current node based on the planar structure information of the N neighboring nodes comprises:

determining first context information and/or second context information corresponding to an i-th coordinate axis based on the planar structure information of the N neighboring nodes, the i-th coordinate axis being an X coordinate axis, a Y coordinate axis or a Z coordinate axis; and

performing the predictive encoding on planar position information of the current node on the i-th coordinate axis based on the first context information and/or the second context information corresponding to the i-th coordinate axis.

34. The method according to claim 33, wherein determining the first context information corresponding to the i-th coordinate axis based on the planar structure information of the N neighboring nodes comprises:
determining the first context information corresponding to the i-th coordinate axis based on planar structure information of P neighboring nodes that are coplanar with the current node in the N neighboring nodes, P being a positive integer.

35. The method according to claim 34, wherein determining the first context information corresponding to the i-th coordinate axis based on the planar structure information of the P neighboring nodes that are coplanar with the current node in the N neighboring nodes comprises:

for any one neighboring node in the P neighboring nodes, performing an AND operation on planar structure information of the neighboring node and a first preset value corresponding to the i-th coordinate axis, to obtain a first value corresponding to the neighboring node; and

weighting first values corresponding to the P neighboring nodes, to obtain the first context information corresponding to the i-th coordinate axis.

36. The method according to claim 33, wherein determining the second context information corresponding to the i-th coordinate axis based on the planar structure information of the N neighboring nodes comprises:
determining the second context information corresponding to the i-th coordinate axis based on planar structure information of Q neighboring nodes that are coedge and/or coVertex with the current node in the N neighboring nodes, Q being a positive integer.

37. The method according to claim 36, wherein determining the second context information corresponding to the i-th coordinate axis based on the planar structure information of the Q neighboring nodes that are coedge and/or coVertex with the current node in the N neighboring nodes comprises:

for any one neighboring node in the Q neighboring nodes, performing an AND operation on planar structure information of the neighboring node and a first preset value corresponding to the i-th coordinate axis, to obtain a first value corresponding to the neighboring node; and

weighting first values corresponding to the Q neighboring nodes, to obtain the second context information corresponding to the i-th coordinate axis.

38. The method according to claim 35 or 37, wherein performing the AND operation on the planar structure information of the neighboring node and the first preset value corresponding to the i-th coordinate axis, to obtain the first value corresponding to the neighboring node comprises:
performing the AND operation on planar identification information and/or planar position information of the neighboring node and the first preset value, to obtain the first value corresponding to the neighboring node.

39. The method according to claim 33, wherein determining the first context information corresponding to the i-th coordinate axis based on the planar structure information of the N neighboring nodes comprises:
determining the first context information corresponding to the i-th coordinate axis based on first planar structure information of the N neighboring nodes, the first planar structure information comprising the planar identification information or the planar position information of the neighboring node.

40. The method according to claim 39, wherein determining the first context information corresponding to the i-th coordinate axis based on the first planar structure information of the N neighboring nodes comprises:

for any one neighboring node in the N neighboring nodes, performing an AND operation on first planar structure information of the neighboring node and a first preset value corresponding to the i-th coordinate axis, to obtain a second value corresponding to the neighboring node; and
weighting second values corresponding to the N neighboring nodes, to obtain the first context information corresponding to the i-th coordinate axis.

41. The method according to claim 33, wherein determining the second context information corresponding to the i-th coordinate axis based on the planar structure information of the N neighboring nodes comprises:
determining the second context information corresponding to the i-th coordinate axis based on second planar structure information of the N neighboring nodes, the second planar structure information being the planar identification information or the planar position information of the neighboring node.

42. The method according to claim 41, wherein determining the second context information corresponding to the i-th coordinate axis based on the second planar structure information of the N neighboring nodes comprises:

for any one neighboring node in the N neighboring nodes, performing an AND operation on second planar structure information of the neighboring node and a first preset value corresponding to the i-th coordinate axis, to obtain a third value corresponding to the neighboring node; and
weighting third values corresponding to the N neighboring nodes, to obtain the second context information corresponding to the i-th coordinate axis.

43. The method according to claim 35, 37, 40 or 42, further comprising:

determining a number of left shifted bits corresponding to a target value, and determining a weighting factor corresponding to the target value based on the number of left shifted bits, the target value being a first value corresponding to the neighboring node, a second value corresponding to the neighboring node, or a third value corresponding to the neighboring node; and
weighting a target value corresponding to at least one neighboring node based on the weighting factor of the target value, to obtain target context information corresponding to the i-th coordinate axis, the at least one neighboring node being the P neighboring nodes, the Q neighboring nodes or the N neighboring nodes, and the target context information being the first context information or the second context information.

44. The method according to claim 33, wherein performing the predictive encoding on the planar position information of the current node on the i-th coordinate axis based on the first context information and/or the second context information corresponding to the i-th coordinate axis comprises:
performing the predictive encoding on the planar position information of the current node on the i-th coordinate axis based on the first context information and/or the second context information corresponding to the i-th coordinate axis, and preset context information.

45. The method according to claim 44, wherein the preset context information comprises at least one of following:

the planar position information of the current node being obtained as three elements through predicting by using the occupancy information of the neighboring node: predicted to be a low plane, predicted to be a high plane, or unpredictable;
a spatial distance between a node at a same partition depth and a same coordinate as the current node and the current node being "close" or "far";
a planar position of a node at a same partition depth and a same coordinate as the current node in response to that it is a plane; or
a coordinate dimension i being equal to 0, 1 or 2.

**46.** The method according to claim 44, wherein performing the predictive encoding on the planar position information of the current node on the i-th coordinate axis based on the first context information and/or the second context information corresponding to the i-th coordinate axis, and the preset context information comprises:

determining a target context model based on the first context information and/or the second context information corresponding to the i-th coordinate axis, and the preset context information; and
performing the predictive encoding on the planar position information of the current node on the i-th coordinate axis based on the target context model.

**47.** The method according to claim 46, wherein determining the target context model based on the first context information and/or the second context information corresponding to the i-th coordinate axis and the preset context information comprises:

classifying the first context information and/or the second context information corresponding to the i-th coordinate axis, and the preset context information into primary information and minor information; and
determining the target context model based on the primary information of the current node and a part or all of the minor information of the current node.

**48.** The method according to claim 47, wherein determining the target context model based on the primary information of the current node and the part or all of the minor information of the current node comprises:

converting the primary information of the current node and the minor information of the current node into binary representation;
determining a number of right shifted bits of the minor information corresponding to the current node, and selecting first minor information from binary represented minor information of the current node based on the number of right shifted bits of the minor information corresponding to the current node, wherein an initial value of the number of right shifted bits of the minor information is a total number of bits of the binary minor information; determining a first index based on binary represented primary information of the current node and the first minor information, and obtaining an index of the target context model from a preset context model index cache based on the first index; and
obtaining the target context model based on the index of the target context model.

**49.** The method according to claim 48, wherein selecting the first minor information from the binary represented minor information of the current node based on the number of right shifted bits of the minor information corresponding to the current node comprises:
right shifting the binary represented minor information of the current node by the number of right shifted bits of the minor information corresponding to the current node, to obtain the first minor information.

**50.** The method according to claim 48, wherein determining the number of right shifted bits of the minor information corresponding to the current node comprises:

determining a number of right shifted bits of the minor information corresponding to a last layer of a current minor information partitioning tree, the minor information partitioning tree being obtained by performing binary tree partitioning on the minor information starting from a highest bit of the minor information; and
determining the number of right shifted bits of the minor information corresponding to the last layer as the number of right shifted bits of the minor information corresponding to the current node.

**51.** The method according to claim 50, further comprising:
in response to that the last layer of the current minor information partitioning tree is a non-full binary tree layer, and a number of times the first index occurs in the last layer is greater than or equal to a first preset threshold corresponding to the last layer, performing binary tree partitioning on the last layer, to obtain a new minor information partitioning tree.

**52.** The method according to claim 51, wherein performing the binary tree partitioning on the last layer, to obtain the new minor information partitioning tree comprises:
in response to that the last layer is not a last non-full binary tree layer of the minor information partitioning tree, performing non-full binary tree partitioning on the last layer, to obtain the new minor information partitioning tree.

**53.** The method according to claim 51, wherein performing the binary tree partitioning on the last layer, to obtain the new minor information partitioning tree comprises:
in response to that the last layer is a last non-full binary tree layer of the minor information partitioning tree, performing full binary tree partitioning on the last layer, to obtain the new minor information partitioning tree.

54. The method according to claim 50, further comprising:

in response to that a last layer of a current minor information partitioning tree is a full binary tree layer, determining a number of right shifted bits of the minor information and a first preset threshold corresponding to a last non-full binary tree layer of the current minor information partitioning tree;
selecting second minor information from the binary represented minor information of the current node based on the number of right shifted bits of the minor information corresponding to the last non-full binary tree layer;
determining a second index based on the binary represented primary information of the current node and the second minor information; and
in response to that a number of times the second index occurs in the last layer is greater than or equal to a second preset threshold corresponding to the last non-full binary tree layer, performing full binary tree partitioning on the last layer, to obtain a new minor information partitioning tree.

55. The method according to claim51 or 54, further comprising:
subtracting one from the number of right shifted bits of the minor information corresponding to the current node, to obtain a new number of right shifted bits of the minor information.

56. The method according to claim 48, wherein obtaining the target context model based on the index of the target context model comprises:

quantizing the index of the target context model, to obtain a quantized model index; and
obtaining the target context model based on the quantized model index.

57. The method according to claim 56, wherein quantizing the index of the target context model, to obtain the quantized model index comprises:
right shifting the index of the target context model by n bits, to obtain the quantized model index, n being a positive integer.

58. The method according to claim 48, further comprising:
updating the index of the target context model in the context model index cache.

59. A point cloud decoding apparatus, comprising:

a determining unit, configured to determine N neighboring nodes of a current node, N being a positive integer; and
a decoding unit, configured to perform predictive decoding on planar structure information of the current node based on occupancy information of the N neighboring nodes.

60. A point cloud encoding apparatus, comprising:

a determining unit, configured to determine N neighboring nodes of a current node, N being a positive integer; and
an encoding unit, configured to perform predictive encoding on the planar structure information of the current node based on occupancy information of the N neighboring nodes.

61. An electronic device, comprising: a processor and a memory, wherein

the memory is configured to store a computer program; and
the processor is configured to call the computer program stored in the memory and run the computer program, to perform the method according to any one of claims 1 to 29, or 30 to 58.

62. A computer-readable storage medium, configured to store a computer program, the computer program enabling a computer to perform the method according to any one of claims 1 to 29, or 30 to 58.

FIG. 1A

FIG. 1B

FIG. 2

FIG. 3

FIG. 4A

EP 4 648 421 A1

FIG. 4B

Low plane in Z axis direction

(a)    (a0)    (a1)    (a2)    (a3)

High plane in Z axis direction

(b)    (b0)    (b1)    (b2)    (b3)

FIG. 5A

FIG. 5B

planeMode_z=true

planePosition_z=low

(a)

planeMode_z=false

(b)

FIG. 5C

FIG. 5D

Planar encoding is
not eligible

Planar encoding
is eligible

FIG. 5E

Vertex position

Parent node

Planar position

Current node

Distance

Node at the same depth

FIG. 5F

FIG. 5G

FIG. 5H

Top virtual plane

Bottom virtual plane

$\theta_L$

$\theta_{bottom}$  $\theta_{top}$

FIG. 5I

Standard mode 8 sub-cubes mode

Direct encoding

P

P

FIG. 6

(a) Vertex schematic diagram

FIG. 7A

(b) Triangle soup fitting schematic diagram

FIG. 7B

(c) Up-sampling schematic diagram

FIG. 7C

Determine N neighboring nodes of a current node — S101

Perform predictive decoding on planar structure information of the current node based on occupancy information of the N neighboring nodes — S102

FIG. 8

FIG. 9

FIG. 10

FIG. 11

Primary information

Minor information

FIG. 12

FIG. 13

Current minor information partitioning tree

New minor information partitioning tree

FIG. 14

Current minor information partitioning tree

New minor information partitioning tree

FIG. 15

Current minor information partitioning tree

New minor information partitioning tree

FIG. 16

Determine N neighboring nodes of a current node ~ S201

Perform predictive encoding on planar structure information of the current node based on occupancy information of the N neighboring nodes ~ S202

FIG. 17

Point cloud decoding apparatus 10

Determining unit 11

Decoding unit 12

FIG. 18

Point cloud encoding apparatus 20

Determining unit 21

Encoding unit 22

FIG. 19

30

Electronic device

33 Transceiver

31 Memory

Computer program

34

32 Processor

FIG. 20

Point cloud encoding and decoding system 40

Point cloud encoder 41

Point cloud decoder 42

FIG. 21

## INTERNATIONAL SEARCH REPORT

| International application No. |
| --- |
| **PCT/CN2023/070940** |

| A. | CLASSIFICATION OF SUBJECT MATTER |
| --- | --- |

H04N19/597(2014.01)i

According to International Patent Classification (IPC) or to both national classification and IPC

| B. | FIELDS SEARCHED |
| --- | --- |

Minimum documentation searched (classification system followed by classification symbols)

IPC: H04N

Documentation searched other than minimum documentation to the extent that such documents are included in the fields searched

Electronic data base consulted during the international search (name of data base and, where practicable, search terms used)

CNABS, CNTXT, CNKI, VEN, USTXT, WOTXT, EPTXT: 点云, 编码, 解码, 几何, 节点, 领域节点, 邻居节点, 平面, 坐标, 位置, 高, 低, 预测, 占位, 上下文, point cloud, encode, decode, code, geometry, node, adjacent, neighbor, plane, predict, context, occupation, planar

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | WO 2022126326 A1 (GUANGDONG OPPO MOBILE TELECOMMUNICATIONS CORP., LTD.) 23 June 2022 (2022-06-23) description, paragraphs [0019]-[0029] and [0121]-[0172] | 1, 30, 59-62 |
| A | CN 113812164 A (BEIJING XIAOMI MOBILE SOFTWARE CO., LTD. et al.) 17 December 2021 (2021-12-17) entire document | 1-62 |
| A | CN 114600464 A (BEIJING XIAOMI MOBILE SOFTWARE CO., LTD. et al.) 07 June 2022 (2022-06-07) entire document | 1-62 |
| A | CN 112565795 A (XIDIAN UNIVERSITY) 26 March 2021 (2021-03-26) entire document | 1-62 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **22 September 2023** | **22 September 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/070940**

| Patent document cited in search report | | | Publication date (day/month/year) | Patent family member(s) | Publication date (day/month/year) |
|---|---|---|---|---|---|
| WO | 2022126326 | A1 | 23 June 2022 | None | |
| CN | 113812164 | A | 17 December 2021 | None | |
| CN | 114600464 | A | 07 June 2022 | None | |
| CN | 112565795 | A | 26 March 2021 | None | |

Form PCT/ISA/210 (patent family annex) (July 2022)